# EUROPEAN PATENT APPLICATION

(11) **EP 0 843 111 A1**
(43) Date of publication of application: **20.05.1998**
(21) Application number: 96308376.1
(22) Date of filing: 19.11.1996
(51) Int. Cl.: F16H 47/08, F16H 3/66

(54) **Continuously variable transmission with impeller and turbine**

(71) Applicant: Choi, Tae-Soo, Seocho-gu, Seoul (KR); Moon, Byung-I1, Sungbuk-gu, Seoul (KR); Yoo, Wan-Moo, Koyang-City, Kyungki-do (KR)
(72) Inventor: Choi, Tae-Soo, Seocho-gu, Seoul (KR); Moon, Byung-I1, Sungbuk-gu, Seoul (KR); Yoo, Wan-Moo, Koyang-City, Kyungki-do (KR)
(74) Representative: Style, Kelda Camilla Karen

(57) **Abstract**

The present invention relates to a continuously variable transmission constructed in such a way that it can speed-change the power inputted to the input shaft into a normal operation mode, power mode or low speed mode according to the need and transmit the power to the output shaft even though all the gears remain engaged, and in addition reverse operation can also be effectuated in a simple way.

The present invention, comprises two planet gear sets each having a sun gear (112,136), ring gear (132,154) and a carrier (114,142) supporting a planet gear (128,150); a fuel ratio mode clutch (162) and power mode clutch (156) which can be selectively connected to the output shaft (160); a low speed brake (170) provided on the power line connected between a turbine and the power mode clutch; and a reverse rotation system. Each constitutional element selected from the two planet gear sets is operatively connected to an impeller, turbine, power mode clutch and fuel ratio mode clutch respectively, and the power inputted through an input element (112) selected from the two planet gear sets is changed into the required mode and transmitted to the output shaft.

Reviewing the operational characteristics, the present invention is constructed to output the input rotational force through different power transmitting paths by utilizing the power mode clutch and the fuel ratio mode clutch, and to transmit to the impeller the decelerated rotation always smaller than the input rotation at the time of operation of the fuel ratio mode clutch or power mode clutch. Therefore, it is a characteristic of the present invention that it is constructed in such a way that the rotational force transmitted to the impeller is always larger than the input torque.

## Description

### BACKGROUND OF INVENTION

### Field of the Invention

The present invention relates to a continuously variable transmission, and more particularly, to a continuously variable transmission constructed in such a way that power input to an input shaft can be selectively transmitted to an output shaft according to the requirement of a normal operation mode, power mode and low speed mode without disengaging or changing gears when changing speed under the state in which all the gears are engaged, and that a reverse rotation driving can also be performed in a simple manner.

### Information Disclosure Statement

Generally, in a transmission, speed change is done by selecting one of a number of predetermined gear ratios and at the time of effecting a speed change, there is the nuisance of carefully disengaging and changing gears. Conventional automatic transmissions are of a belt type which have a very complicated structure, are expensive to manufacture and cannot be widely used since they have a limited range of capacity because of wear, noise and slippage.

To solve the above described problems, U.S. Patent Application No. 08/695,369 entitled : Continuously Variable Transmission was filed on August 9, 1996. However, the present invention has a different construction from that described in the preceding application. That is, in patent application No. 08/695,369, a method in which input is transmitted to an impeller through a clutch and a method in which rotational force increased greater than the input rotational force through a reduction sun gear is transmitted to the impeller are described, however, since the present invention outputs inputted rotational forces through different power transmission paths by utilizing a power mode clutch and a fuel ratio mode clutch, it can transmit output rotational force greater than the input rotational force, exert a large thrust force, provide excellent performance, and also run smoothly and quietly while obtaining optimum fuel consumption reduction.

In addition, the present invention is distinguished by the fact that when a planet gear set, provided at the side of an output shaft, is connected to a turbine and a reverse rotation brake is actuated, stepless reverse rotation can be achieved, so that there is no impact and smooth running can be obtained during reverse rotation.

The present invention is also distinguished by the fact that it can output at a low speed fixed ratio and at the same time obtain an engine brake effect in a low speed mode.

Therefore, an object of the present invention is to provide a continuously variable transmission which is not as complicated as the prior art, reduces manufacturing cost, provides an assured speed change operation, quickly responds to a change in load, provides a smooth and quiet running, larger thrust force and excellent performance.

Another object of the present invention is to provide a continuously variable transmission which can steplessly change speed and obtain an output at the time of reverse rotation driving by a reverse rotation system positioned between a speed change system and an output shaft.

To achieve these and other objects, the present invention is constructed in such a way that it can steplessly change the speed of an input rotational force from a lowest to a predetermined ratio and transmit it to an output shaft by having a speed change system which receives power generated by an engine, changes the speed and transmits it to the output shaft, and a speed change controlling system which can automatically control the ratio of rotation which corresponds to the load condition of the output shaft.

Summarizing the construction of the speed change system and the speed change controlling system, the main characteristics of the speed change system is that it utilizes a planet gear apparatus, and has an input shaft, output shaft, 2 planet gear sets (each including a sun gear, a carrier, and a ring gear), clutch and a brake. It is constructed to transmit rotation to the speed change controlling system by changing the power transmission path which transmits to the output shaft power inputted through an appropriate combinational connection between the constitutional elements of planet gear set and at the same time through the input element(s) selected from 2 planet gear sets and also by making different the rotations transmitted to the connecting shaft and the control shaft.

The speed change controlling system utilizes an improved torque converter which is improved over the torque converter of known automatic transmissions. Reviewing the construction of the speed change controlling system utilizing the terminologies related to the constitutional parts used in the conventional torque converter, for the convenience of explanation, the speed change controlling system comprises an impeller which is a driving body, a turbine which is a driven body, a stator for torque-increasing, an oil pump for supplying oil into the torque converter to 100% full and for supplying actuating oil for clutch and brake, a connecting shaft for connecting to the speed change system, a control shaft, a fixed shaft for fixing the stator, and a fixed housing.

A reverse rotation system has a planet gear set (sun gear, ring gear, carrier) and a brake, and is constructed to accomplish the reverse rotation with an appropriate combinational connection between each constitutional element of the gear set and the speed change system.

The clutch and brake applied to the system of the present invention can utilize multi-disk wet-type clutch and brake of the known automatic transmission, and the brake can utilize a band brake, however, the clutch and brake are not limited to them.

Operational methods for forward rotation condition of the stepless variable transmission constructed as described above can be largely classified into 3 methods.

First, a power mode (forward rotation I), a stepless speed change method enabling operation in a mountainous area or at the time of running up an inclined road-way or when a rapid starting is required;

Second, a normal operation mode (forward rotation II), a stepless speed change method which can obtain smooth and quiet driving and optimum fuel conservation; and

Third, a low speed mode (forward rotation III), a stepless speed change method which enables operation up a steep slope or to provide an engine brake effect.

Operations in reverse rotation state can be accomplished by various reverse rotation systems.

As described, the characteristics and the advantages of the present invention are that the continuously variable transmission according to the present invention facilitates driving in accordance with the required and/or desired power performance.

### BRIEF DESCRIPTION OF THE DRAWINGS

For a fuller understanding of the nature and objects of the invention, reference should be had to the following detailed description taken in conjunction with the accompanying drawings in which:
Fig. 1 is a sectional assembled view of a continuously variable transmission of the present invention that is capable of operating in the reverse rotation I state;
Fig. 2 is a schematic drawing which briefly shows Fig. 1;
Fig. 3 is a schematic drawing of the continuously variable transmission of the present invention that is capable of operating in the reverse rotation II state;
Fig. 4 is a schematic drawing of the continuously variable transmission of the present invention that is capable of operating in the reverse rotation III state;
Fig. 5 is a schematic drawing of the continuously variable transmission of the present invention that is capable of operating in the reverse rotation IV state;
Fig. 6 is a schematic drawing of the continuously variable transmission of the present invention that is capable of operating in the reverse rotation V state;
Fig. 7 is a sectional view showing a state in which the continuously variable transmission of the present invention idles in neutral state;
Fig. 8 is an operational view which briefly shows the state of Fig. 7;
Fig. 9 is a sectional view showing forward rotation I state capable of rapid starting by operating a power mode clutch connected to an output shaft in the continuously variable transmission of the present invention;
Fig. 10 is an operational view which briefly shows the condition of Fig. 9;
Fig. 11 is a sectional view showing forward rotation II state capable of running in an optimum fuel ratio mode by operating the power mode clutch and a fuel ratio mode clutch connected to the output shaft in the continuously variable transmission of the present invention;
Fig. 12 is an operational view which briefly shows the state of Fig. 11;
Fig. 13 is a sectional view showing forward rotation III state capable of low speed operation by operating a low speed brake and the fuel ratio mode clutch in the continuously variable transmission of the present invention;
Fig. 14 is an operational view which briefly shows the condition of Fig. 13;
Fig. 15 is a sectional view showing reverse rotation I state in the continuously variable transmission of the present invention;
Fig. 16 is an operational view which briefly shows the state of Fig. 15;
Fig. 17 is an operational view showing reverse rotation II state in the continuously variable transmission of the present invention;
Fig. 18 is an operational view showing reverse rotation III state in the continuously variable transmission of the present invention;
Fig. 19 is an operational view showing reverse rotation IV state in the continuously variable transmission of the present invention;
Fig. 20 is an operational view showing reverse rotation V state in the continuously variable transmission of the present invention;
Fig. 21 to Fig. 94 are schematic drawings of a 2nd embodiment to a 75th embodiment of the continuously variable transmission of the present invention;
Fig. 95 to Fig. 108 illustrate a 76th embodiment of the continuously variable transmission of the present invention;

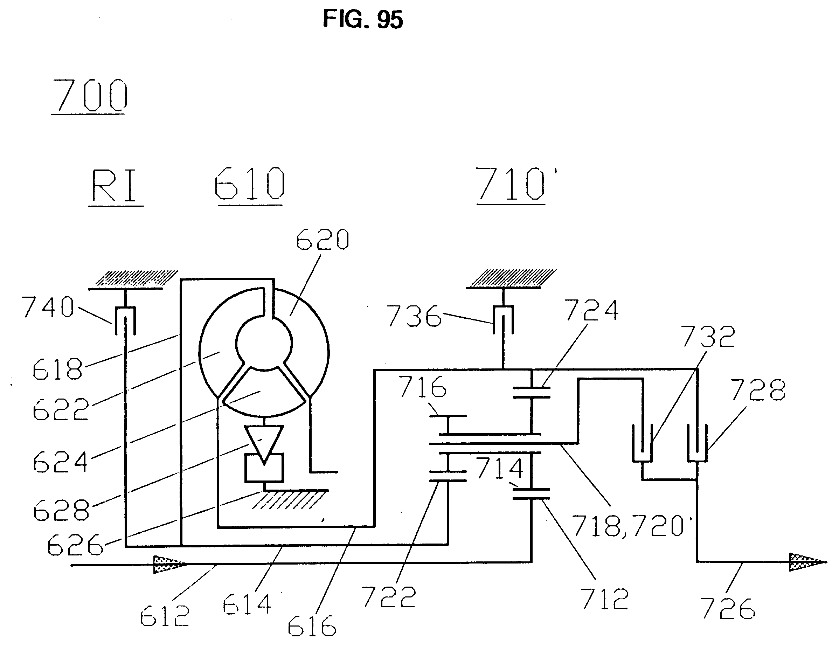

Fig. 95 is a schematic view of the a continuously variable transmission of the present invention that is capable of operating in the reverse rotation I state;

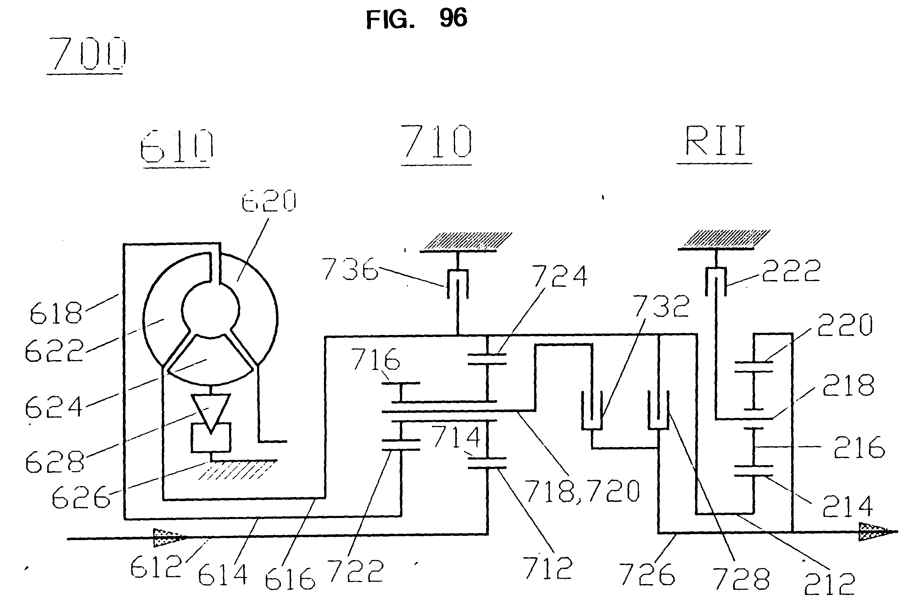

Fig. 96 is a schematic view of the continuously variable transmission of the present invention that is capable of operating in the reverse rotation II state;

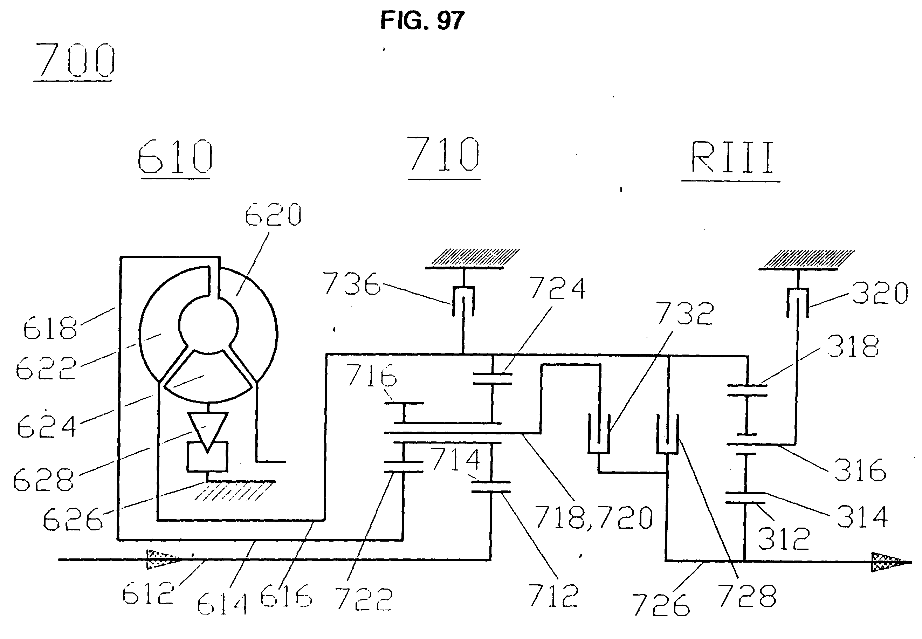

Fig. 97 is a schematic view of the continuously variable transmission of the present invention that is capable of operating in the reverse rotation III state;

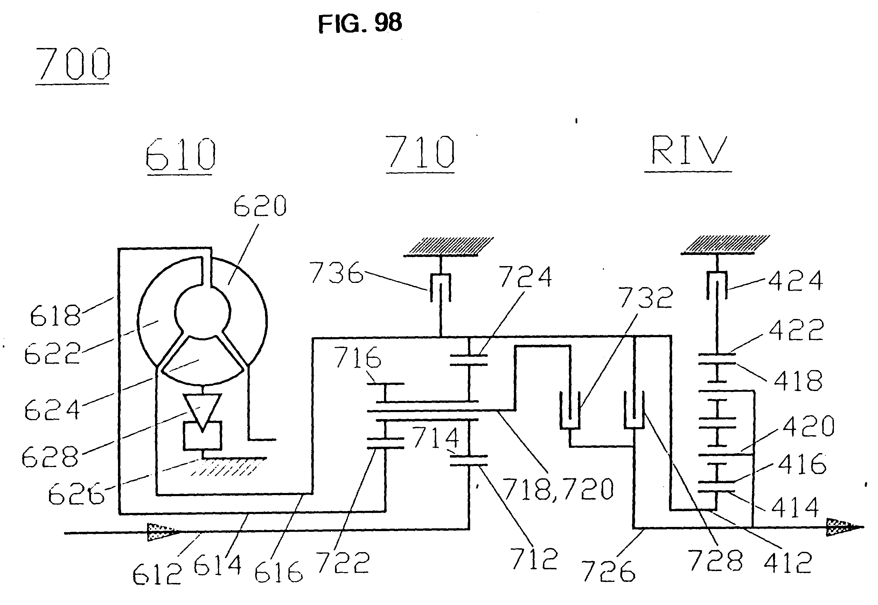

Fig. 98 is a schematic view of the continuously variable transmission of the present invention that is capable of operating in the reverse rotation IV state;

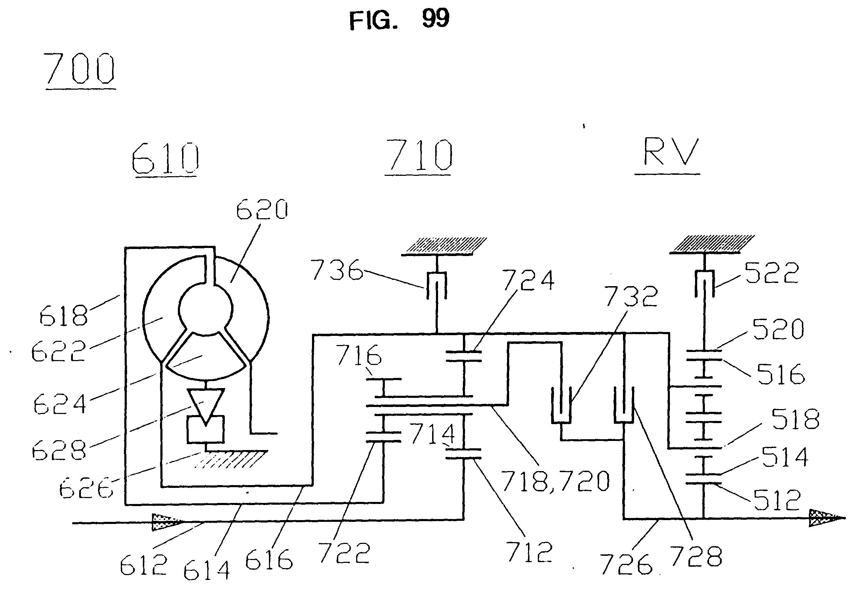

Fig. 99 is a schematic view of the continuously variable transmission of the present invention that is capable of operating in the reverse rotation V state;

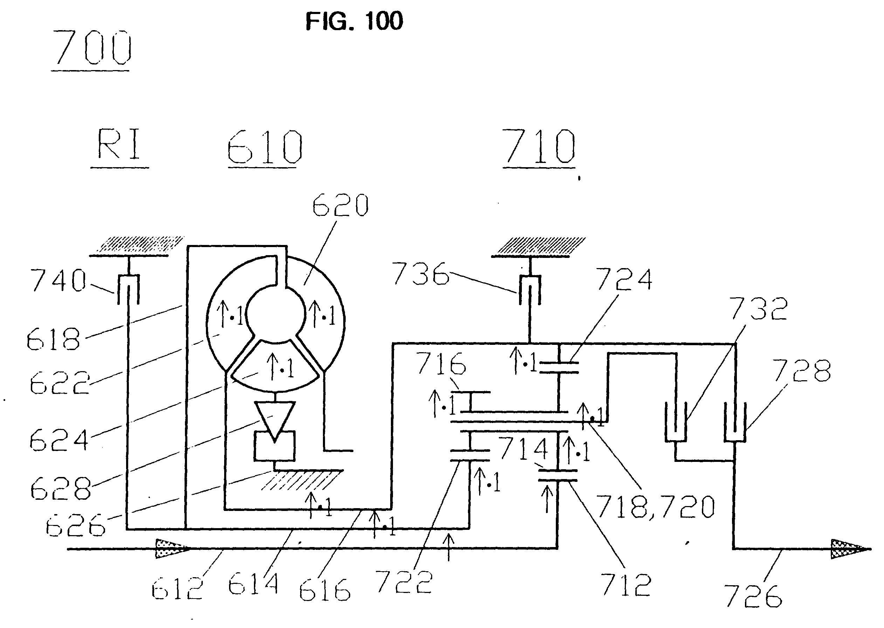

Fig. 100 is an operational view showing a state in which the variable transmission of the present invention idles in neutral state;

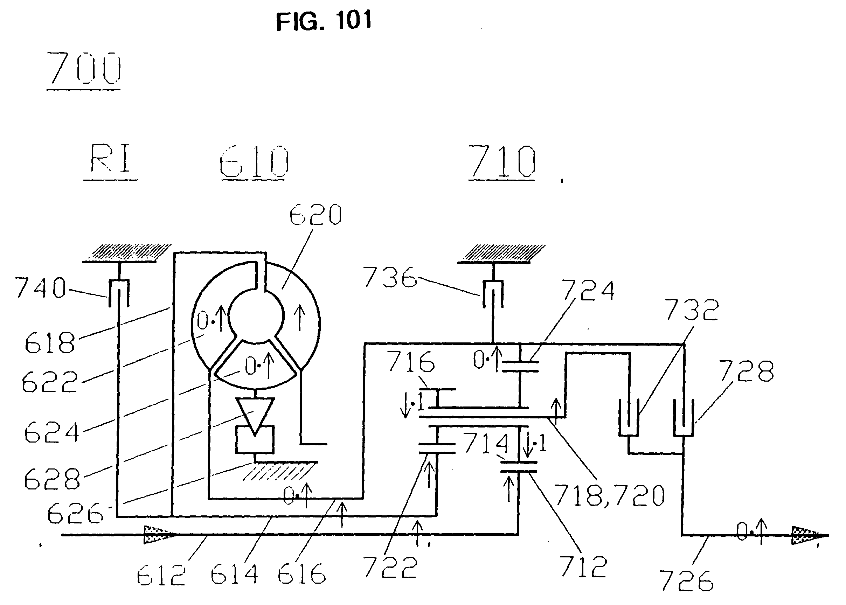

Fig. 101 is an operational view showing forward rotation I state capable of rapid starting by operating a power mode clutch connected to an output shaft in the continuously variable transmission of the present invention;

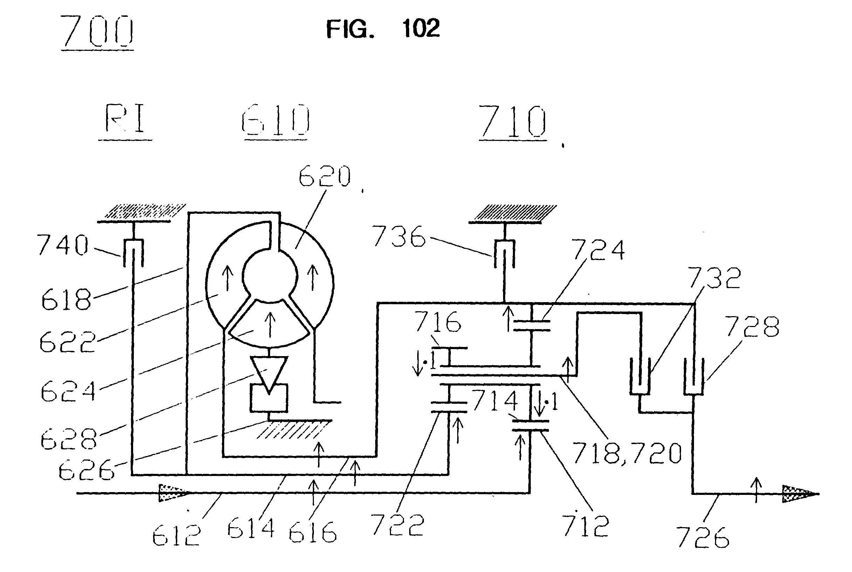

Fig. 102 is an operational view showing forward rotation II state capable of running in an optimum fuel ratio mode by operating the power mode clutch and a fuel ratio mode clutch connected to the output shaft in the continuously variable transmission of the present invention;

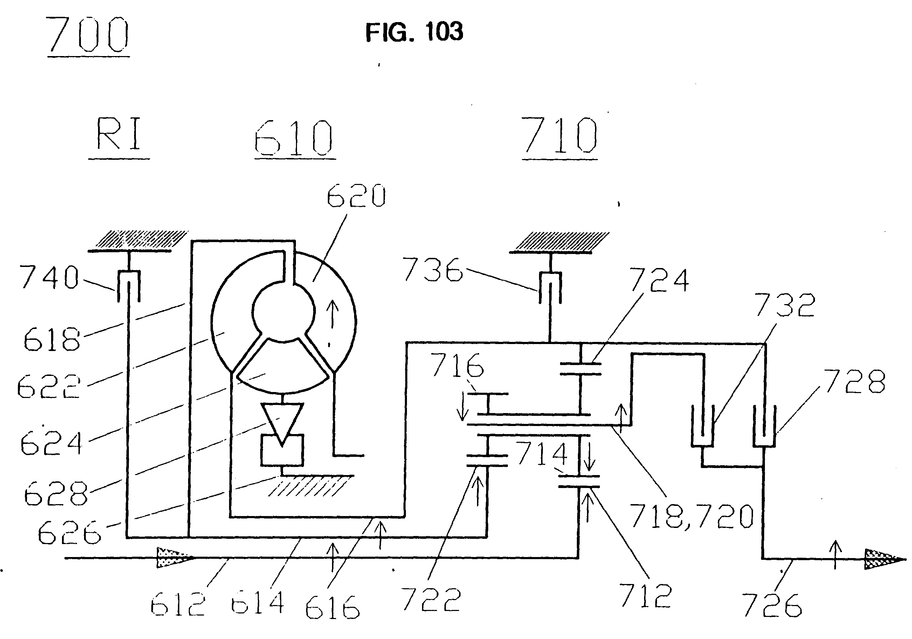

Fig. 103 is an operational view showing forward rotation III state capable of low speed operation by operating a low speed brake and the fuel ratio mode clutch in the continuously variable transmission of the present invention;

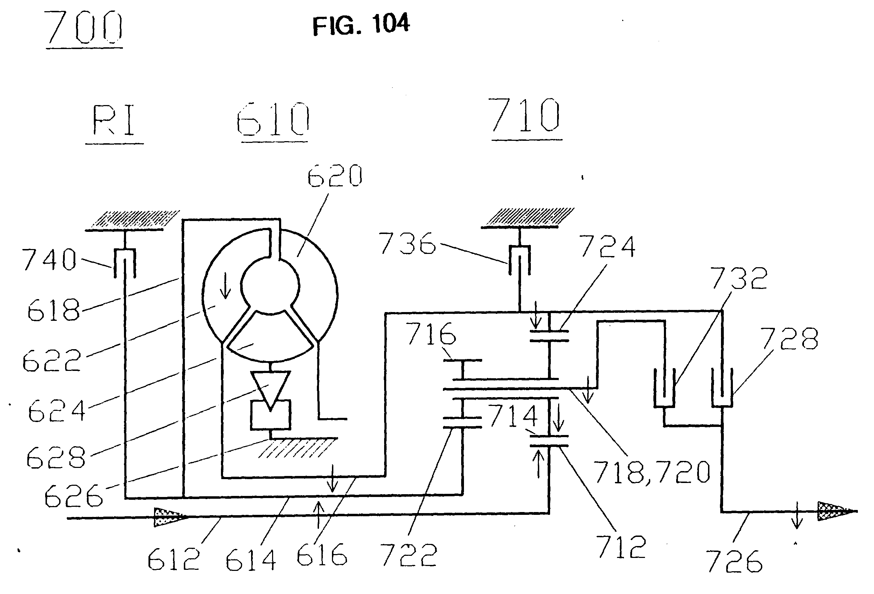

Fig. 104 is an operational view showing reverse rotation I state in the continuously variable transmission of the present invention;

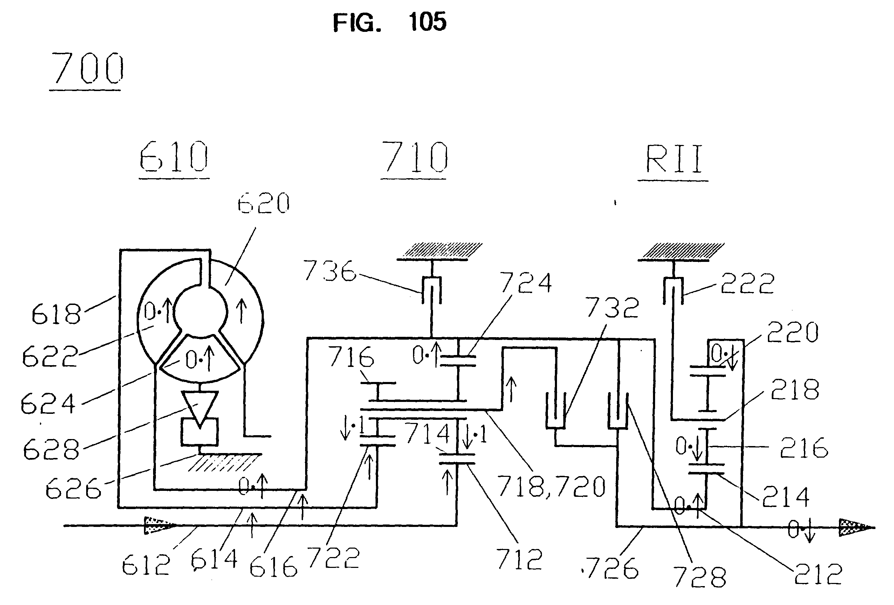

Fig. 105 is an operational view showing reverse rotation II state in the continuously variable transmission of the present invention;

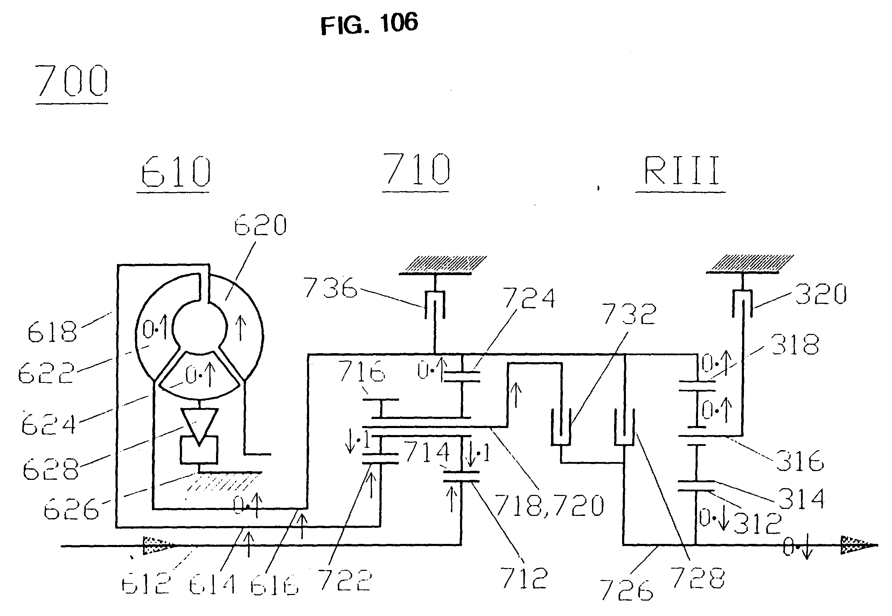

Fig. 106 is an operational view showing reverse rotation III state in the continuously variable transmission of the present invention;

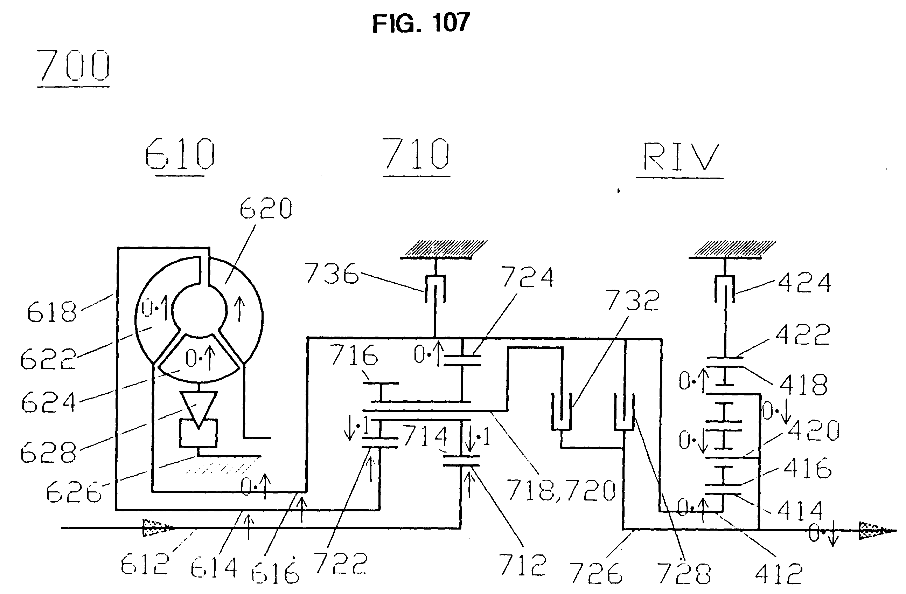

Fig. 107 is an operational view showing reverse rotation IV state in the continuously variable transmission of the present invention;

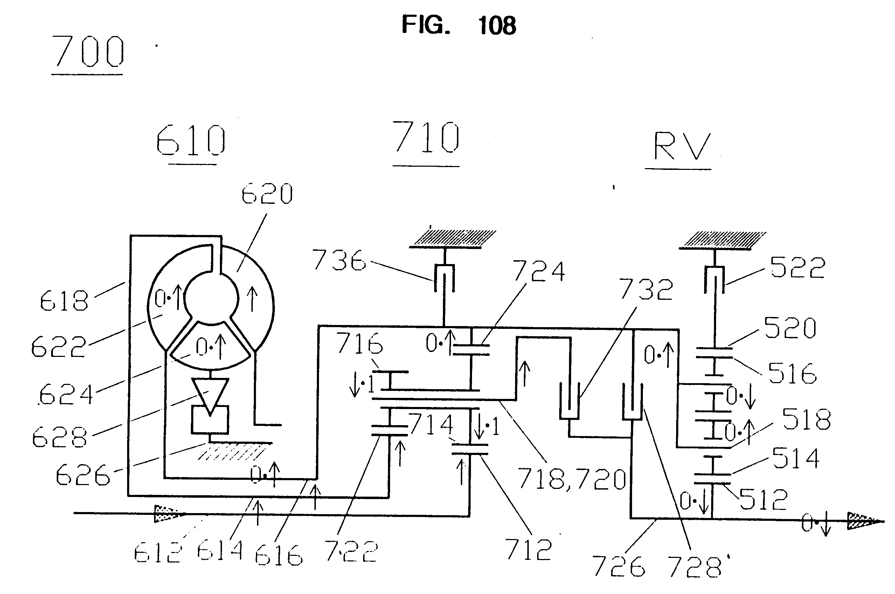

Fig. 108 is an operational view showing reverse rotation V state in the continuously variable transmission of the present invention;

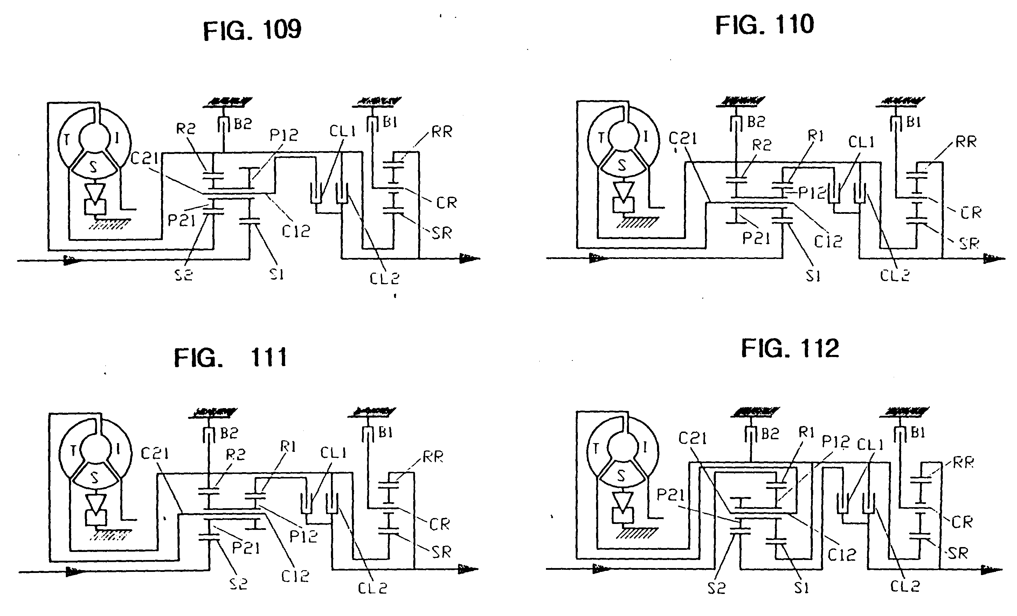

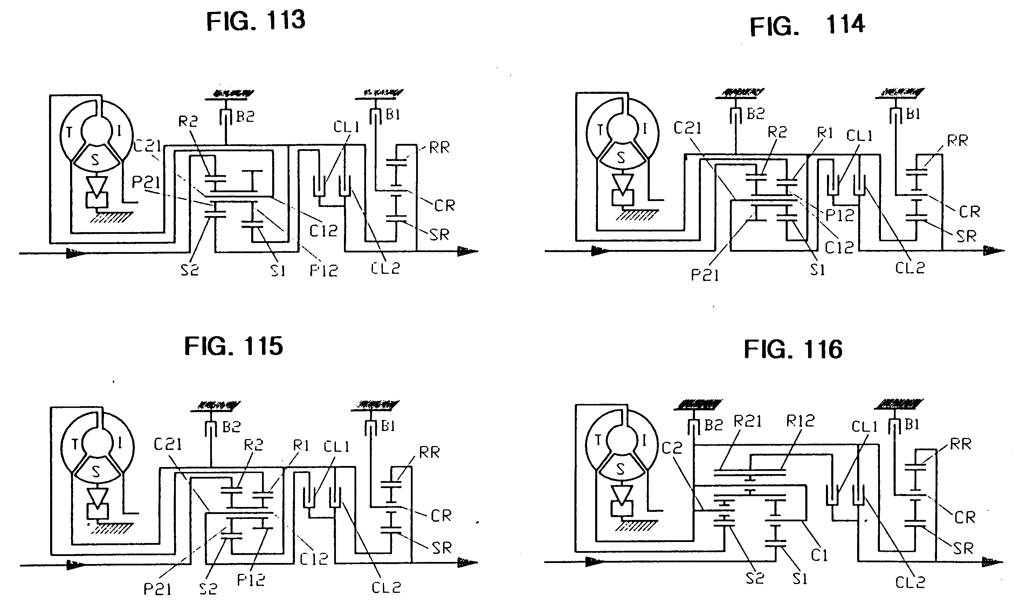

Fig. 109 to Fig. 127A are schematic drawings of a 77th embodiment to a 95th embodiment of the continuously variable transmission of the present invention;

Similar reference characters refer to similar parts through out the several views of the drawings.

### DETAILED DESCRIPTION OF THE INVENTION

A description of the continuously variable transmission comprising the speed change controlling system and the speed change system of various embodiments to which the speed change controlling system is connected, follows. That is, the speed change system can have various constructions, and stepless speed change can be effectuated by approprietly connecting the speed change controlling system to the speed change system of various embodiments.

First of all, the first embodiment 100 of the present invention composed of a speed change controlling system 10, a speed change system 110 and a reverse rotation system RI ^{∼} RV connected thereto is described in detail with reference to the accompanying drawings.

### Speed Change Controlling System 10

The speed change controlling system 10 utilizes a conventional torque converter of an automatic transmission which is a well known apparatus. In the conventional automatic transmission, the power generated by the engine is transmitted as a driving force to the input shaft of the transmission via the torque converter, while in the present invention, the power generated by the engine is either directly transmitted to the input shaft and the rotational force of the input shaft transmitts to the impeller a large rotational force due to a reduced rotation in speed through the operation of the planet gear set and the fuel ratio mode clutch on the output shaft, or transmitted to the impeller through the connecting shaft a greater rotational force due to the rotation being further reduced in speed through the operation of the power mode clutch on the output shaft.

While the torque converter of the conventional automatic transmission has a power transmission function of receiving power generated from the engine and directly transmitting the power to the input shaft of the automatic transmission, the speed change controlling system of the present invention has two roles, one is to control the speed ratio to fit the driving resistance, the other is to transmit the power passed through the speed change controlling system to the output shaft.

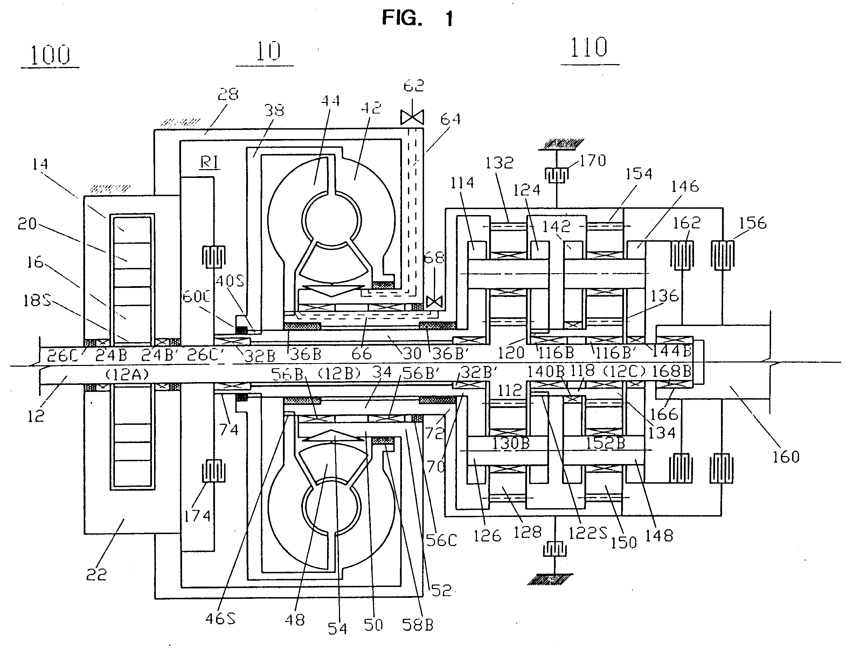

The construction of the speed change controlling system 10 is described below in detail. As shown in Fig. 1, an oil pump 14 is installed on a first section 12A of an input shaft 12 composed of three sections 12A, 12B, 12C. A driving gear 16 of the oil pump 14 is connected and fixed to the input shaft 12 by a spline 18S. The driving gear 16 and a driven gear 20 of the oil pump are installed in an oil pump housing 22. Bearings 24B, 24B' are inserted between the oil pump housing 22 and the input shaft 12, and oil seals 26C, 26C' are inserted beside the bearings 24B, 24B' to prevent the leakage of oil in the pump. The oil pump housing 22 is sealingly assembled to a fixed housing 28.

A hollow connecting shaft 30 is coaxially installed on a second section 12B of the input shaft 12, and bearings 32B, 32B' are inserted between the input shaft 12 and the connecting shaft 30 so that they can rotate free. A hollow control shaft 34 is coaxially installed on the connecting shaft 30, and bushes 36B, 36B' are inserted between the connecting shaft 30 and the control shaft 34 so that they can rotate free, and that oil in the speed change controlling system is prevented from leaking into the speed change system. An improved type torque converter is coaxially installed on the connecting shaft and control shaft. The impeller housing 38 of the torque converter and the connecting shaft 30 are integrated through a spline 40S.

An impeller 42 is integrally formed with the impeller housing 38 and installed on a fixed shaft 50 which will be described later. A turbine 44 facing the impeller 42 is integrated with the control shaft 34 by a spline 46S, and a stator 48 is placed between the impeller 42 and the turbine 44. A hollow fixed shaft 50 is coaxially installed inside of the stator, and one end 52 of the fixed shaft 50 is fixed to the housing 28. A one-way clutch 54 is inserted between the stator 48 and the fixed shaft 50 to prevent a reverse rotation of the stator 48. Bearings 56B, 56B' and oil seal 56C are provided between the fixed shaft 50 and the control shaft 34. A bush 58B is inserted between the impeller 42 and the fixed shaft 50 to make the impeller 42 freely rotate around the fixed shaft 50 and to prevent the leakage of oil in the torque converter. An oil seal 60C is installed beside the spline 40S between the impeller housing 38 and the connecting shaft 30 to prevent the leakage of oil in the torque converter.

A portion of oil discharged from the oil pump 14 flows into the torque converter through an oil inlet 62 and suction passage 64 to fill the inside of the torque converter with oil to 100%, and the oil in the torque converter is cooled through a cooler placed outside of the transmission and flows into the oil pump through a discharge passage 66 and oil outlet 68. In addition, a portion of the oil discharged from the oil pump 14 is supplied as an actuating oil of the clutch and brake of the speed change system.

The oil discharge passage 66 and outlet 68 can also be formed on the fixed shaft 50, and the position of the oil inlet 62 and suction passage 64 can be varied in various way, therefore, the position and construction thereof is not limited thereto.

### Speed Change System 110

In the speed change system 110 of the first embodiment of the present invention, as shown in Fig. 1, the power of the engine is inputted to the input shaft 12, and an input sun gear 112 is integrally formed between the second section 12B and the third section 12C of the input shaft 12. The hollow connecting shaft 30 is coaxially supported on the second section 12B of the input shaft 12 by bearings 32B, 32B' so as to freely rotate on the input shaft 12. A control carrier 114 is integrally formed with the connecting shaft 30 at one end 70 of the connecting shaft 30. A control carrier 124 is assembled by means of a spline 122S to one end 120 of a control sun gear shaft 118 coaxially formed through bearings 116B, 116B' on the third section 12C of the input shaft 12 so that the control sun gear shaft 118 can be freely rotated. At least one locking pin 126 is inserted and fixed between two control carriers 114, 124 to make two control carriers 114, 124 rotate together.

A second planet gear 128 is installed on the locking pin 126, and a bearing 130B is inserted between the second planet gear and the locking pin 126 so that they can rotate freely. The input sun gear 112 is meshed with the inside of the second planet gear 128, and a forward rotation ring gear 132 is meshed with the outside of the second planet gear 128. The forward rotation ring gear 132 is integrated to one end 72 of the control shaft 34 so as to rotate together with the control shaft 34. A control sun gear 136 is integrally formed with the other end 134 of the control sun gear shaft 118 coaxially formed on the third section 12C of the input shaft, an output carrier 142 is placed on the control sun gear shaft 118 between the control carrier 124 and the control sun gear 136 through a bearing 140B so as to rotate freely, an output carrier 146 is installed on the third section 12C of the input shaft through a bearing 144B so as to rotate freely, and two carriers 142, 146 are combined through at least one locking pin 148 so as rotate together.

A first planet gear 150 is installed on the locking pin 148 through a bearing 152B so as to freely rotate, and the inside of the first planet gear is meshed with a control sun gear 136 and the outside thereof is meshed with a control ring gear 154. The control ring gear 154 is integrally connected with the forward rotation ring gear 132, and a power mode clutch 156 is installed between the forward rotation ring gear 132 and an output shaft 160 so that the forward rotation ring gear 132 and the output shaft 160 can be connected when the power mode clutch 156 is actuated.

In addition, a fuel ratio mode clutch 162 is installed between the output carrier 146 and the output shaft 160 so that the output carrier 146 and the output shaft 160 are connected when the fuel ratio mode clutch 162 is actuated. The output shaft 160 is coaxially installed on the third section 12C of the input shaft and has an axial bore 166, and a bearing 168B is inserted between the input shaft 12 and the axial bore 166 so that they can freely rotate. Also, a low speed brake 170 is installed on the outside of the forward rotation ring gear 132.

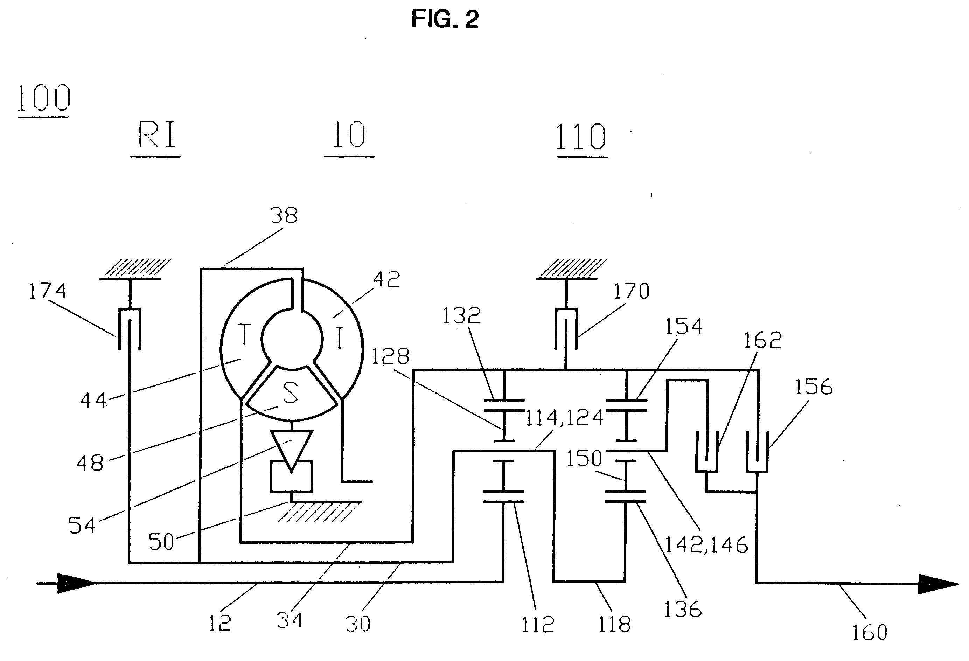

Although the above described construction is shown in Fig. 1 in detail, it is schematically shown in Fig. 2.

### Reverse Rotation System (RI ^{∼} RV)

Next, the reverse rotation system in the first embodiment of the present invention is described below.

In the present invention, there are five different reverse rotation systems.

### 1. Reverse Rotation System RI

As shown in Fig. 1 and Fig. 2, a reverse rotation brake 174 is installed on the other end 74 of the connecting shaft 30 integrally formed with the control carrier 114. That is, the reverse rotation brake 174 is operatively connected to the impeller 42.

Here, a detailed description about installation method and constitutional relation, etc. of the power mode clutch 156, fuel ratio mode clutch 162, low speed brake 170 and reverse rotation brake 174 is omitted, and it should be noted that the installation and construction do not limit the scope of the present invention.

### 2. Reverse Rotation System RII

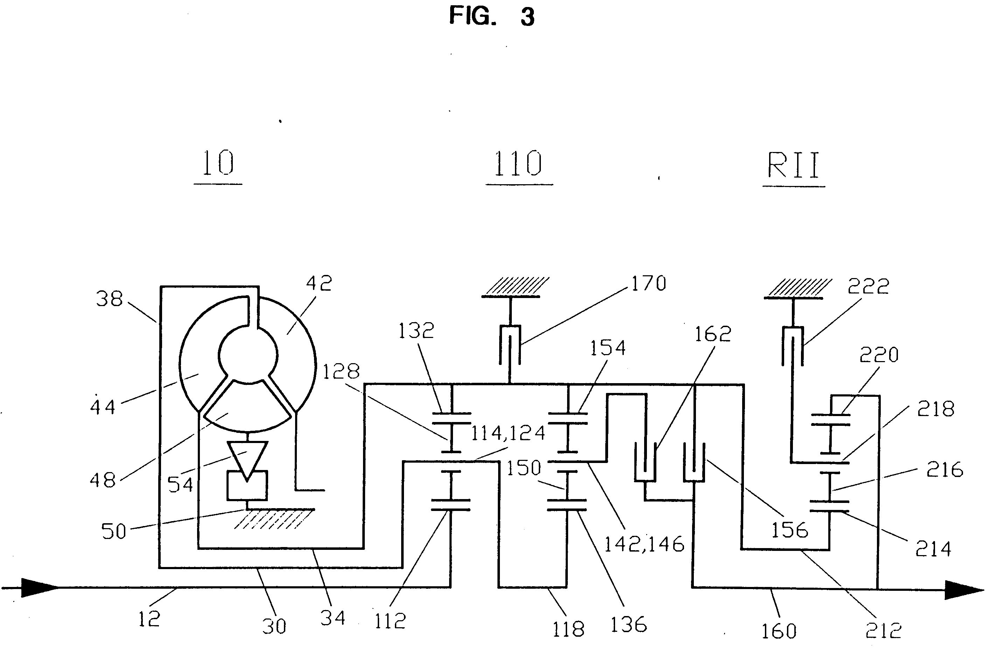

As shown in Fig. 3, a reverse rotation sun gear shaft 212 is coaxially installed on the output shaft 160, and a reverse rotation sun gear 214 is integrally formed with the reverse rotation sun gear shaft 212. A reverse rotation planet gear 216 is meshed with the outside of the reverse rotation sun gear 214 and is installed in a reverse rotation carrier 218 so as to freely rotate. A reverse rotation ring gear 220 is meshed with the outside of the reverse rotation planet gear 216 and is integrally formed with the output shaft 160. The reverse rotation sun gear shaft 212 is connected to the power line connected to the turbine 44, the forward rotation ring gear 132 and the control ring gear 154. A reverse rotation brake 222 is installed at the outside of the reverse rotation carrier 218.

A gear set constituting the present reverse rotation system RII is a single pinion type planet gear set.

### 3. Reverse Rotation System RIII

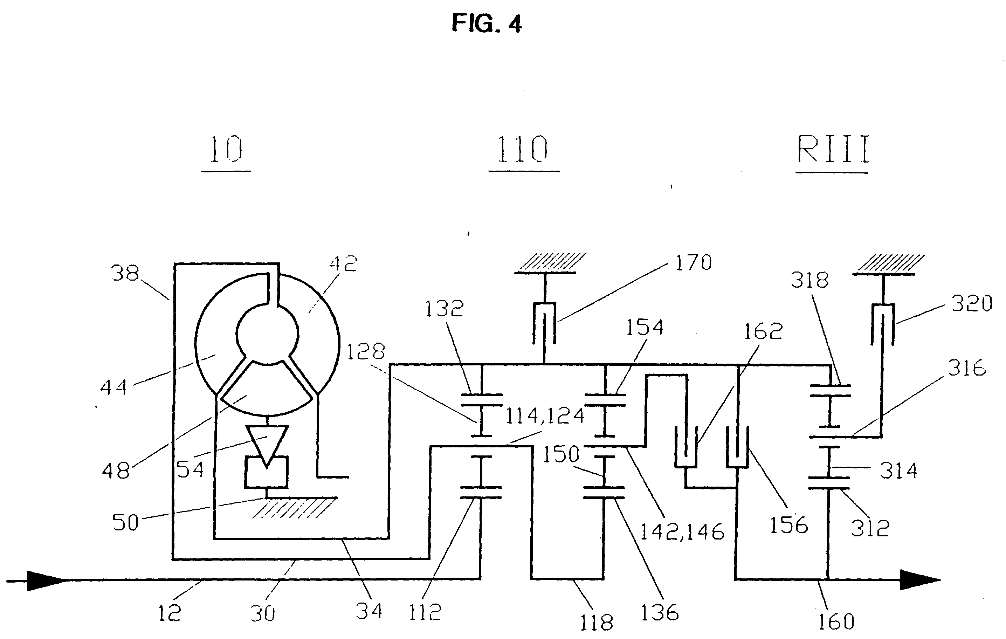

As shown in Fig. 4, a reverse rotation sun gear 312 is integrally formed with the output shaft 160. A reverse rotation planet gear 314 is meshed with the outside of the reverse rotation sun gear 312 and is installed in a reverse rotation carrier 316 so as to rotate freely. A reverse rotation ring gear 318 is meshed with the outside of the reverse rotation planet gear 314 and is connected to the power line connected to the turbine 44 and the forward rotation ring gear 132 and control ring gear 154 of the speed change system 110. A reverse rotation brake 320 is installed at the outside of the reverse rotation carrier 316.

A gear set constituting the present reverse rotation system RIII is a single pinion type planet gear set.

### 4. Reverse Rotation System RIV

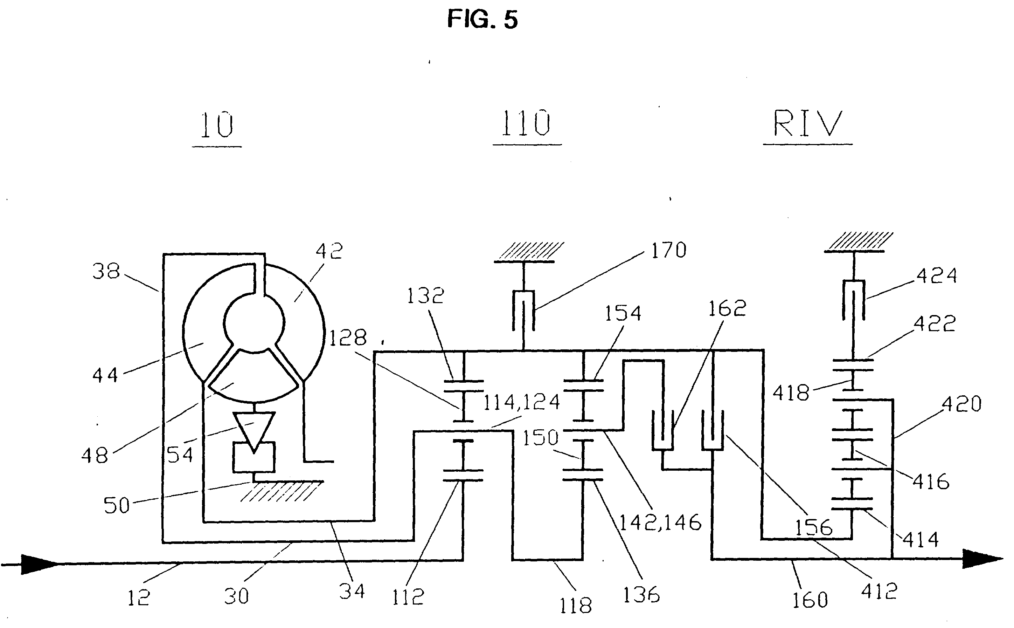

As shown in Fig. 5, a reverse rotation sun gear shaft 412 is coaxially installed on the output shaft 160, and a reverse rotation sun gear 414 is integrally formed with the reverse rotation sun gear shaft 412. A reverse rotation planet gear 416 is meshed with the outside of the reverse rotation sun gear 414, and another reverse rotation planet gear 418 is meshed in adjacent to the reverse rotation planet gear 416. These two reverse rotation planet gears 416, 418 are installed in a reverse rotation carrier 420 so as to freely rotate. The reverse rotation carrier 420 is integrally formed with the output shaft 160. A reverse rotation ring gear 422 is meshed with the outside of the reverse rotation planet gear 418, and a reverse rotation brake 424 is installed at the outside of the reverse rotation ring gear 422. In addition, the reverse rotation sun gear shaft 412 is connected to the power line connected to the turbine 44 and the forward rotation ring gear 132 and control ring gear 154 of the speed change system 110.

A gear set constituting the present reverse rotation system RIV is a double pinion type planet gear set.

### 5. Reverse Rotation System RV

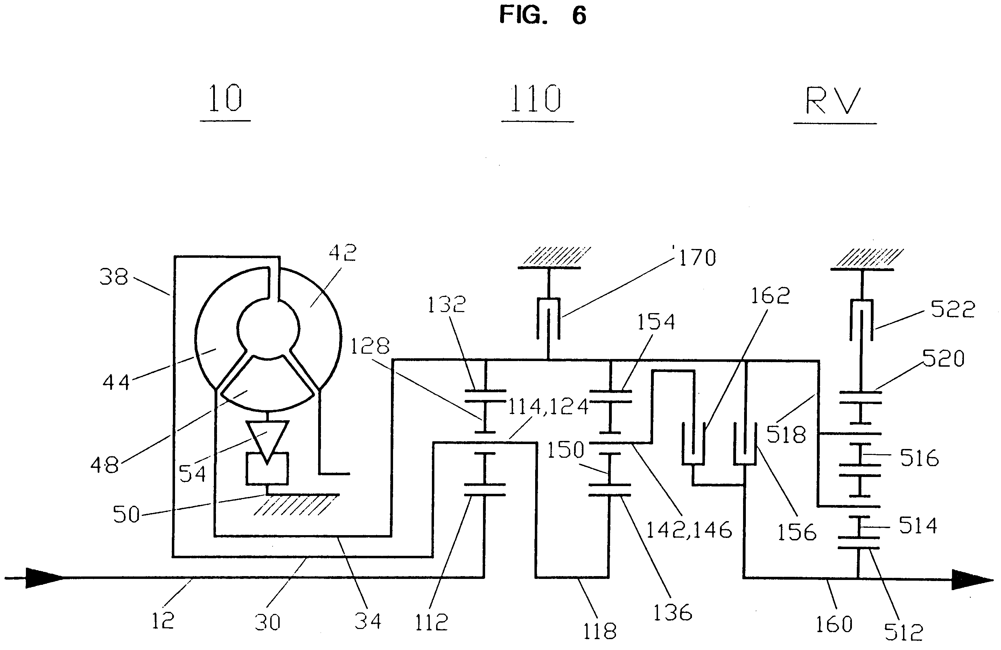

As shown in Fig. 6, a reverse rotation sun gear 512 is integrally formed with the output shaft 160. A reverse rotation planet gear 514 is meshed with the outside of the reverse rotation sun gear 512, and another reverse rotation planet gear 516 is meshed adjacent to the reverse rotation planet gear 514. These two reverse rotation planet gears 514, 516 are installed in a reverse rotation carrier 518 so as to freely rotate, and the reverse rotation carriers 518 is connected to the power line connected to the turbine 44 and the forward rotation ring gear 132 and control ring gear 154 of the speed change system 110. A reverse rotation ring gear 520 is meshed with the outside of the reverse rotation planet gear 516, and a reverse rotation brake 522 is installed at the outside of the reverse rotation ring gear 520.

A gear set constituting the present reverse rotation system RV is a double pinion type planet gear set.

An operating method for each forward rotation state of the continuously variable transmission of the present invention is described below.

### First, Power Mode

This is the case when the power mode clutch 156 connected to the output shaft 160 is actuated. The rotational force inputted through the input sun gear 112 in the condition in which the control ring gear 154 and forward rotation ring gear 132 are stopped by the load applied to the output shaft 160 due to the actuation of the power mode clutch 156 is transmitted to the second planet gear 128 to decelerate the control carriers 114, 124. This decelerated rotation is transmitted to the impeller 42 through the connecting shaft 30 connected to the control carriers 114, 124. A difference in rotation occurs due to the rotational force applied to the impeller 42 since the turbine 44 is in a stationary condition, and the increase in the rotational force, which is a function of the conventional torque converter, is effectuated by the difference in the rotation, so that the rotational force is applied to the turbine.

When the output shaft 160 is rotated, the load is reduced, and the resistance of the impeller 42 and the turbine 44 is decreased to obtain an equilibrium condition, the rotational ratio of the impeller 42 and the turbine 44 will be 1:1, however, since 100% efficiency can not be obtained due to oil slippage, a lock-up clutch is additionally installed in the conventional torque converter. However, in the present invention, the lock-up function is performed by a concurrent actuation of the power mode clutch 156 and fuel ratio mode clutch 162 of simple construction (the lock-up function means integrally connecting the impeller and turbine).

### Second, Normal Operation Mode

This is the case when the power mode clutch 156 and fuel ratio mode clutch 162 connected to the output shaft 160 are concurrently used. If only the fuel ratio mode clutch 162 is used, the rotation of the turbine 44 opposite to that of the impeller 42 is initially increased, so that constant value can not be obtained in the characteristics of the torque converter and the efficiency is not good, therefore, the power mode clutch 156 is used at the initial starting and when the rotational ratio of the impeller 42 and the turbine 44 reaches a constant ratio, the power mode clutch 156 is released and the fuel ratio mode clutch 162 is actuated.

In the condition in which the forward rotation ring gear 132 and the control ring gear 154 are stopped due to the actuation of the power mode clutch 156 and also the control shaft 34 and the turbine 44 are stopped, the rotational force inputted through the input sun gear 112 decelerates the control carriers 114, 124 through the second planet gear 128, and the decelerated rotation is transmitted to the impeller 42 through the connecting shaft 30. A difference in rotation occurs due to the rotational force applied to the impeller 42 since the turbine 44 is in a stationary condition, and the increase in the rotational force, which is a function of the conventional torque converter, is effectuated by the difference in the rotation so that the rotational force is applied to the turbine. If the rotational ratio of the impeller 42 and the turbine 44 is decreased upon rotation of the turbine 44 and reaches a constant ratio, the power mode clutch 156 is released and the fuel ratio mode clutch 162 is actuated.

When the difference in rotation occurs again between the impeller 42 and the turbine 44 by the actuation of the fuel ratio mode clutch 162, and the load is decreased upon rotation of the output shaft 160, thus the resistance of the impeller 42 and the turbine 44 is decreased to obtain the equilibrium condition, the rotational ratio of the impeller 42 and the turbine becomes 1:1. The lock-up function is as described in the power mode.

### Third, Low Speed Mode

This is the case when the low speed brake 170 installed outside of the forward rotation ring gear 132 and the control ring gear 154 and the fuel ratio mode clutch 162 are concurrently actuated. Since the forward rotation ring gear 132 is stopped by the low speed brake 170, the rotational force transmitted to the second planet gear 128 through the input sun gear 112 decelerates the control carriers 114, 124, and the decelerated rotation is transmitted to the control sun gear 136 through the control sun gear shaft 118. Since the control ring gear 154 integral with the forward rotation ring gear 132 is stopped, the rotational force transmitted to the control sun gear 136 is transmitted to the first planet gear 150 so as to decelerate the output carriers 142, 146 and drives the output shaft 160 at a constant deceleration ratio through the fuel ratio clutch 162 installed between the output carriers 142, 146 and the output shaft 160.

The operation methods and the power transmission process according thereto for each speed change state (neutral, forward and reverse rotation) of the continuously variable transmission of the present invention constructed as described above is described below.

Prior to the explanation, it should be noted that although the continuously variable transmission of the present invention can be used in any mechanism, which speed changes and outputs the driving force, such as motor vehicles and industrial machines, the motor vehicles will be explained as an example herein.

For a purpose of defining terminologies, a rotation of each planet gear means a rotation about its own axis (locking pin, here), and a revolution means the case where the carrier rotates, in which the case normally the planet gear performs a combined rotation and translation.

In addition, for the convenience of explanation, the direction of counterclockwise rotation when viewed from the left side of the drawings is taken as the direction of the input shaft, the direction same as that of the input shaft is defined as direction ↑ (or direction A) in each drawing, similarly the direction opposite to that of the input shaft is defined as direction ↓ (or direction B), the rotation after the stop (acceleration state) is denoted as 0 · ↑ (or 0 · ↓ ), the stop after the rotation (deceleration state) is denoted as ↑ · 0 (or ↓ · 0), and the state in which the planet gear does not rotate about its own axis after rotation and all the rotational bodies rotate as an integral body at the same revolutions as the input revolutions is denoted as ↑ · 1 (or ↓ · 1).

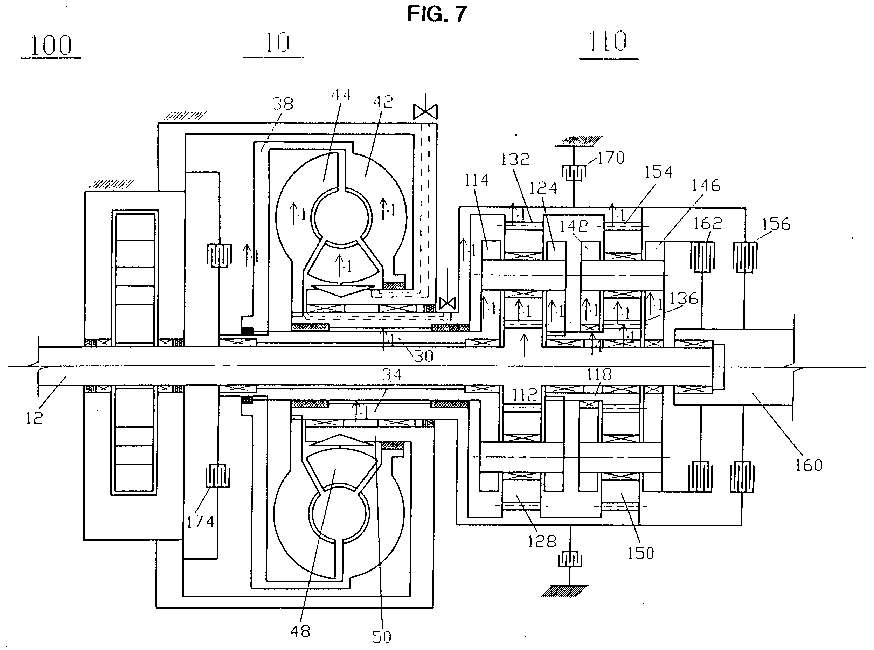

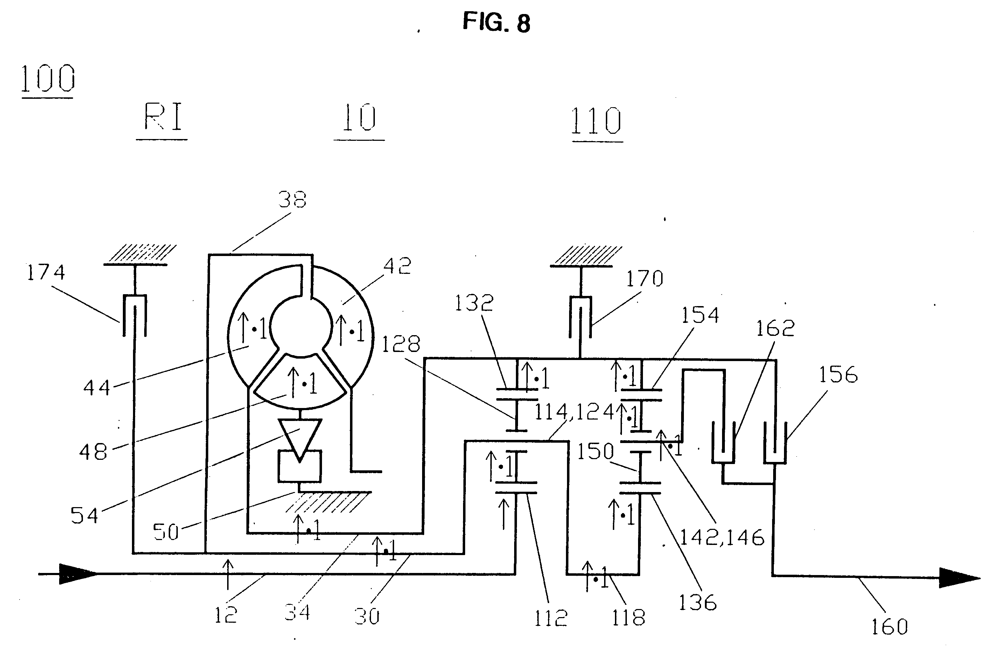

### I. Neutral State (Fig. 7 and 8) : Output shaft 160 stopped

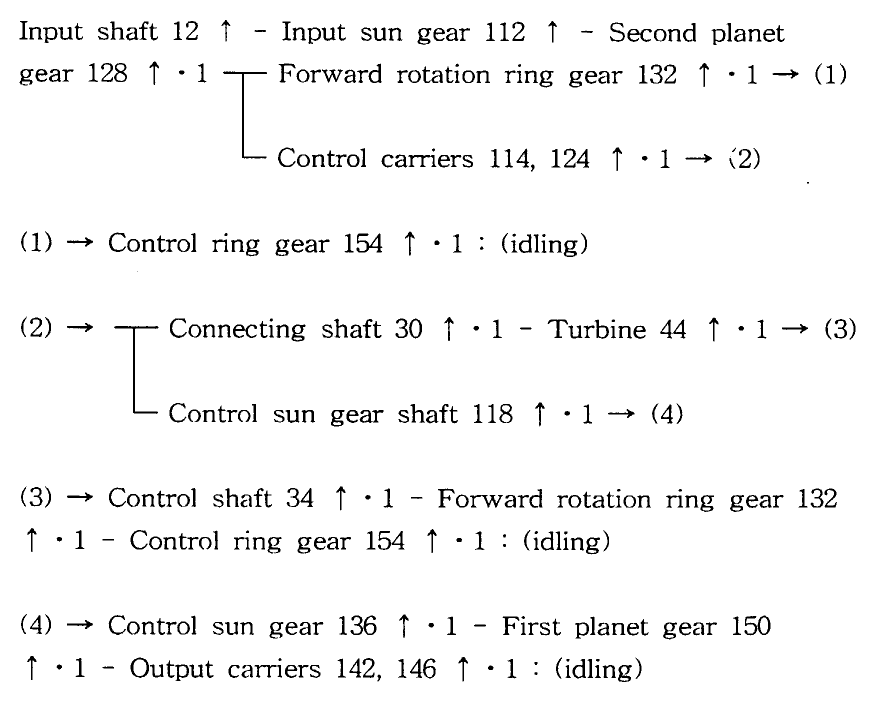

The neutral state is a state in which the power mode clutch 156, fuel ratio mode clutch 162, low speed brake 170 and reverse rotation brake 174 are concurrently released, the power of the engine can not rotate the output shaft 160, and the system is idling as shown in Fig. 7.

That is, it is the state in which the power transmission between the speed change system 110 and the output shaft 160 is disconnected by releasing the power mode clutch 156 and fuel ratio mode clutch 162 connected to the output shaft 160.

For a reference, reviewing the state of the speed change system and speed change controlling system, the input shaft 12 rotates upon the input of the power of the engine, the input sun gear 112, integrally formed with the input shaft 12, also rotates in direction A, the same as that of the input shaft 12, and finally the second planet gear 128, meshed with the input sun gear 112, rotates in direction A, the same as that of the input sun gear 112. Also, the forward rotation ring gear 132, meshed with the second planet gear 128 and the control ring gear 154 integral with the forward rotation ring gear 132, rotates in direction A, the same as that of the second planet gear, idling due to the release of the power mode clutch 156.

In addition, the rotation inputted from the input sun gear 112 rotates the control carriers 114, 124 in direction A through the second planet gear 128, then the control sun gear shaft 118, connected to the control carriers 114, 124 by the spline 122S, and the control sun gear 136, integral with the control sun gear shaft 118, are also rotated in direction A. Eventually, the first planet gear 150, meshed with the control sun gear 136, also rotates in direction A, the same as that of the control sun gear 136, and the output carriers 142, 146 are also rotated in direction A by the control sun gear 136 and the first planet gear 150, idling due to the release of the fuel ratio mode clutch 162.

Since the control carriers 114, 124 are rotated in direction A, the connecting shaft 30 integrally connected to the control carriers 114, 124 are also rotated in direction A, and the impeller housing 38, connected to the connecting shaft 30 by the spline 40S, and the impeller 42, integral with the impeller housing 38, are rotated in direction A.

The turbine 44, installed facing the impeller 42, is rotated in direction A by the flow of the fluid, and the control shaft 34, connected to the turbine 44 and the forward rotation ring gear 132, and control ring gear 154, integrally formed with the control shaft 34, are rotated in direction A, and since no load is applied to the turbine 44 due to the release of the power mode clutch 156, the impeller 42 and turbine 44 rotate at a 1:1 ratio. Therefore, at neutral, the first planet gear 150 and second planet gear 128 eventually are not rotated but all the rotating bodies rotate as an integral body.

The operation state as described above is schematically shown in Fig. 8 as an operation diagram.

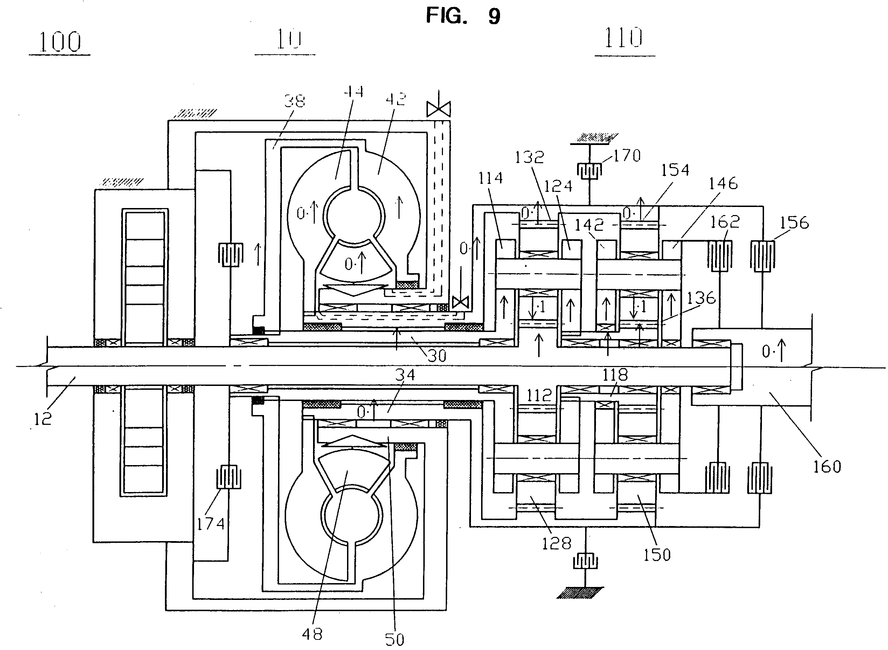

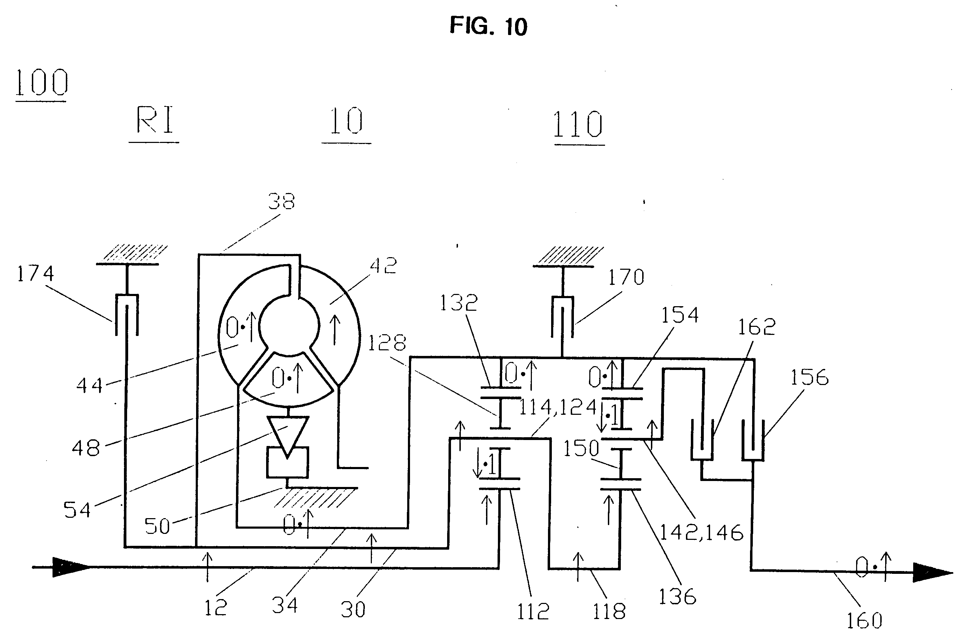

### II. Forward Rotation I (Power Mode) State (Fig. 9 and 10)

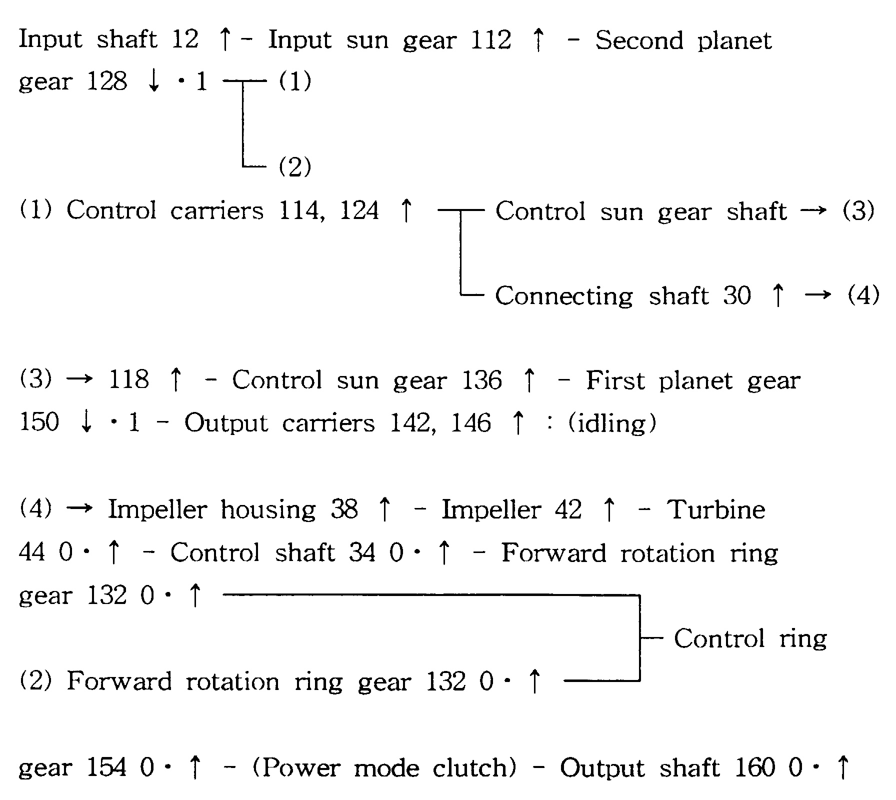

This is the case in which only the power mode clutch 156 is actuated and the fuel ratio mode clutch 162 is released.

The input sun gear 112, integrally formed with the input shaft 12, is rotated in direction A, the same as that of the input shaft 12, the second planet gear 128, meshed with the input sun gear 112, is rotated in direction B, and the control carriers 114, 124 are decelerated and rotated in direction A through the second planet gear 128 under the condition in which the control ring gear 132 meshed with the second planet gear 128 is stopped by the load of the output shaft 160 due to the actuation of the power mode clutch 156.

The connecting shaft 30 integrally connected to the control carriers 114, 124, the impeller housing 38 assembled to the connecting shaft 30 with the spline 40S, and the impeller 42 integral with the impeller housing 38 are decelerated and rotated in direction A.

On the other hand, the control sun gear shaft 118 and control sun gear 136, integrally connected to the control carriers 114, 124, are rotated in direction A and make the first planet gear 150, meshed with the control sun gear 136, to rotate in direction B. Since the control ring gear 154 meshed with the first planet gear 150 is stopped, the output carriers 142, 146 are rotated in direction A due to the first planet gear 150 and idle due to the release of the fuel ratio mode clutch 162.

Here, reviewing the procedure of speed changing steplessly from a low step to a high step, under the condition in which the control ring gear 154, forward rotation ring gear 132, control shaft 34 and the turbine 44 connected to the power mode clutch 156 are stopped due to the actuation of the power mode clutch 156, a portion of the rotational force transmitted to the second planet gear 128 through the input sun gear 112 is increased through the control carrier 114, 124 and transmitted, via the connecting shaft 30 integrally formed with the control carriers 114, 124 and the impeller housing 38 integrally connected with the connecting shaft 30, to the impeller 42 integral with the impeller housing 38. At this time, since the turbine 44 is stopped by the load of the output shaft 160 due to the actuation of the power mode clutch 156, a rotational difference occurs between the impeller and the turbine.

In view of the characteristics of the torque converter, since the larger the rotational difference between the impeller 42 and the turbine 44, the larger the rotational force is generated, so that the increased rotational force of the impeller 42 is transmitted to the turbine 44, the rotational force transmitted to the turbine 44 is transmitted via the control shaft 34, forward rotation ring gear 132 and control ring gear 154 to the output shaft 160 connected to the power mode clutch 156, and if the resistance acting on the output shaft 160 and the rotational force transmitted to the turbine 44 are in an equilibrium condition, then the output shaft 160 is driven. This is the low speed starting state.

If the rotation of the engine is increased, the rotational difference between the impeller 42 and turbine 44 becomes greater and therefore, the rotational force transmitted to the turbine 44 is increased, and if the rotational force transmitted to the turbine 44 is greater than the resistance acting on the turbine 44 due to the load of the output shaft 160, the output shaft 160 is accelerated until the rotational force of the turbine 44 transmitted from the impeller 42 becomes equal to the resistance acting on the turbine 44.

If the output shaft 160 is accelerated, the load of the output shaft 160 is decreased, therefore, the resistance acting on the turbine 44 is also decreased. If the resistance acting on the turbine 44 is decreased, the rotational difference is decreased between the impeller 42 and the turbine 44 until it comes into equilibrium with this resistance. Therefore, the rotation of the turbine 44 is increased in direction A, the same as that of the impeller 42, and also the rotation of the forward rotation ring gear 132, integrally connected to the turbine 44, is increased in direction A. If the rotation of the forward rotation ring gear 132 is increased, the rotation of the control ring gear 154 integrally connected to the forward rotation ring gear 132 is also increased and also the rotation of the output shaft 160 is increased due to the actuation of the power mode clutch 156, and if the load of the output shaft 160 is further reduced due to the increase in rotation of the output shaft 160 and thus the load comes in equilibrium with the driving force of the input shaft 12, the impeller 42 and the turbine 44 are rotated at the ratio of 1:1, and the first planet gear 150 and second planet gear 128 do not rotate about their own axes but all the rotating bodies rotate integrally. This is the high speed state.

Since the rotational ratio between the impeller 42 and the turbine 44 does not become 1:1 due to the oil slippage between the impeller 42 and the turbine 44 in this high speed state, the speed change ratio of the input versus output can not obtain 100% efficiency of 1:1 and therefore, efficiency of 100% can be obtained by integrating the input shaft and output shaft by concurrently actuating the power mode clutch and fuel ratio mode clutch.

In the present embodiment, reviewing the rotational force transmitted to the impeller 42, since the rotational force increased more than that of the input shaft 12 by the second planet gear 128 and control carriers 114, 124 acts on the impeller 42 through the connecting shaft 30 so as to be transmitted to the turbine 44, the large rotational force is applied to the output shaft 160 at low speed state thereby obtaining excellent acceleration and efficiency.

The above described operation state is schematically shown in Fig. 10 as an operation diagram.

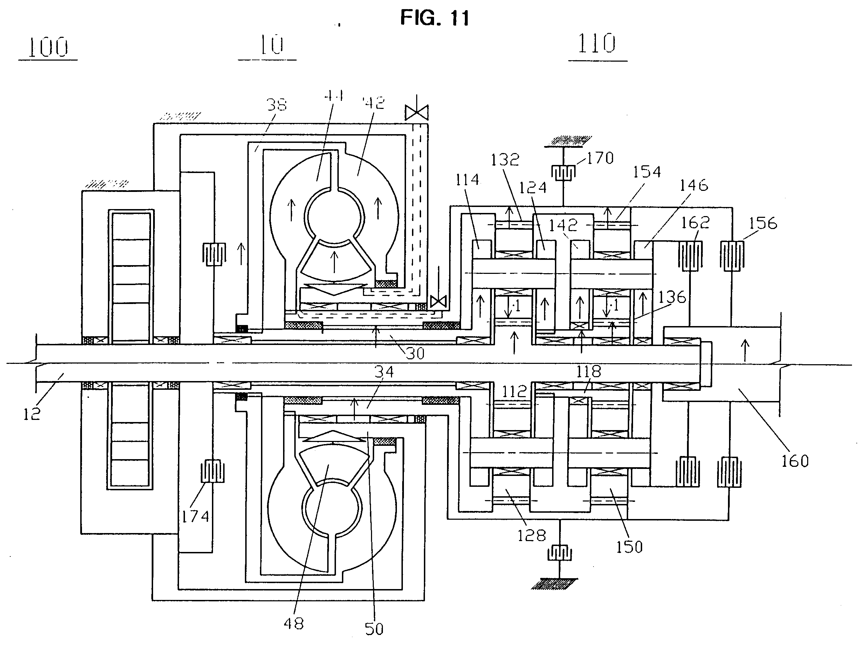

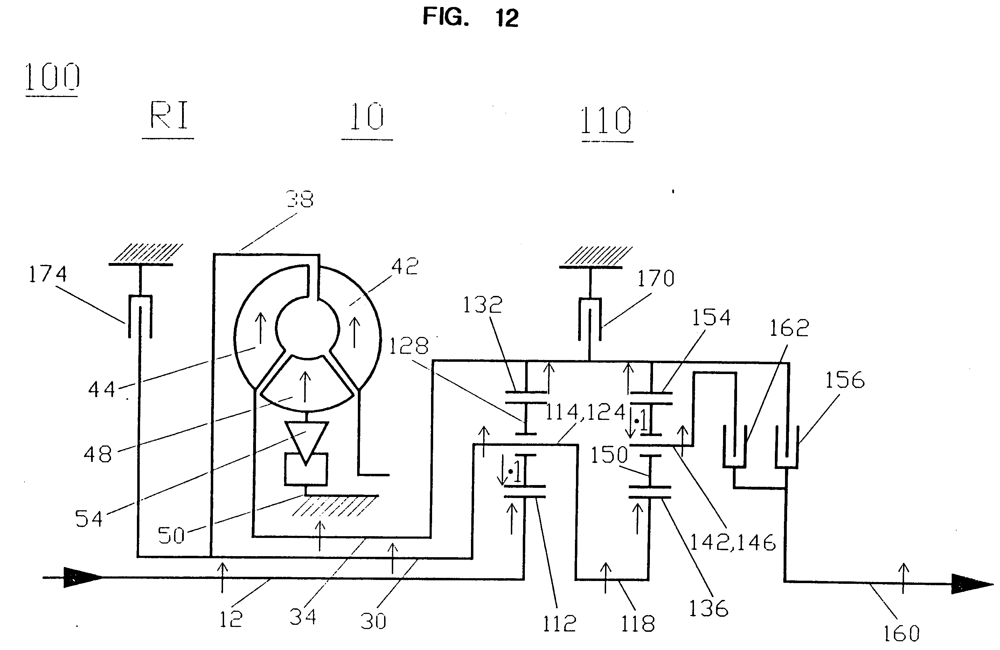

### III. Forward Rotation II (Normal Operation Mode) State (Figs. 11 and 12)

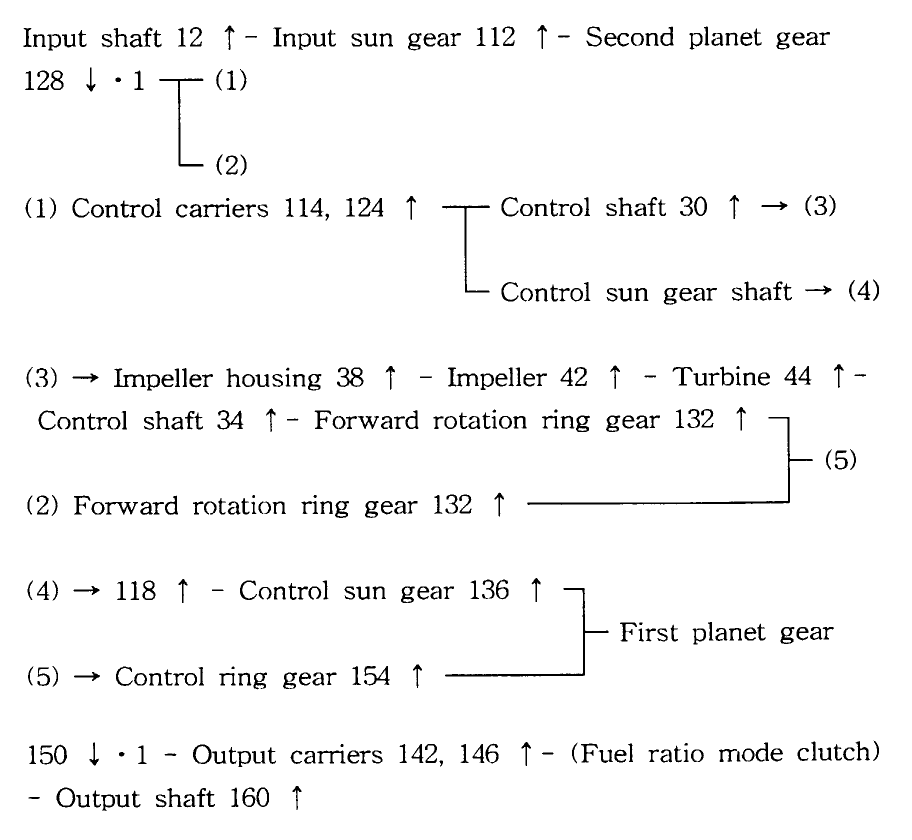

The power mode clutch 156 is used at the initial starting, and when the rotational ratio between the impeller 42 and the turbine 44 reaches a predetermined ratio, the power mode clutch 156 is released and the fuel ratio mode clutch 162 is actuated.

Here, the duration until the rotation at the predetermined ratio after the initial starting at the time of stepless speed change from low speed step to higher speed step is a state in which the fuel ratio mode clutch 162 is released and only the power mode clutch is actuated, and this is same as the power mode state of forward rotation I described above, therefore, a specific description thereof is omitted.

That is, if the rotation of the engine is increased, since the rotational difference between the impeller 42 and the turbine 44 becomes large, the rotational force transmitted to the turbine 44 is increased, and if the rotational speed of the output shaft 160 is increased, the power mode clutch 156 is released and the fuel ratio mode clutch 162 is actuated. The output shaft 160 and the output carriers 142, 146 are connected by the actuation of the fuel ratio mode clutch 162 and the rotation of the forward rotation ring gear 132 and control ring gear 154 is transmitted to the first planet gear 150 so as to be transmitted to the output carriers 142, 146 and is decreased upon establishing equilibrium with the resistance of the output shaft 160.

In this state, if the rotation of the engine is increased, since the rotational difference between the impeller 42 and the turbine 44 becomes large, the rotational force transmitted to the turbine 44 is increased, and in case where the rotational force transmitted to the turbine 44 is larger than the resistance applied on the turbine 44 by the load of the output shaft 160, the output shaft 160 is accelerated until the rotational force of the turbine 44 transmitted from the impeller 42 establishes equilibrium with the resistance acting on the turbine 44.

If the output shaft is accelerated, since the load of the output shaft 160 is decreased, the resistance acting on the turbine 44 is also decreased. If the resistance acting on the turbine 44 is decreased, the rotational difference between the impeller 42 and the turbine 44 is decreased until it establishes equilibrium with the resistance. Therefore, the rotation of the turbine 44 is increased in direction A, the same as that of the impeller 42, and the rotation of the forward rotation ring gear 132 and control ring gear 154 integrally connected with the turbine 44 is also increased in direction A.

In case where the load of the output shaft 160 is further reduced so as to establish equilibrium with the driving force of the input shaft 12, the impeller 42 and the turbine 44 rotate at a 1:1 ratio, the first planet gear 150 and second planet gear 128 do not rotate about their own axes, and all the rotating bodies rotate integrally. This is the high speed state.

As described above, the characteristics of the present embodiment (same in the other embodiments) are that the required speed change ratio is steplessly varied according to the load of the output shaft.

Here, since 100% efficiency with which the rotational ratio between the impeller and turbine becomes 1:1 can not be obtained due to the oil slippage in the torque converter between the impeller and turbine, the characteristics of the present invention are that the efficiency decrease due to the oil slippage can be prevented by effectuating a lock-up function by concurrently actuating the power mode clutch and fuel ratio mode clutch.

The above described operation state is schematically shown in Fig. 12 as an operation diagram.

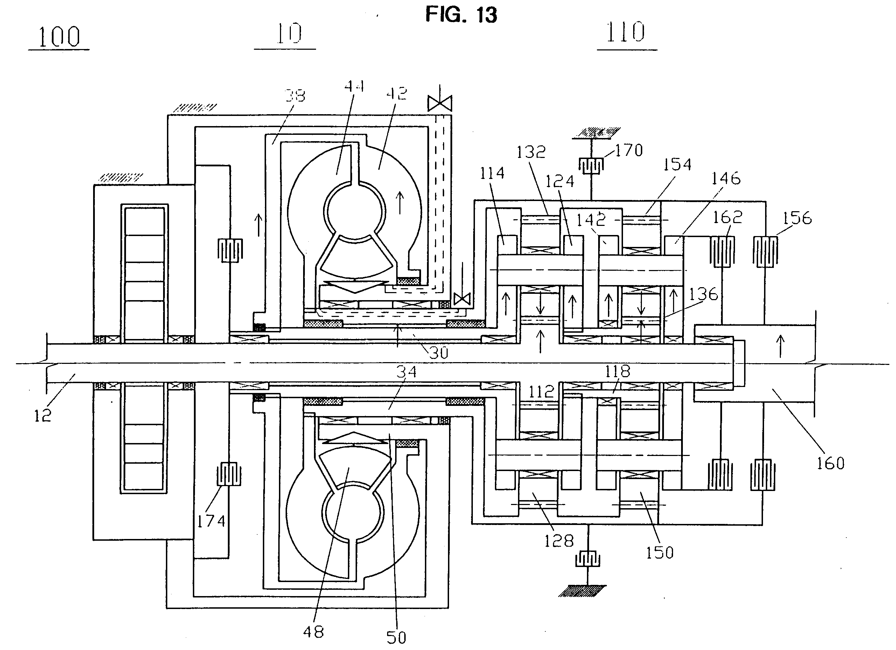

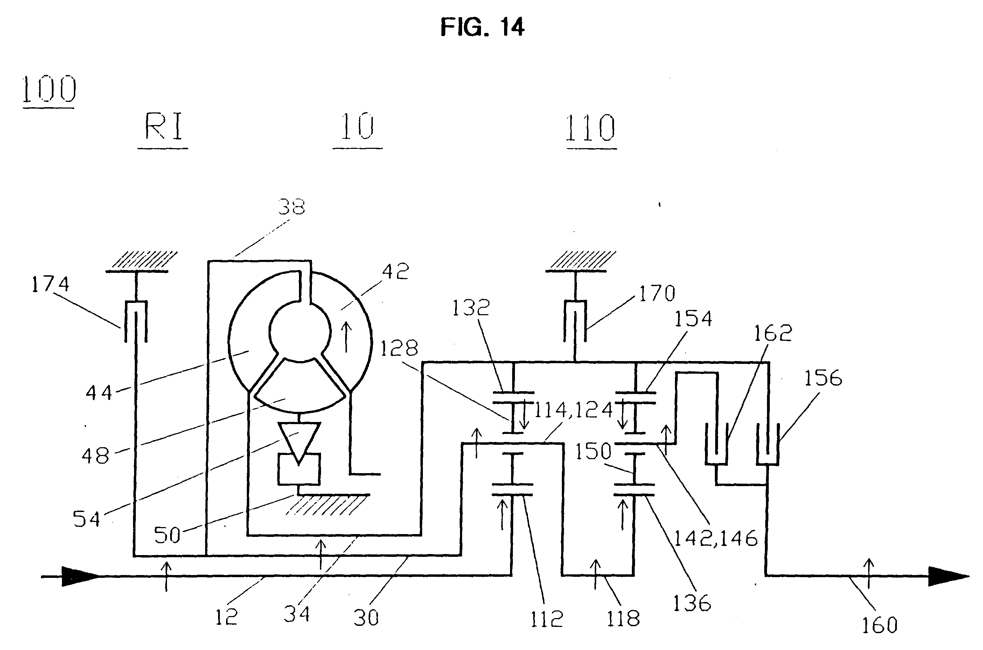

### IV. Forward Rotation III (Low Speed Mode) State (Fig. 13 and 14)

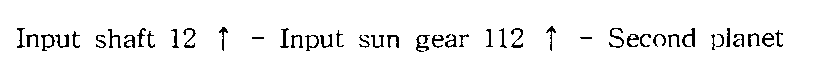

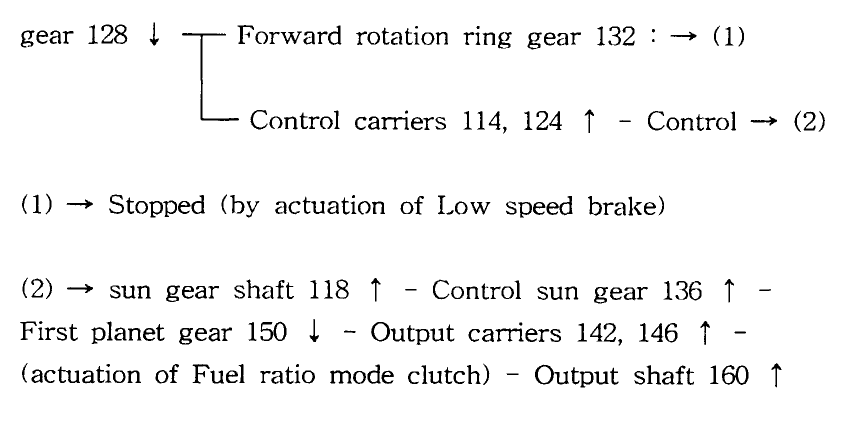

The low speed mode is achieved when the power mode clutch 156 is released and the low speed brake 170 installed at the outside of the forward rotation ring gear 132 and the control ring gear 154 and the fuel ratio mode clutch 162 connected between the output carriers 142, 146 and output shaft 160 are actuated.

If the power of the engine is inputted to the input shaft 12, the input sun gear 112 integrally connected to the input shaft 12 is rotated in direction A, the same as that of the input shaft 12, and the second planet gear 128 meshed with the input sun gear 112 is rotated in direction B opposite to that of the input sun gear 112. Since the forward rotation ring gear 132 meshed with the second planet gear 128 is stopped by the actuation of the low speed brake 170, the second planet gear 128 decelerates and rotates the control carriers 114, 124 in direction A, the same as that of the input sun gear 112. The decelerated rotation of the control carriers 114, 124 rotates the control sun gear shaft 118 integrally connected to the control carriers 114, 124 and the control sun gear 136 integral with the control sun gear shaft 118 in direction A. The first planet gear 150, meshed with the control sun gear 136, is rotated in direction B, opposite to the control sun gear 136, and again decelerates and rotates the output carriers 142, 146 in direction A, the same as that of the control sun gear 136, by the control ring gear 154 stopped due to the actuation of the low speed brake 170. The output carriers 142, 146 drive the output shaft 160 connected by the actuation of the fuel ratio mode clutch 162 in direction A, therefore, the output is performed in low speed condition by the decelerated rotation.

Since the rotation inputted from the engine is decelerated at a constant ratio due to the stopping of the forward rotation ring gear 132 and control ring gear 154 and rotates the output shaft 160, the output shaft 160 obtains a driving force as large as the decelerated portion and concurrently obtains the engine brake effect.

The above described operation state is schematically shown in Fig. 14 as an operation diagram.

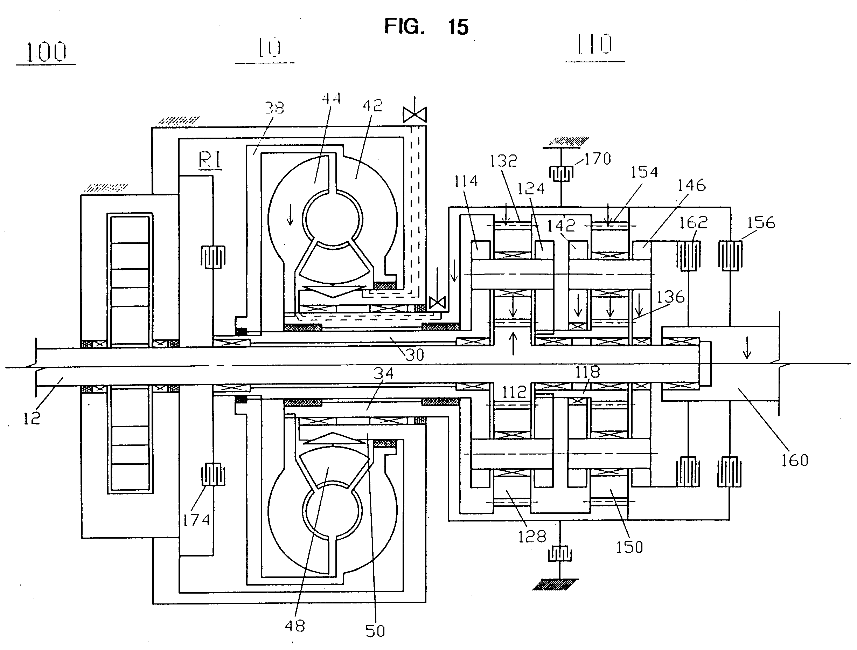

### V. Reverse Rotation State (Fig. 15 ^{∼} 20)

### 1. Reverse Rotation I State (Fig. 15) : Actuation of Reverse Rotation System RI

### Case (1)

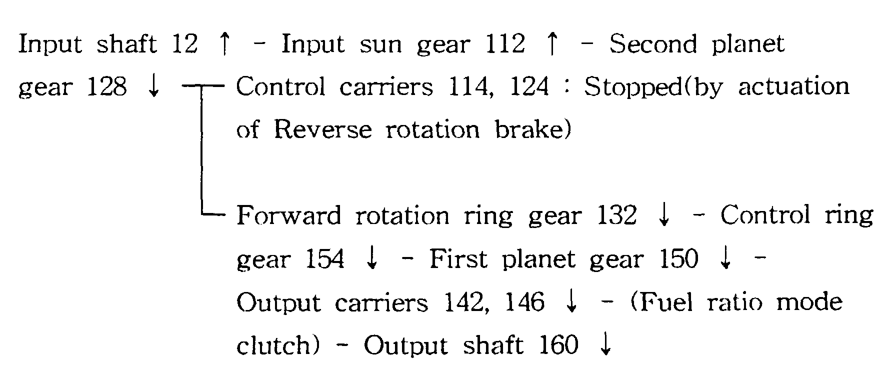

### Case (2)

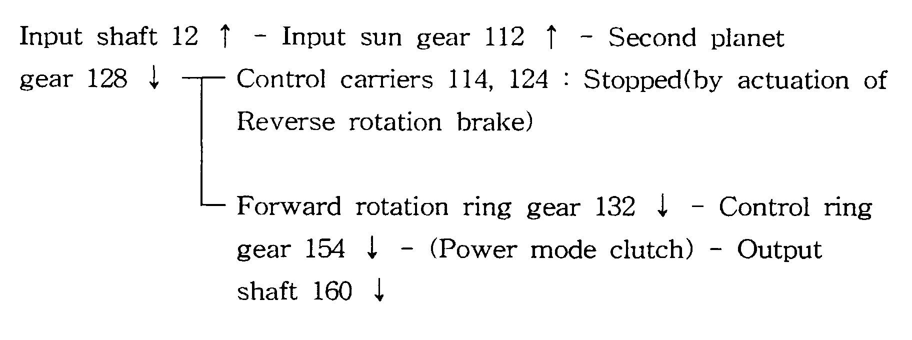

The reverse rotation effectuated by the reverse rotation system RI of the present invention can be performed in two ways. That is, (1) transmitting to the output shaft by actuating reverse rotation brake 174 and the fuel ratio mode clutch 162 connected to the connecting shaft 30, and (2) transmitting to the output shaft 160 by actuating the reverse rotation brake 174 and the power mode clutch 156 connected to the connecting shaft 30.

In the case (1), the reverse rotation brake 174 connected to the connecting shaft 30 and the fuel ratio mode clutch 162 are actuated in the neutral state.

If the power of the engine is inputted to the input shaft 12, the input sun gear 112, integrally connected to the input shaft 12, is rotated in direction A, the same as that of the input shaft 12, and since the control carriers 114, 124 are stopped by the actuation of the reverse rotation brake 174 connected to the connecting shaft 30 integral with the control carriers 114, 124, the second planet gear 128, meshed with the input sun gear 112, rotates in direction B opposite to that of the input sun gear 112 and rotates the forward rotation ring gear 132, meshed with the second planet gear, in direction B.

The control ring gear 154, integrally formed with the forward rotation ring gear 132, also rotates in direction B, the same as that of the forward rotation ring gear 132, and since the control carriers 114, 124, the control sun gear shaft 118, integrally connected to the control carriers 114, 124, and the control sun gear 136, integrally formed with the control sun gear shaft 118, are stopped, the output carriers 142, 146 are decelerated and rotated in direction B, the same as that of the control ring gear 154. If the output carriers 142, 146 are rotated in direction B, the output shaft 160 is rotated in direction B opposite to that of the input shaft 12 by the actuation of the fuel ratio mode clutch 162 connected to the output carriers 142, 146.

In the case (2), the reverse rotation brake 174 connected to the connecting shaft 30 and the power mode clutch 156 are actuated.

If the power of the engine is inputted to the input shaft 12, the input sun gear 112 integrally connected to the input shaft 12 is rotated in direction A, the same as that of the input shaft 12, and since the control carriers 114, 124 are stopped by actuation of the reverse rotation brake 174, connected to the connecting shaft 30 integral with the control carriers 114, 124, the second planet gear 128, meshed with the input sun gear 112, rotates in a direction opposite to the rotation of the input sun gear 112 and rotates the forward rotation ring gear 132, meshed with the second planet gear 128, in direction B. If the forward rotation ring gear 132 rotates in direction B, the control ring gear 154, integrally formed with the forward rotation ring gear 132 is also rotated in direction B. At this time, since the power mode clutch 156 is being actuated, the output shaft 160 and control ring gear 154 are connected, and therefore, the output shaft 160 is also rotated in direction B same as that of the control ring gear 154.

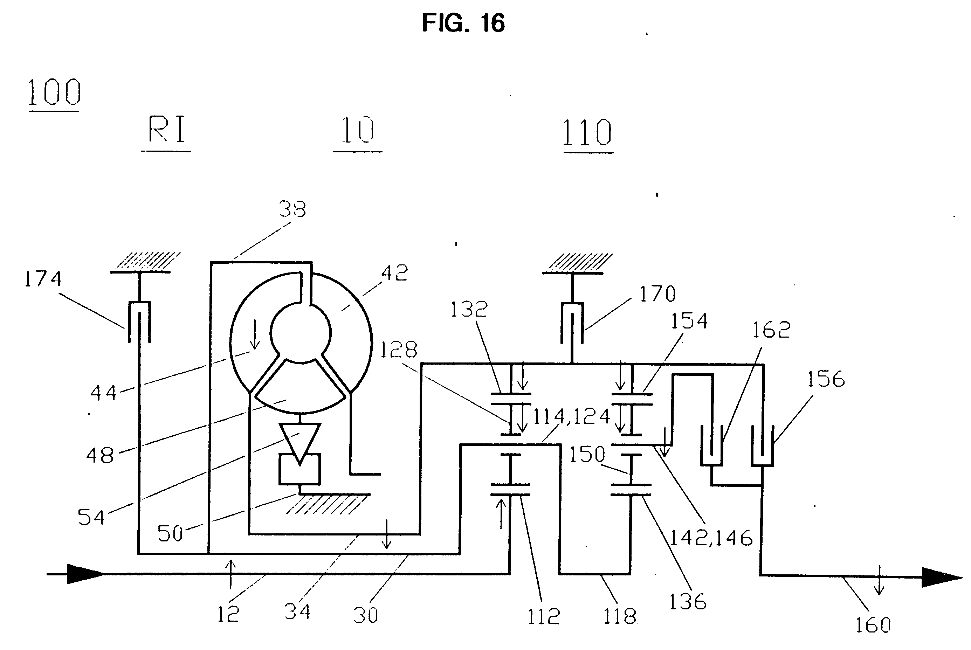

The above described operation state is schematically shown in Fig. 16.

Here, the operation in the reverse rotation I state by the reverse rotation system RI can be performed in two ways in which the fuel ratio mode clutch or power mode clutch is actuated when actuating the reverse rotation brake 174, however, it is obvious that a predetermined purpose can be achieved even if either one (connected to the fuel ratio mode clutch or power mode clutch) of the two ways is performed according to the method of setting the gear ratio.

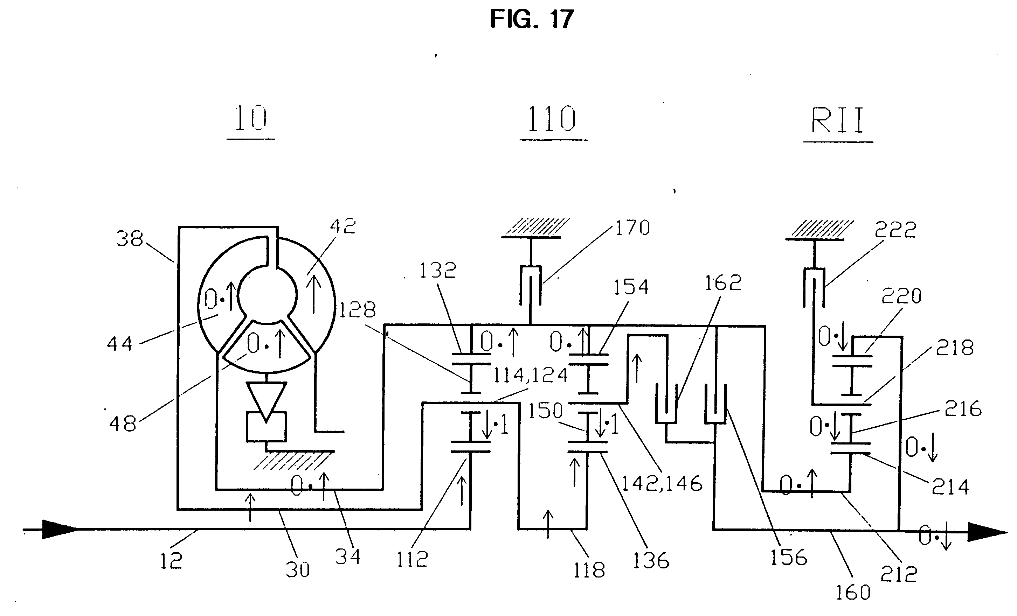

### 2. Reverse Rotation II State (Fig. 17) : Actuation of Reverse Rotation System RII

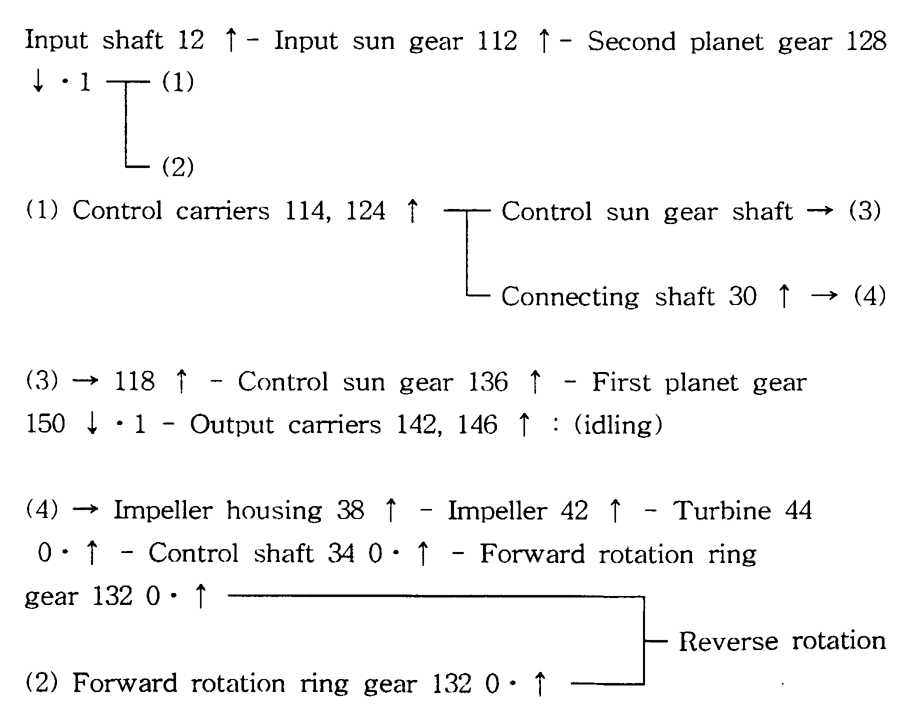

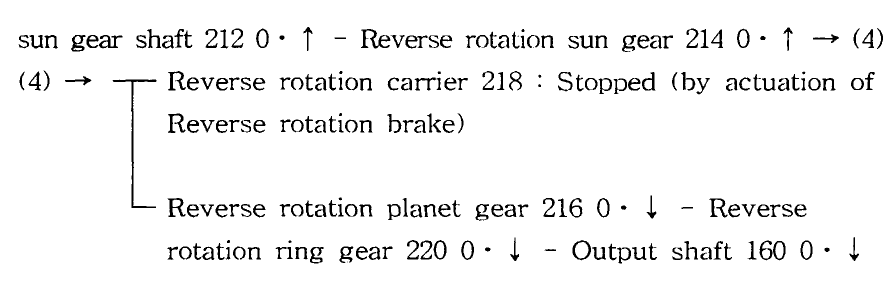

In reverse rotation II state, the power mode clutch 156, fuel ratio mode clutch 162 and low speed brake 170 are released, and the reverse rotation brake 222 installed on the reverse rotation carriers 218 is actuated.

If the power of the engine is inputted to the input shaft 12, the input sun gear 112 integrally formed with the input shaft 12 is rotated in direction A, the same as that of the input shaft 12, and the second planet gear 128, meshed with the input sun gear 112, is rotated in direction B opposite to direction A. Since the forward rotation ring gear 132 meshed with the outside of the second planet gear 128, the reverse rotation sun gear shaft 212 integrally connected with the forward rotation ring gear 132, and the reverse rotation sun gear 214 integral with the reverse rotation sun gear shaft 212 are in momentary stationary condition together with the output shaft 160 by actuation of the reverse rotation brake 222, the rotational force transmitted through the second planet gear 128 can not rotate the forward rotation ring gear 132 but decelerate and rotate the control carriers 114, 124 in direction A. Also, the connecting shaft 30 integrally connected with the control carriers 114, 124, the impeller housing 38 integrally formed with the connecting shaft 30, and the impeller 42 integral with the impeller housing 38 are decelerated and rotated in direction A.

On the other hand, the control sun gear shaft 118 and control sun gear 136 integral with the control carriers 114, 124 are also rotated in direction A and rotate the first planet gear 150 meshed with the control sun gear 136 in direction B. Since the control ring gear 154 meshed with the first planet gear 150 is in momentary stationary condition, the output carriers 142, 146 are rotated in direction A by the first planet gear 150 and idle due to the release of the fuel ratio mode clutch 162.

Here, reviewing the procedure of stepless speed changing, the reverse rotation carrier 218, the reverse rotation ring gear 220, integrally connected to the output shaft 160, and the reverse rotation sun gear 214 are in a stationary condition due to the actuation of the reverse rotation brake 222 installed at the outside of the reverse rotation carriers 218, and in addition, the reverse rotation sun gear shaft 212 integral with the reverse rotation sun gear 214, the control ring gear 154 and forward rotation ring gear 132 integrally connected with the reverse rotation sun gear shaft 212, and the control shaft 34 and turbine 44 are also in momentary stationary condition. In this state, a part of the rotational force transmitted to the second planet gear 128 through the input sun gear 112 is transmitted via the control carriers 114, 124, the connecting shaft 30 and the impeller housing 38 integrally formed with the control carriers 114, 124 to the impeller 42. At this time, since the turbine 44 is stopped, a rotational difference occurs between the impeller 42 and turbine 44.

In view of the characteristics of the torque converter, the larger the rotational difference between the impeller 42 and turbine 44 is, the larger the rotational force becomes, and the increased rotational force of the impeller 42 is transmitted to the turbine 44, and therefore, the rotational force transmitted to the turbine 44 is transmitted to the reverse rotation sun gear shaft 212 and reverse rotation sun gear 214 through the control shaft 34, forward rotation ring gear 132 and control ring gear 154, and if the resistance acting on the reverse rotation sun gear 214 by the load of the output shaft 160 establishes equilibrium with the rotational force transmitted to the turbine 44, the reverse rotation sun gear 214 is driven. The rotational force is transmitted to the reverse rotation planet gear 216, meshed with the reverse rotation sun gear 214, upon rotation of the reverse rotation sun gear 214, and since the reverse rotation carrier 218 is stopped by actuation of the reverse rotation brake 222, the reverse rotation planet gear 216 rotates in direction B which is opposite to direction A and rotates the reverse rotation ring gear 220, meshed with the outside of the reverse rotation planet gear 216, in direction B. This is the reverse rotation starting state.

If the rotation of the engine is increased, the rotational difference between the impeller 42 and the turbine 44 becomes large, and therefore the rotational force transmitted to the turbine 44 is increased, and in the case where the rotational force transmitted to the turbine 44 is larger than the resistance acting on the turbine 44 through the reverse rotation sun gear 214 due to the load of the output shaft 160, the reverse rotation sun gear 214 is accelerated until the rotational force of the turbine 44 transmitted from the impeller 42 establishes an equilibrium with the resistance acting on the turbine 44, and the rotation of the reverse rotation ring gear 220 integral with the output shaft 160 is increased in direction B through the reverse rotation planet gear 216.

If the rotation of the output shaft 160 is increased, since the load of the output shaft 160 is decreased, the resistance acting on the turbine 44 through the reverse rotation sun gear 214 is also decreased. If the resistance acting on the turbine 44 is decreased, the rotational difference between the impeller 42 and the turbine 44 is decreased until the rotation establishes equilibrium with the resistance. Therefore, the rotation of the turbine 44 is increased in direction A, the same as that of the impeller 42, and also, the rotation of the forward rotation ring gear 132, integrally connected with the turbine 44, is increased in direction A. If the rotation of the forward rotation ring gear 132 is increased, also the rotation of the control ring gear 154, integrally connected to the forward rotation ring gear 132, the reverse rotation sun gear shaft 212, integrally connected to the control ring gear 154, and the reverse rotation sun gear 214 are increased, and the rotation of the reverse rotation ring gear 220 and the output shaft 160 are also increased through the reverse rotation planet gear 216.

As described above, the operational characteristics of the reverse rotation II state according to the present reverse rotation system RII (same in other reverse rotation systems) is that the stepless reverse driving can be achieved according to the load of the output shaft 160 even at the time of reverse rotation.

Reviewing the rotational force transmitted to the output shaft 160 in the present reverse rotation system RII, the rotational force is increased more than that of the input shaft 12 by the second planet gear 128 and the control carriers 114, 124 which act on the impeller 42 through the connecting shaft 30, and the rotational force is further increased by the impeller 42 which acts on the turbine 44. This force is transmitted to the reverse rotation sun gear 214 through the control shaft 34 integrally connected to the turbine 44 and through the forward rotation ring gear 132 and the reverse rotation sun gear shaft 212, and drives the reverse rotation ring gear 220 integral with the output shaft 160 through the reverse rotation planet gear 216, and therefore, the intensified rotational force drives the output shaft 160 at the time of reverse rotation, so that the acceleration and efficiency are improved and smooth and quiet running can be achieved even during reverse operation.

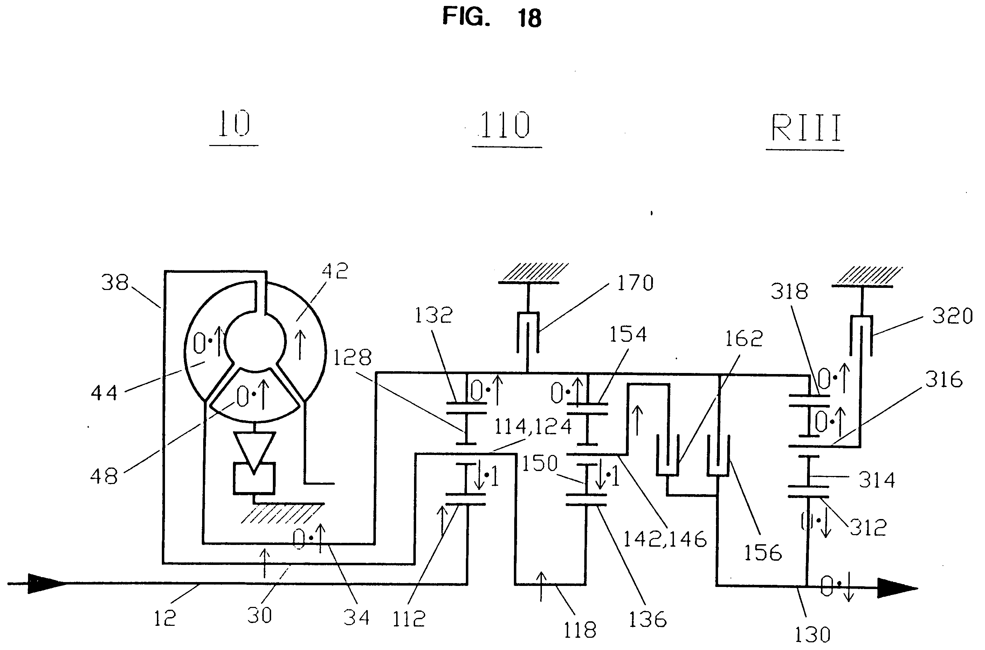

### 3. Reverse Rotation III state (Fig. 18) : Actuation of Reverse Rotation System RIII

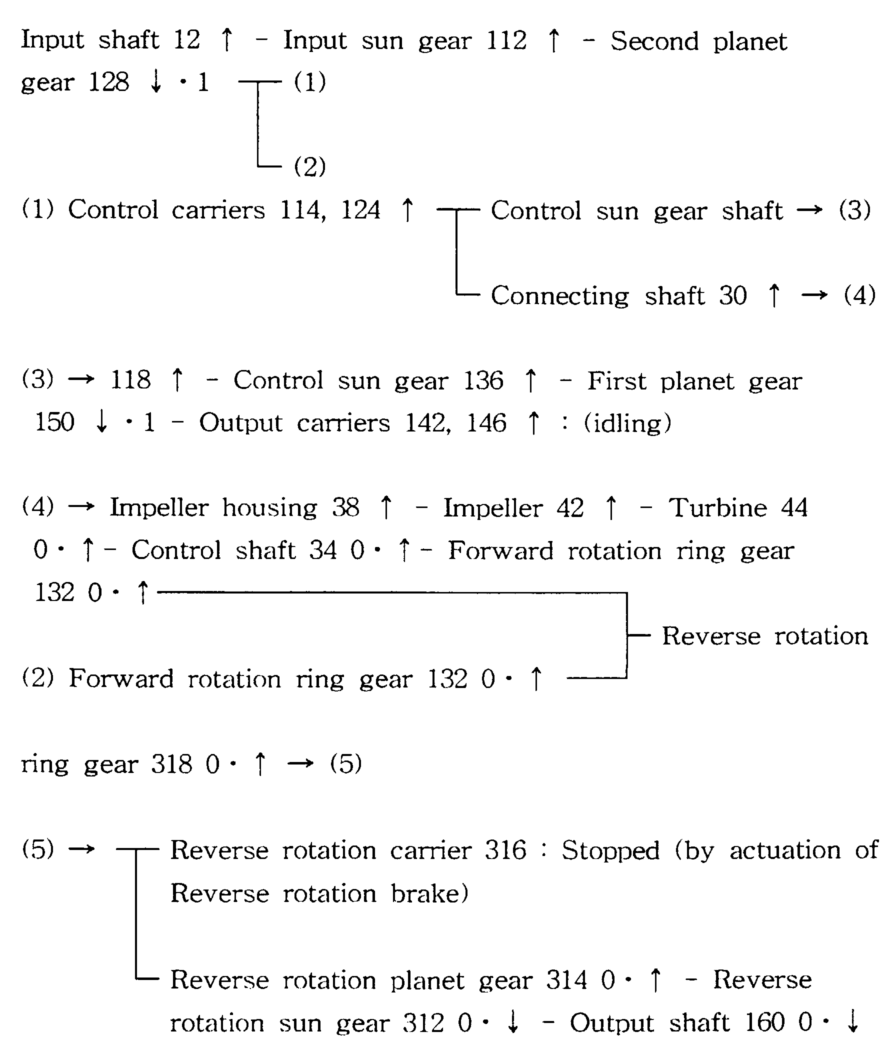

In the reverse rotation III state, the power mode clutch 156, fuel ratio mode clutch 162 and low speed brake 170 are released, and the reverse rotation brake 320, installed on the reverse rotation carrier 316, is actuated.

Since the rotational direction and the power transmission procedure in the present reverse rotation III state at the speed change system 110 and speed change controlling system 10 is the same as in the reverse rotation II state based on the above described reverse rotation system RII, a description thereof is omitted, and here, only the procedure of transmitting the power to the output shaft 160 through the reverse rotation system RIII is described.

As shown in Fig. 18, the reverse rotation ring gear 318 integrally connected to the control ring gear 154 is rotated in direction A, the same as that of the control ring gear 154, by the rotation of the forward rotation ring gear 132 and control ring gear 154 of the speed change system 110. Since the reverse rotation carrier 316 is stopped by the actuation of the reverse rotation brake 320, the reverse rotation planet gear 314, meshed with the inside of the reverse rotation ring gear 318, is rotated in direction A, the same as that of the reverse rotation ring gear 318, and rotates the reverse rotation sun gear 312, meshed with the inside of the reverse rotation planet gear 314, in direction B opposite to direction A. Also, the output shaft 160 integrally connected to the reverse rotation sun gear 312 is rotated in direction B by the rotation of the reverse rotation sun gear 312.

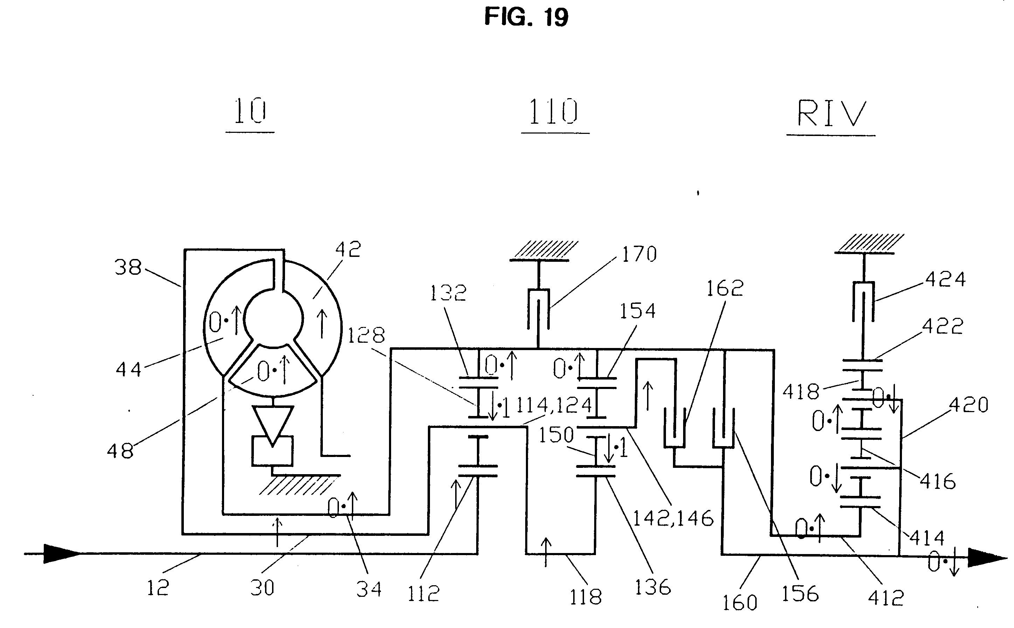

### 4. Reverse Rotation IV State (Fig. 19) : Actuation of Reverse Rotation System RIV

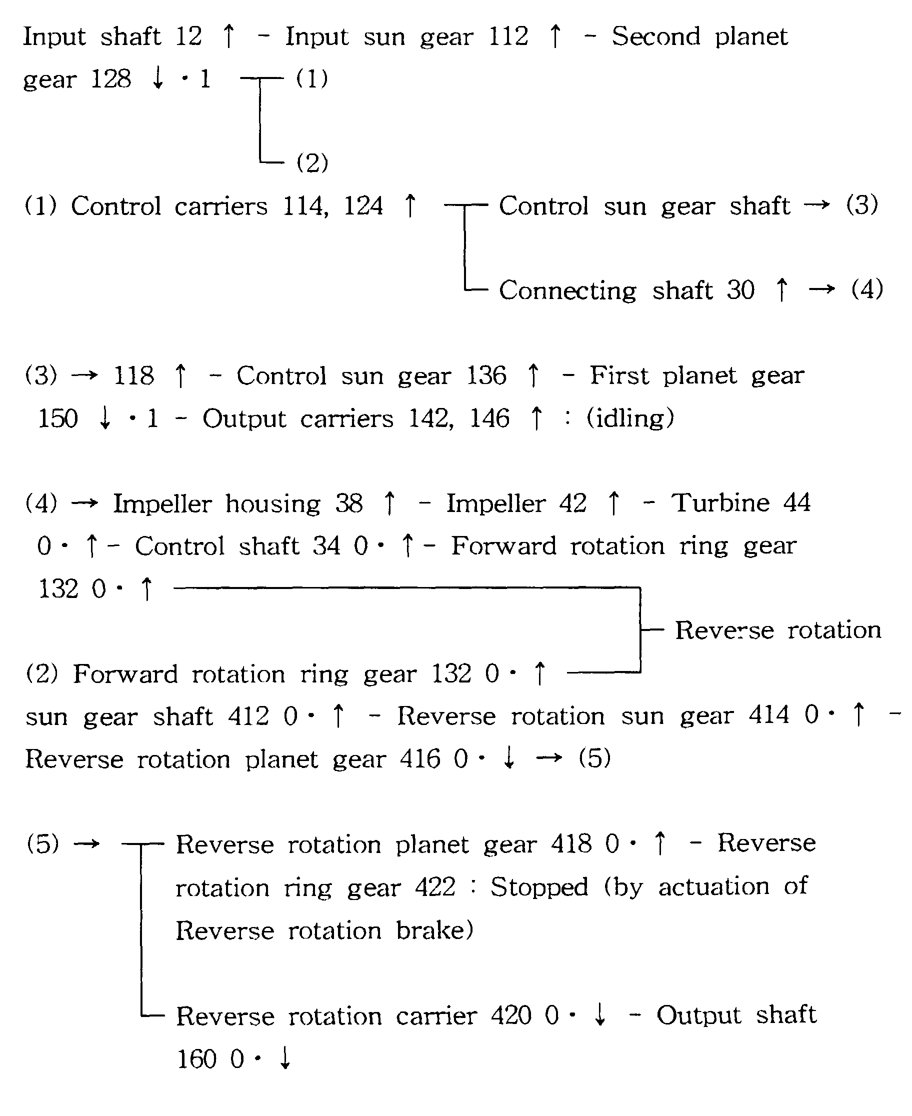

In the reverse rotation IV state, the power mode clutch 156, fuel ratio mode clutch 162 and low speed brake 170 are released and the reverse rotation brake 424, installed on the reverse rotation ring gear 422, is actuated.

Since the rotational direction and the power transmission procedure in the present reverse rotation IV state at the speed change system 110 and the speed change controlling system 10 is same as in the reverse rotation II state based on the operation of the above described reverse rotation system RII, a description thereof is omitted, and here, only the procedure of transmitting the power to the output shaft 160 through the reverse rotation system RIV is described.

As shown in Fig. 19, the reverse rotation sun gear shaft 412, integrally connected to the control ring gear 154, is rotated in direction A, the same as that of the control ring gear 154, by the rotation of the forward rotation ring gear 132 and control ring gear 154 of the speed change system 110, and also the reverse rotation sun gear 414, integrally connected to the reverse rotation sun gear shaft 412, is rotated in direction A. The rotation of the reverse rotation sun gear 414 rotates the reverse rotation planet gear 416, meshed with the reverse rotation sun gear 414, in the opposite direction B, and the reverse rotation planet gear 416 rotates another reverse rotation planet gear 418, adjacent to and meshed with the reverse rotation planet gear 416, in direction A. Although the reverse rotation planet gear 418 intends to rotate the reverse rotation ring gear 422, meshed with the outside of the reverse rotation planet gear 418, since the reverse rotation ring gear 422 is stopped due to the actuation of the reverse rotation brake 424, the reverse rotation planet gear 418 rotates the reverse rotation carrier 420 in direction B. Also, the output shaft 160 integrally connected to the reverse rotation carrier 420 rotates in direction B.

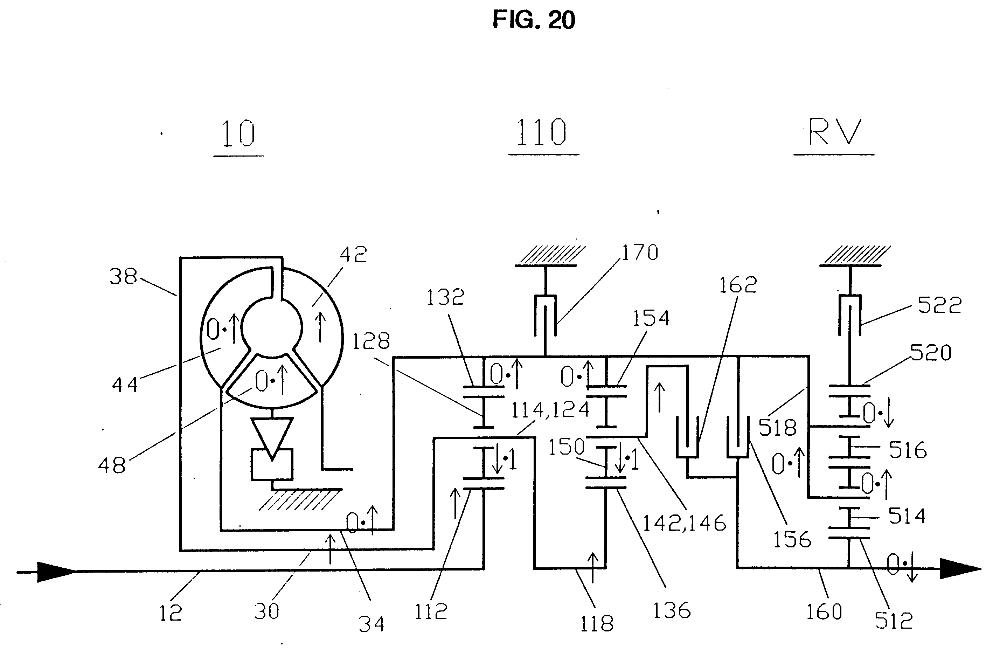

### 5. Reverse Rotation V State (Fig. 20) : Actuation of Reverse Rotation System RV

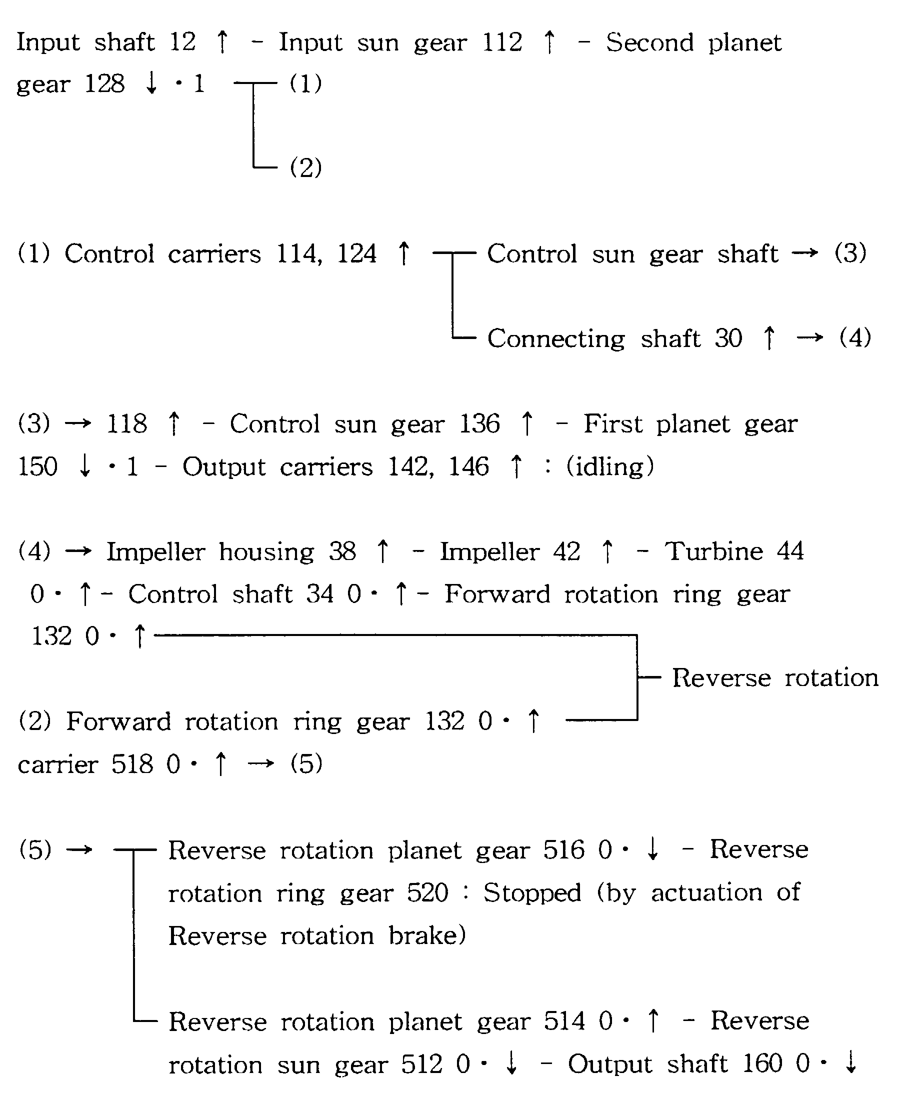

In the reverse rotation V state, the power mode clutch 156, fuel ratio mode clutch 162 and low speed brake 170 are released, and the reverse rotation brake 522, installed on the reverse rotation ring gear 520, is actuated.

Since the rotational direction and the procedure of power transmission in the present reverse rotation V state at the speed change system 110 and speed change controlling system 10 is the same as in the reverse rotation II state based on the operation of the above described reverse rotation system RII, a description thereof is omitted, and here, only the procedure of transmitting the power to the output shaft 160 through the reverse rotation system RV is described.

As shown in Fig. 20, the reverse rotation carrier 518 integrally connected to the control ring gear 154 is rotated in direction A, the as same as that of the control ring gear 154 by the rotation of the forward rotation ring gear 132 and control ring gear 154 of the speed change system 110. The rotation is transmitted to the reverse rotation planet gear 514, 516 as the reverse rotation carrier 518 rotates, and since the reverse rotation ring gear 520 meshed with the outside of the reverse rotation planet gear 516 is stopped by the actuation of the reverse rotation brake 522, the reverse rotation planet gear 516 is rotated in the opposite direction B and rotates the reverse rotation planet gear 514 meshed in adjacent therewith in direction A. The reverse rotation sun gear 512, meshed with the inside of the reverse rotation planet gear 514, rotates in the opposite direction B and rotates the output shaft 160, integrally connected thereto, in the same direction B.

From now on, the 2nd embodiment through the 75th embodiment of the present invention are described. In the 2nd embodiment through the 75th embodiment of the present invention, since the installation structure and operation method of the speed change controling system is same as that of the speed change controlling system of the first embodiment, a description of the construction and operation method of the speed change controlling system is omitted, and although there is a difference in the construction of the speed change system too, the principle of the operation method or the speed change procedure is similar to that of the first embodiment, and therefore, a detailed description thereof is omitted. Similarly, also the installation construction of the reverse rotation system is same as that of the first embodiment, and the method of operation and speed change procedure are similar to that of the first embodiment, therefore, the detailed description thereof is omitted.

In addition, although the positions of the impeller I and turbine T can be changed in the speed change controlling system, since the operation method and power transmission procedure at the time of the speed change in the speed change controlling system is same as that of the first embodiment of the present invention, a description thereof is also omitted.

Therefore, in consideration of the similarity of the construction, method of operation and the speed change procedure, as described above, the construction of each embodiment is shown schematically for simplification and convenience of explanation.

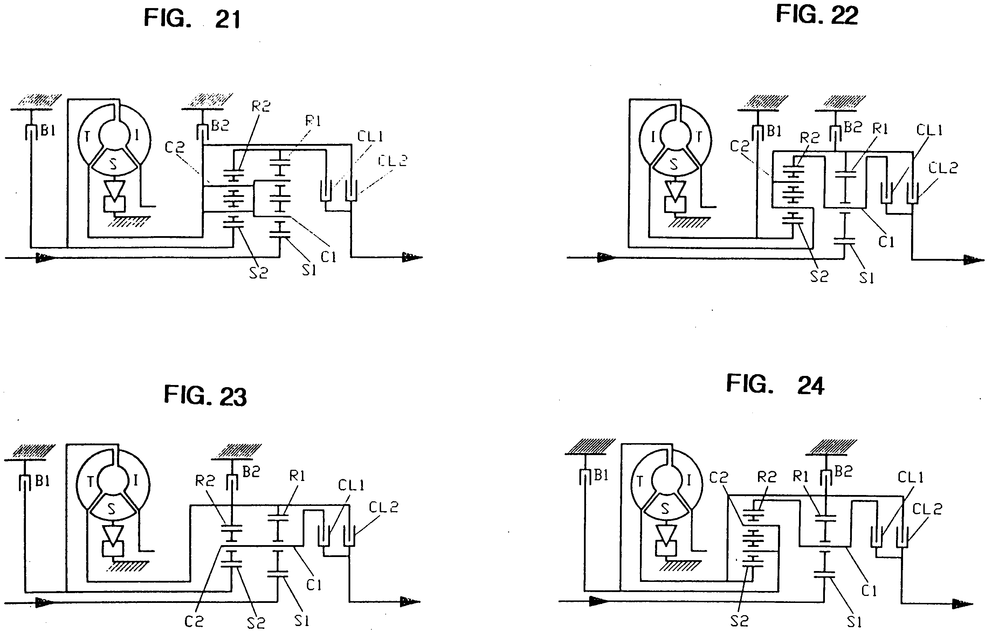

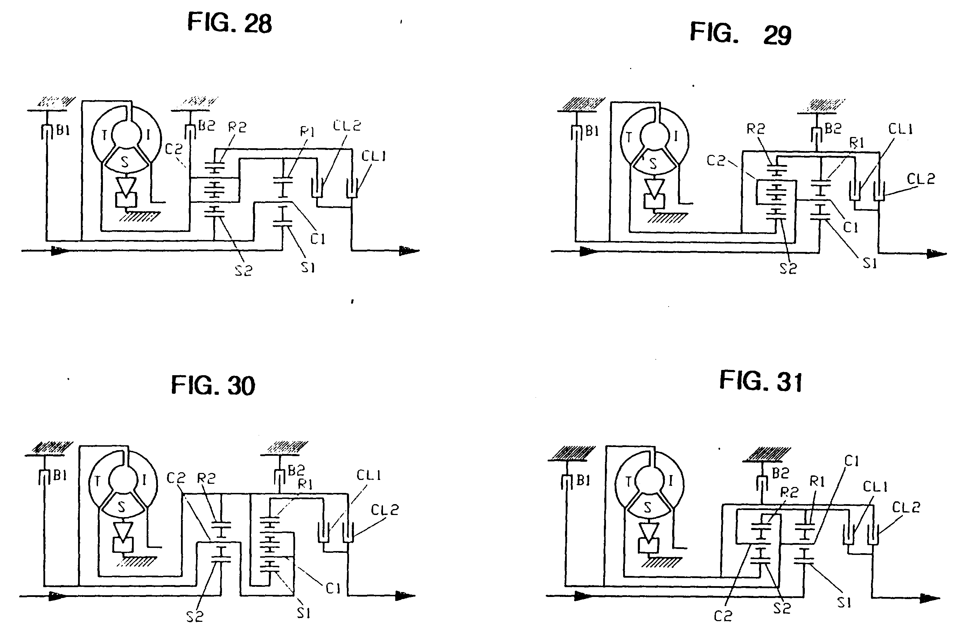

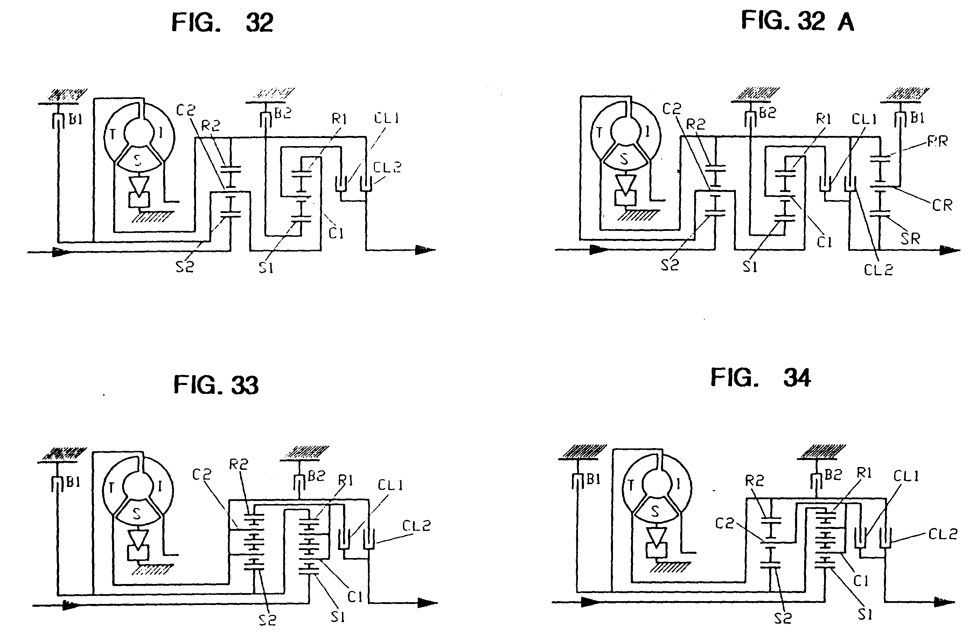

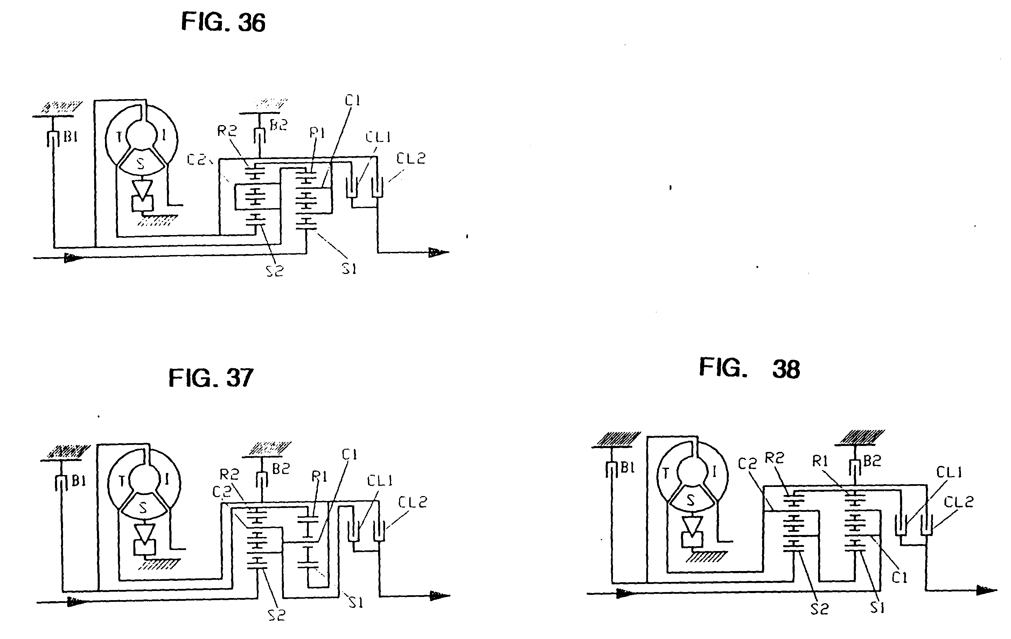

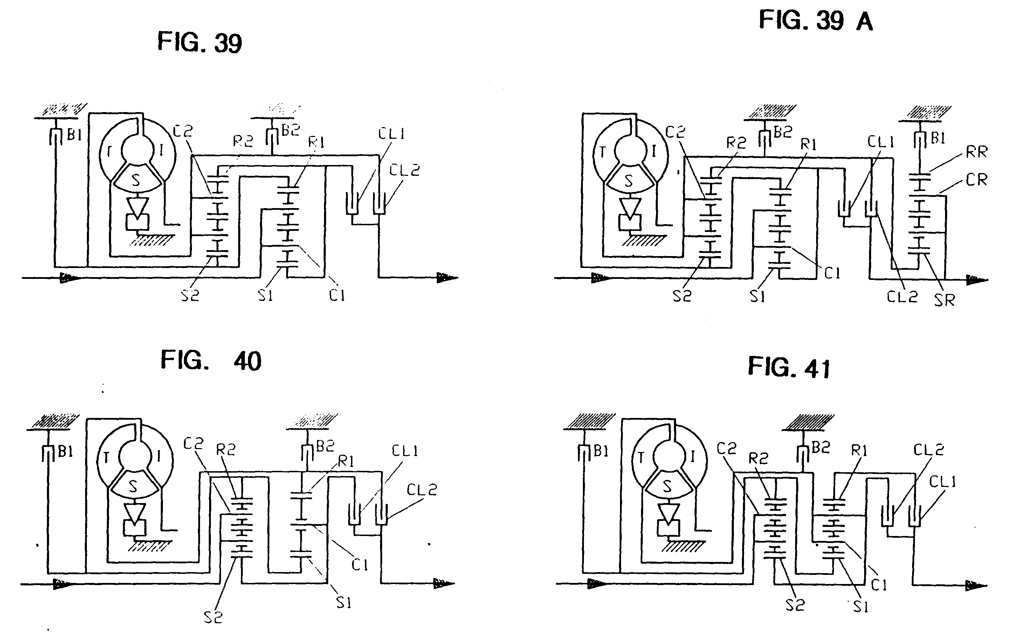

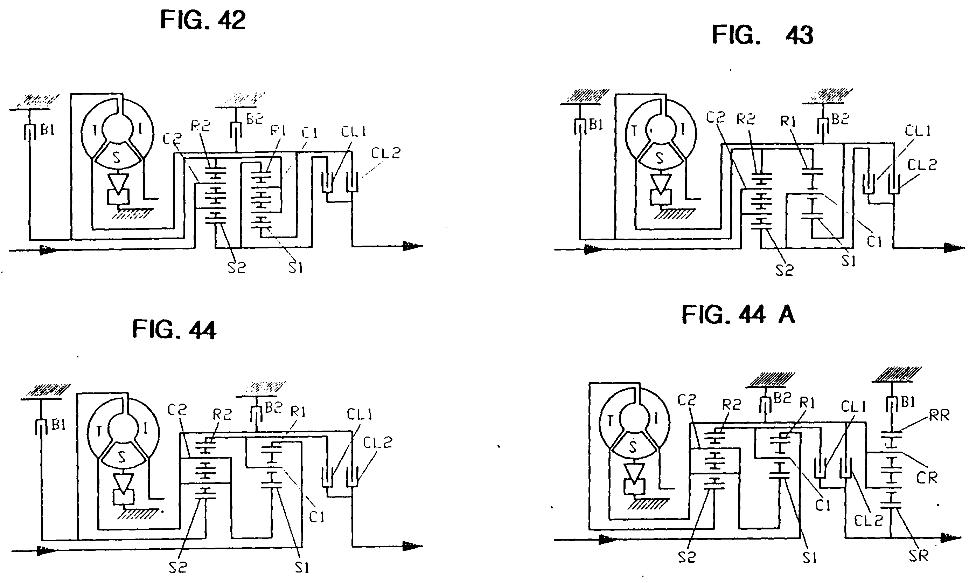

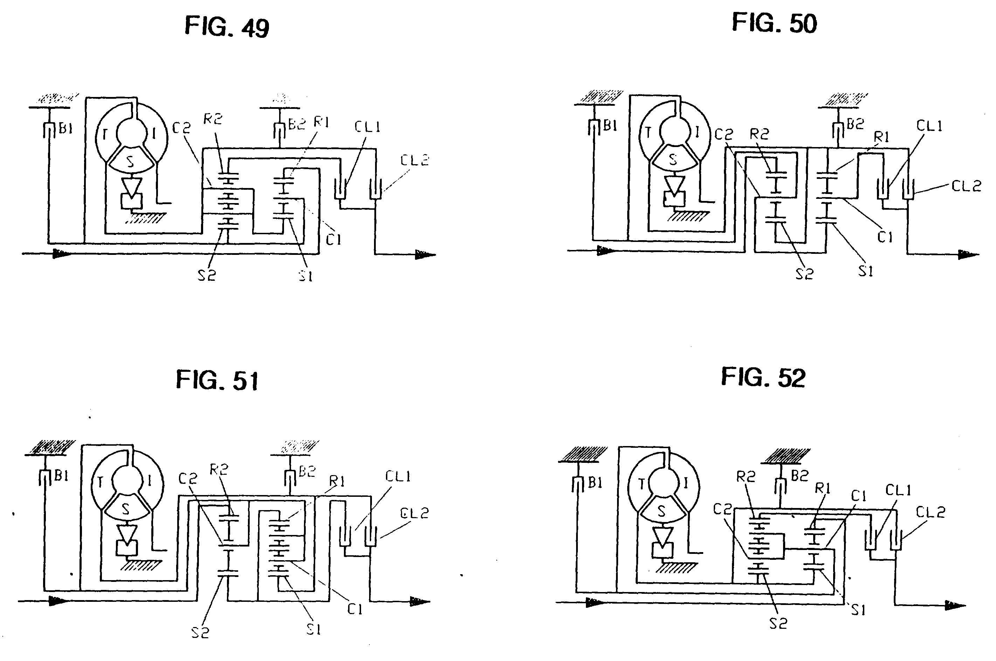

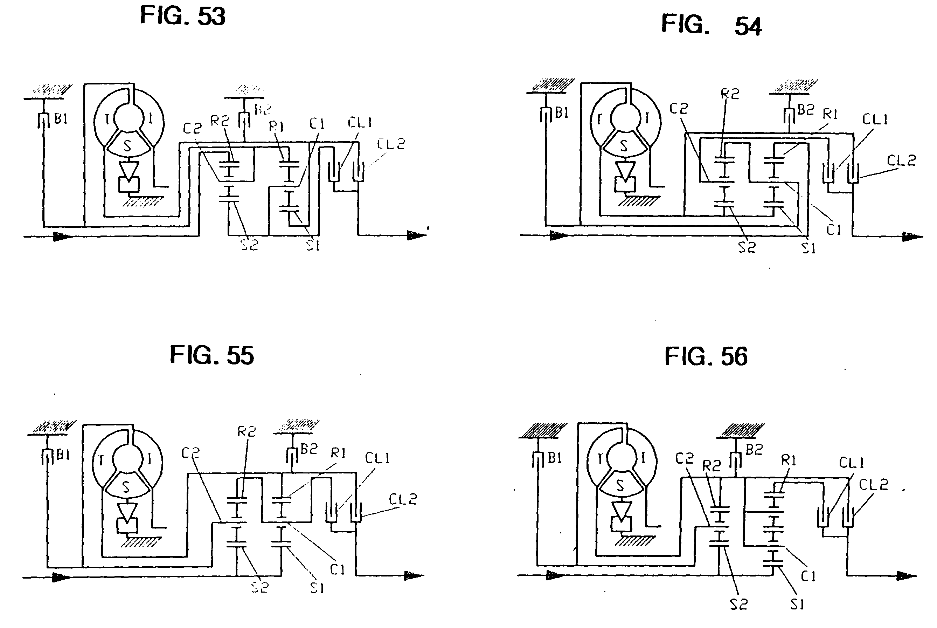

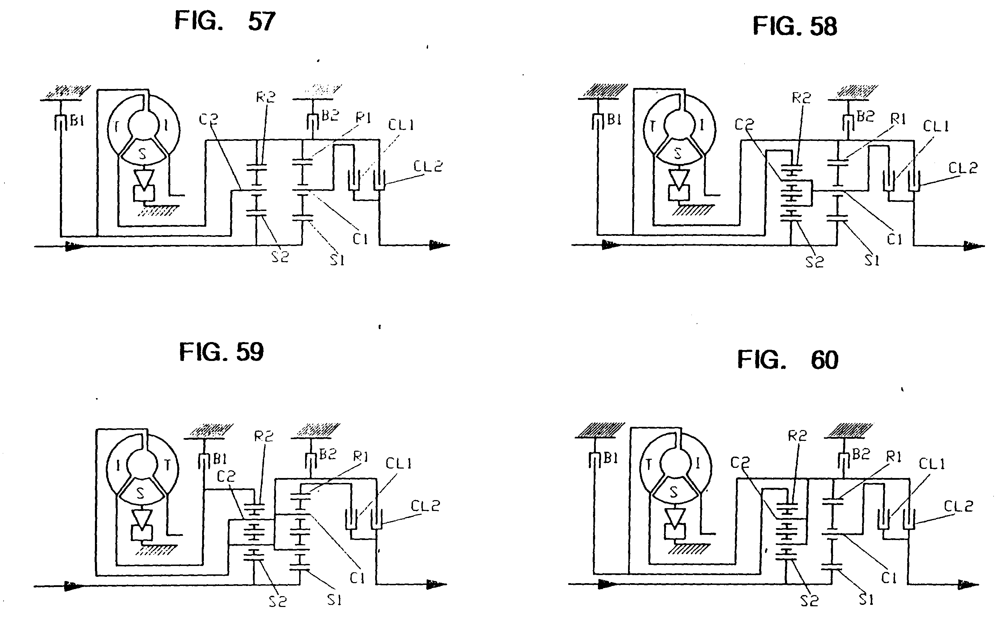

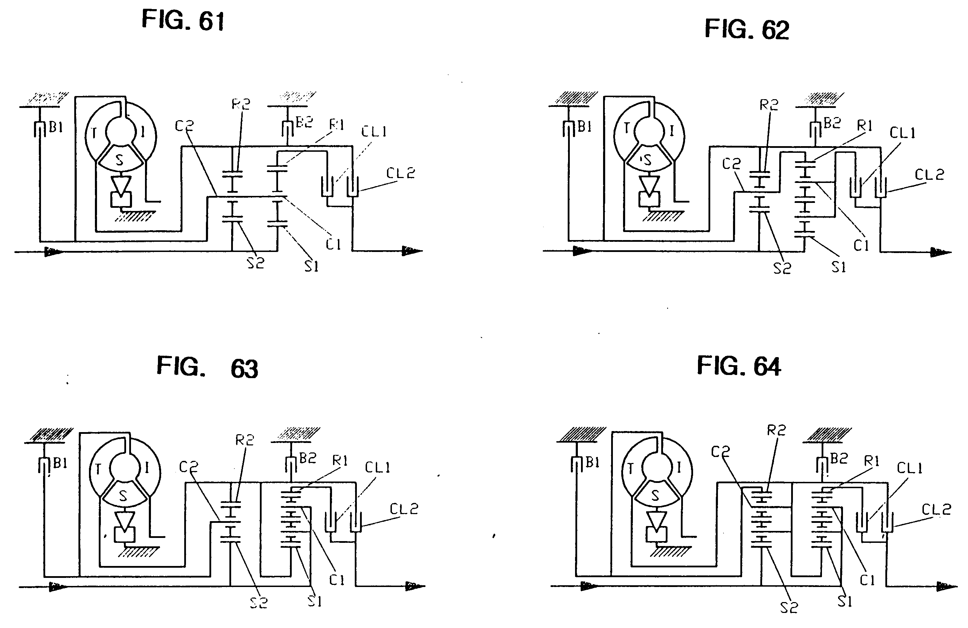

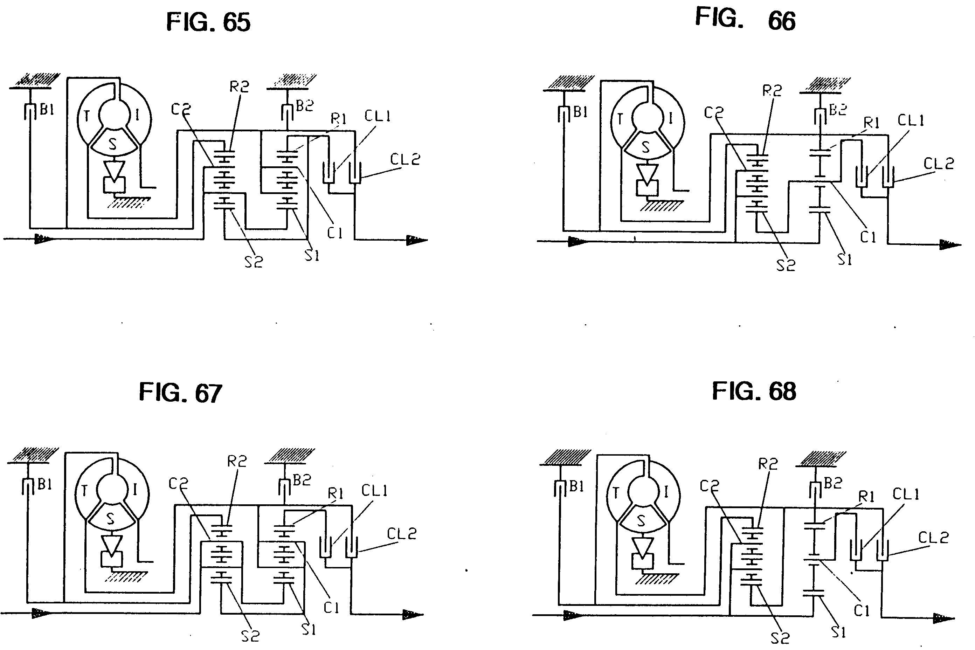

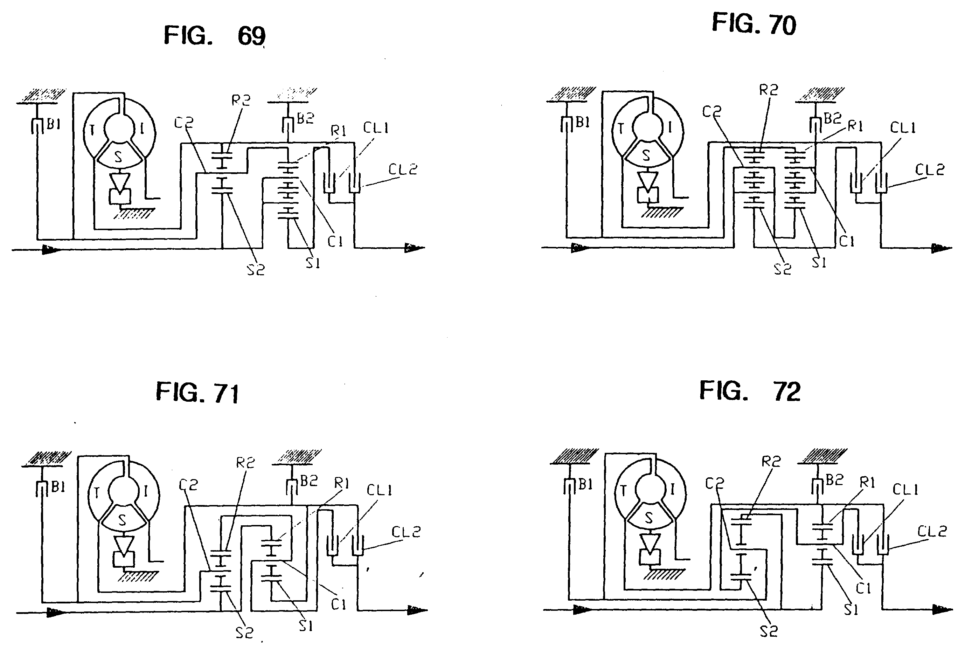

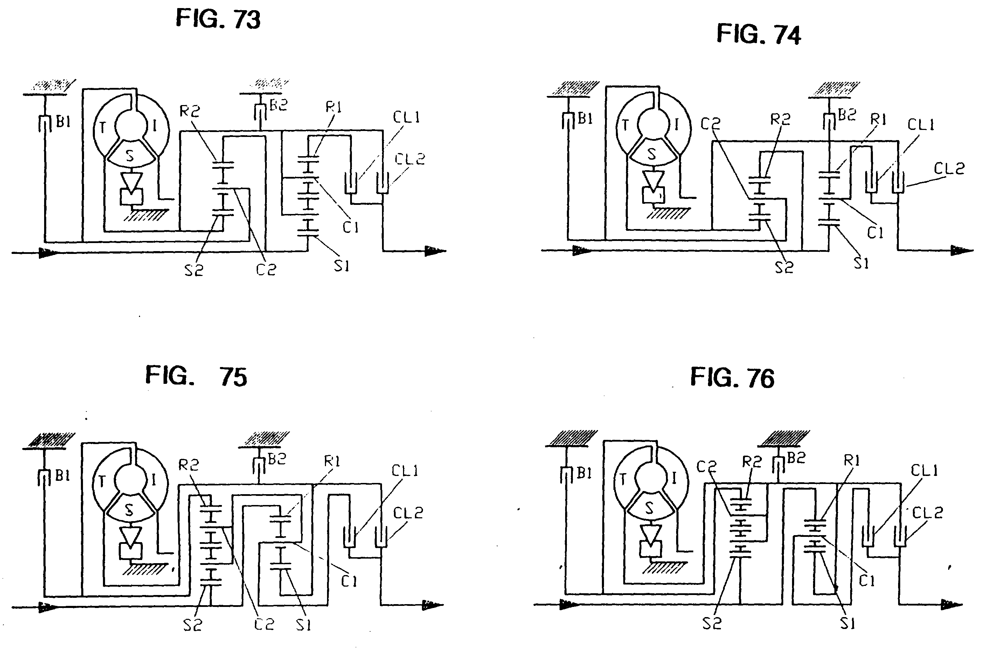

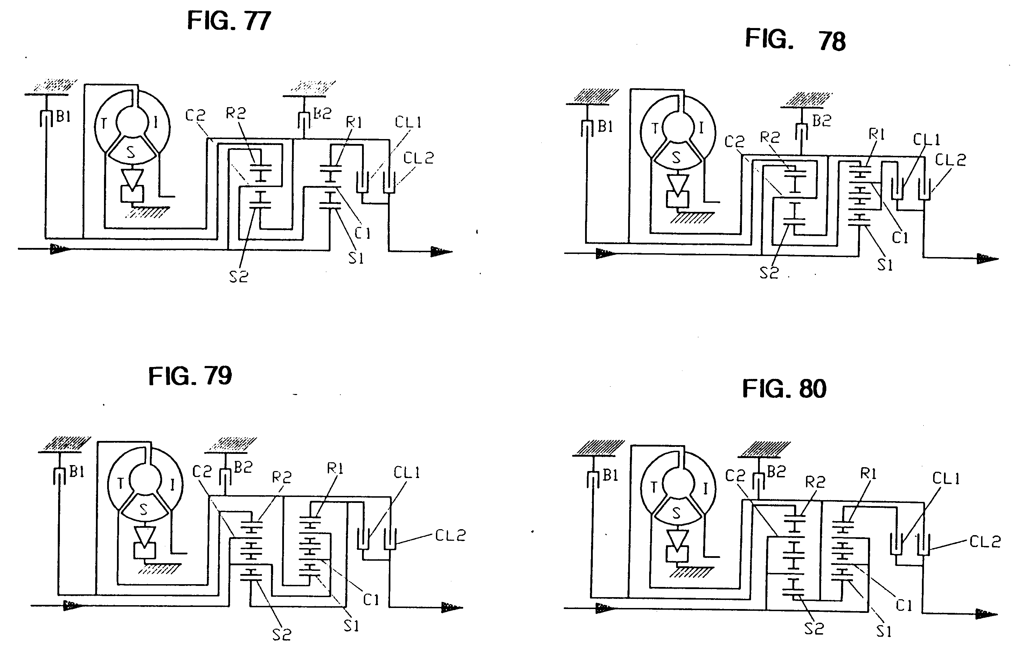

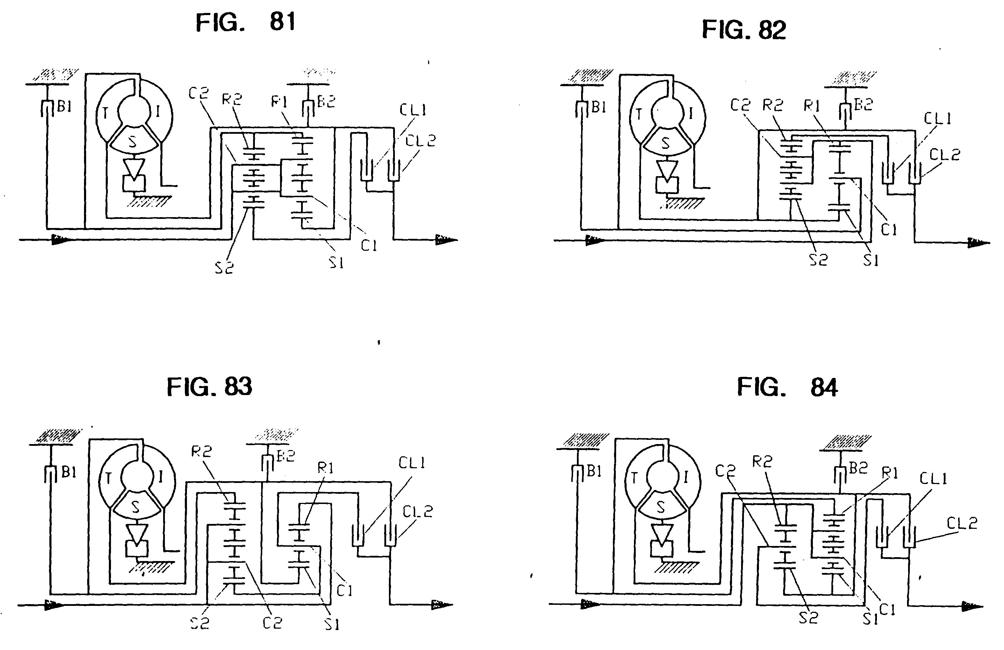

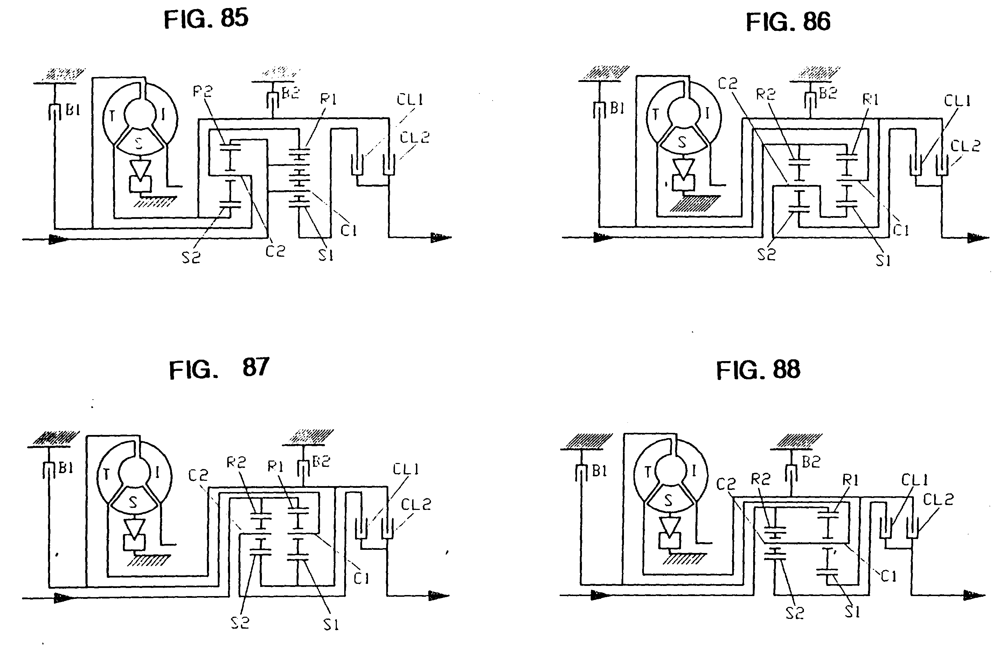

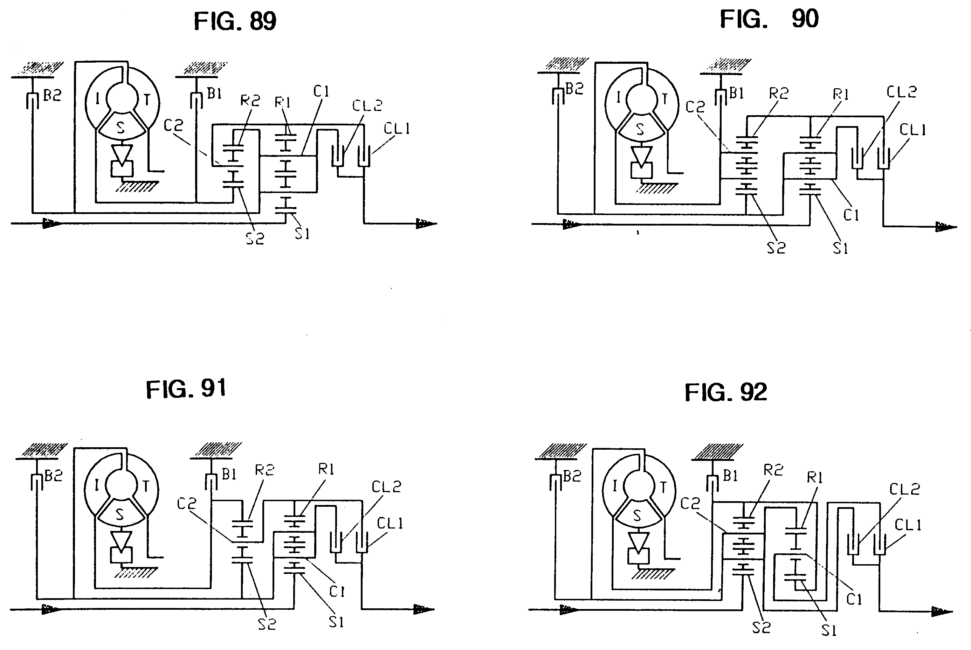

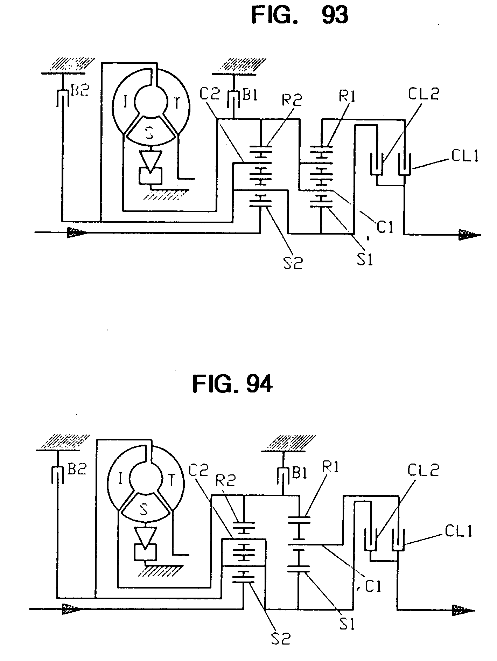

That is, the schematic drawings of the 2nd embodiment through the 75th embodiment are shown in Fig. 21 through Fig. 94, the construction to which the reverse rotation system RI in which the reverse rotation brake B1 is installed on the power line connected to the impeller I is combined is shown.

The utilization of the power mode clutch CL2 and fuel ratio mode clutch CL1 on the side of the output shaft in the 2nd embodiment through the 75th embodiment is same as in the first embodiment, and the construction in which the low speed brake B2 is installed on the power line connected to the turbine T and connected to the power mode clutch CL2 for transmission of power to the output shaft, the combination of the reverse rotation system RI in which the reverse rotation brake B1 is installed on the power line connected to the impeller I , and the combination of the reverse rotation system RII through RV between the speed change system and the output shaft are same as in the first embodiment.

Although the speed change system basically utilizes the planet gear set, there are differences in the method of input, the method of connecting the planet gear set to the impeller and turbine, the method of connecting the planet gear set to the power mode clutch CL2 and fuel ratio mode clutch CL1 and the method of combining the constituting elements. However, since the method of operation and the procedure of speed change are same as those of the first embodiment, each embodiment of the speed change system is shown in a table 1 together with a concurrent presentation of the corresponding figure.

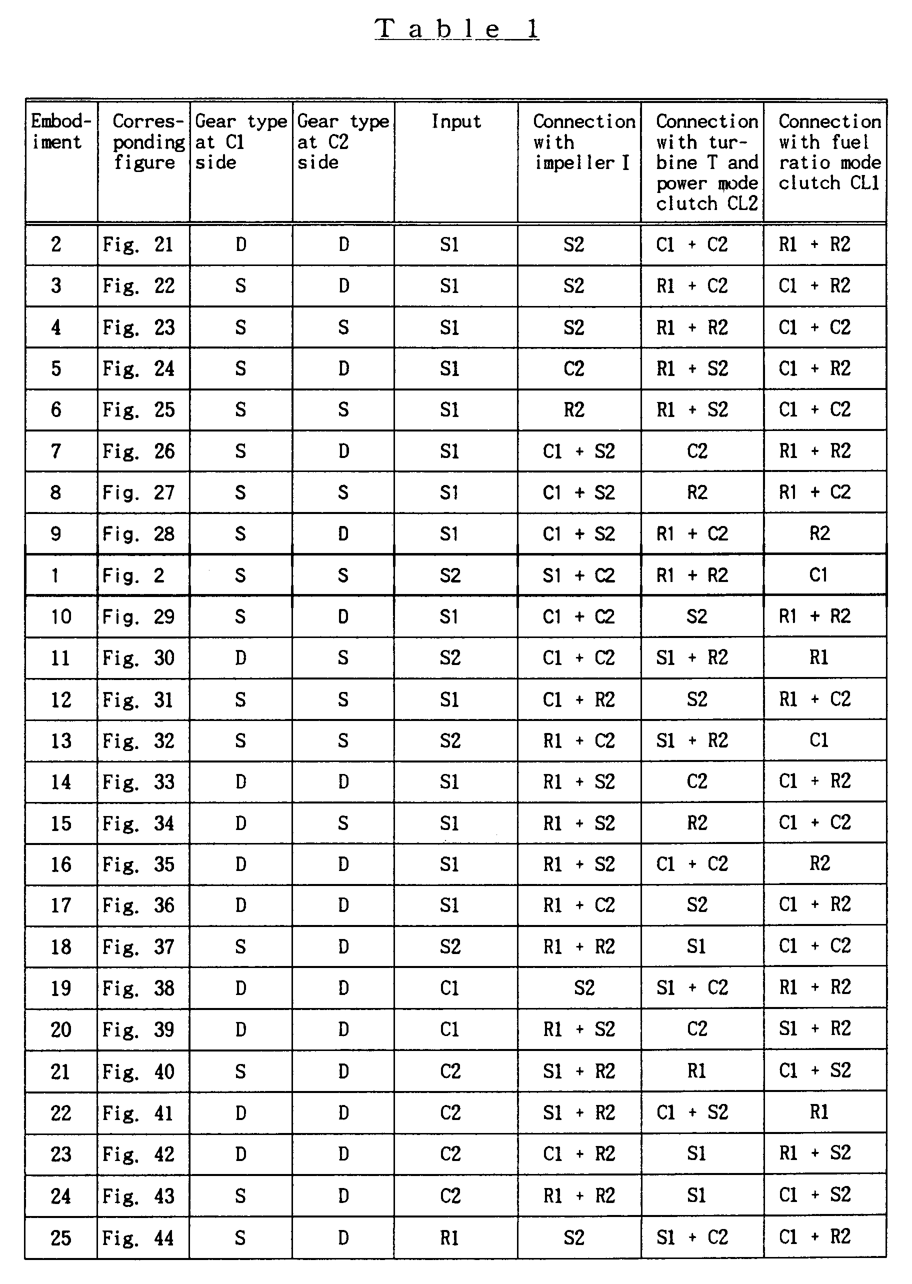

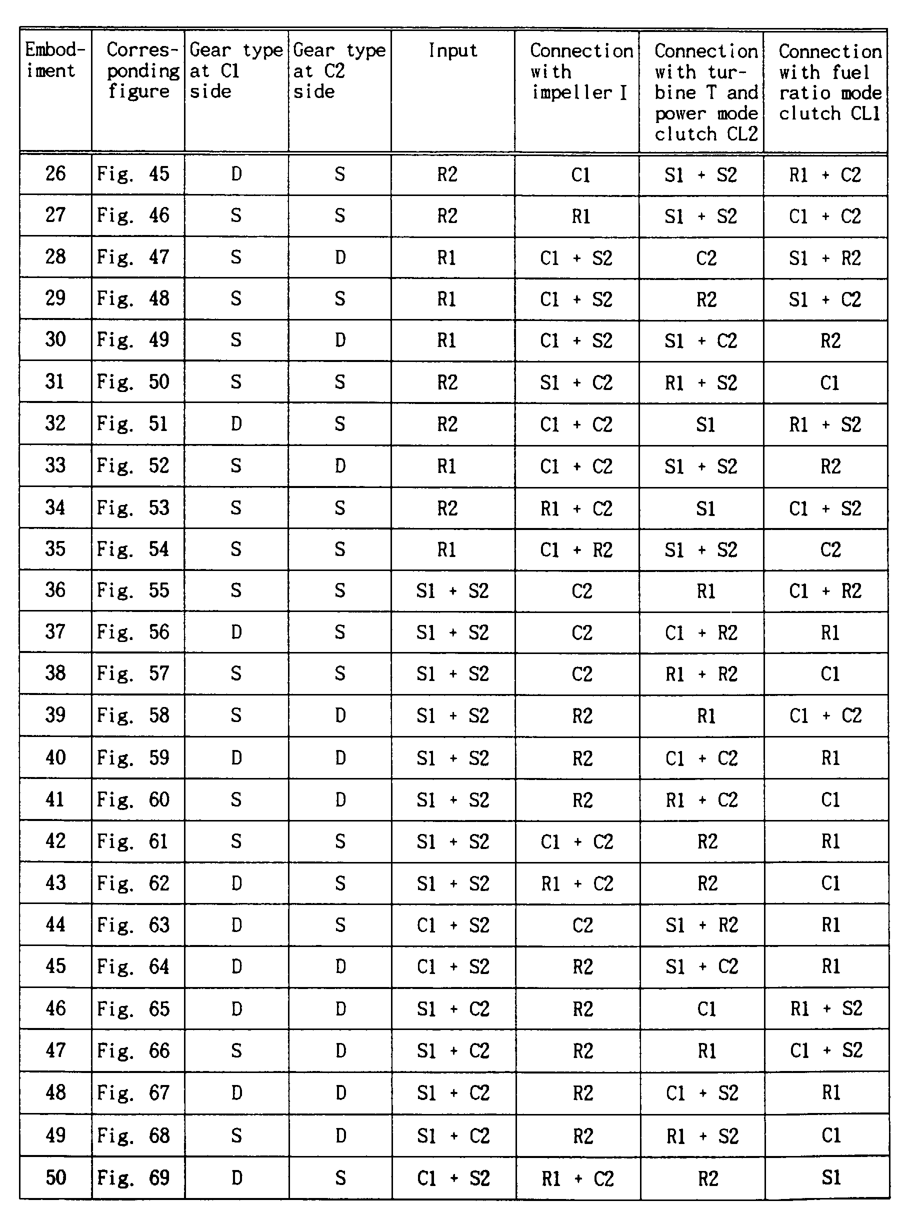

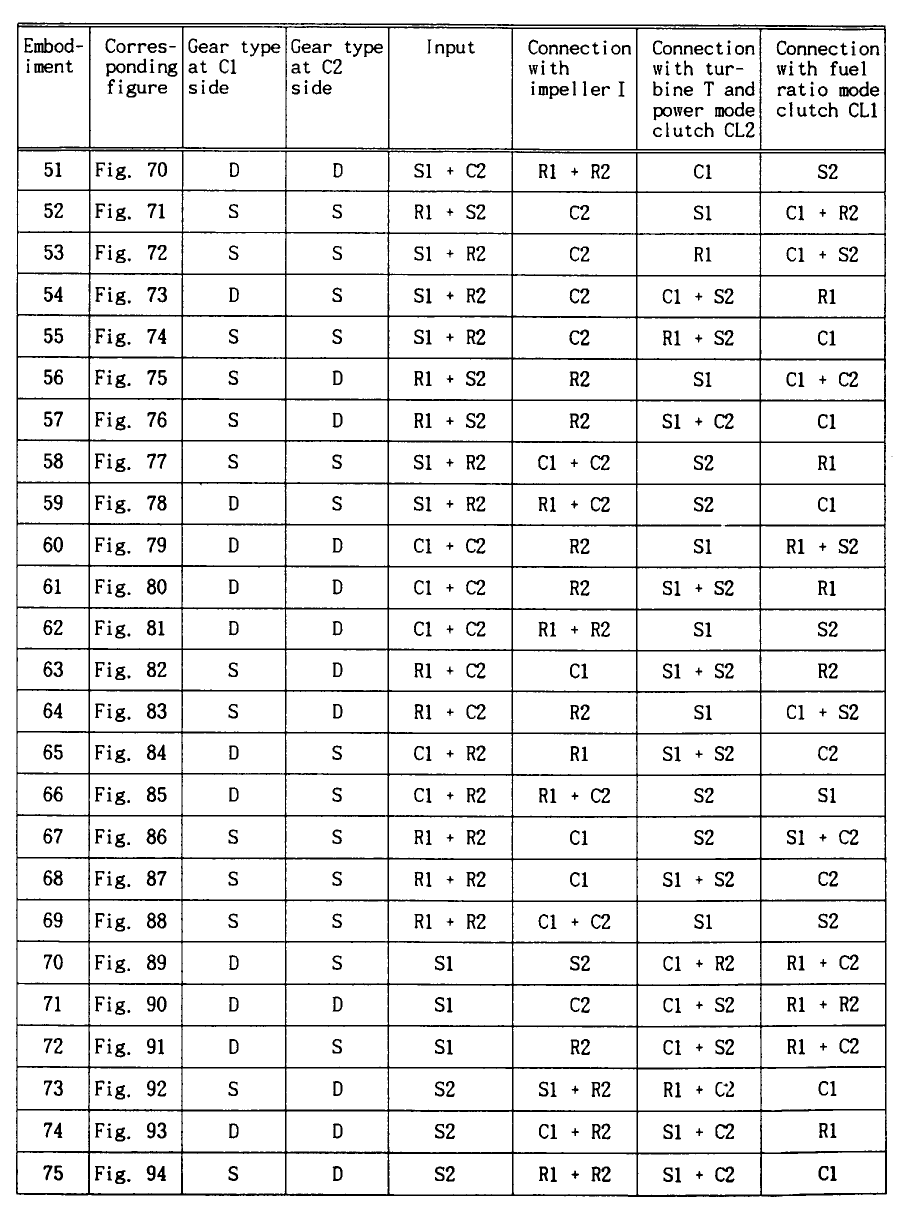

For reference, the symbol presentation of the main elements used in the table 1 and figures is described below.
- I :: impeller
- T :: turbine
- S :: stator
- B1 :: reverse rotation brake
- B2 :: low speed brake
- CL1 :: fuel ratio mode clutch
- CL2 :: power mode clutch
- S1 :: first sun gear
- S2 :: second sun gear
- C1 :: first carrier
- C2 :: second carrier
- R1 :: first ring gear
- R2 :: second ring gear
- S_{R} :: reverse rotation sun gear
- C_{R} :: reverse rotation carrier
- R_{R} :: reverse rotation ring gear

Here, the order of the reference numbers 1 and 2 of identical elements on the two sets of planet gear set having a carrier supporting a single (S) type planet gear or a double (D) type planet gear is determined as follows, that is, the right one is numbered as 1 and the left one is numbered as 2. A planet gear on the first carrier C1 is meshed with a first sun gear S1 and a first ring gear R1 respectively in the planet gear set of No. 1 group, and a planet gear on the second carrier C2 is meshed with a second sun gear S2 and a second ring gear R2 respectively in the planet gear set of No. 2 group. The planet gear set used in the reverse rotation system RII through RV is composed of the reverse rotation sun gear S_{R}, reverse rotation carrier C_{R} and reverse rotation ring gear R_{R}.

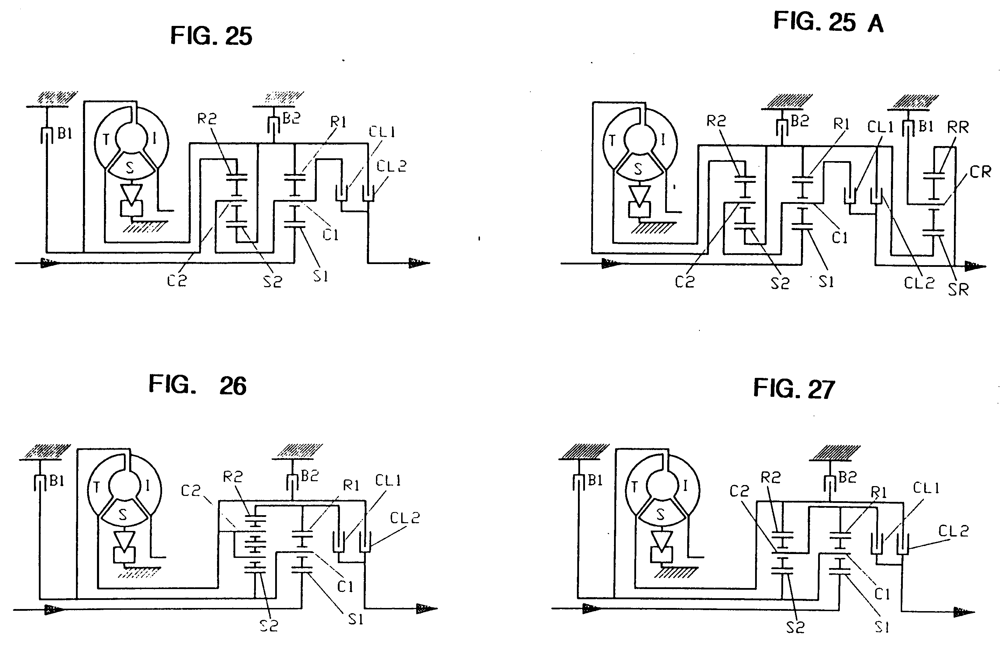

In the embodiments shown as examples in the table 1 above, the combinations of the reverse rotation system RI are all possible. The combinations of the reverse rotation system RII through RV are realized in the 1st embodiment through the 69th embodiment (Refer to Fig. 25A, Fig. 32A, Fig. 39A and Fig. 44A), but are not realized in the 70th embodiment through the 75th embodiment.

The position of the turbine T and the impeller I can be reversed in their lateral arrangement if required, and also, the position of the fuel ratio mode clutch CL1 and the power mode clutch CL2 can be reversed in their lateral arrangement.

Furthermore, in the present invention, various embodiments can be realized by providing the sun gear, the carrier supporting the planet gear and the ring gear and by appropriate combination between each element, proper selection of input element and method of establishing the gear ratio, and also the connection to the turbine, impeller, fuel ratio mode clutch, power mode clutch and low speed and reverse rotation brake can be varied, therefore, the scope of the present invention is not limited to the embodiments shown as examples.

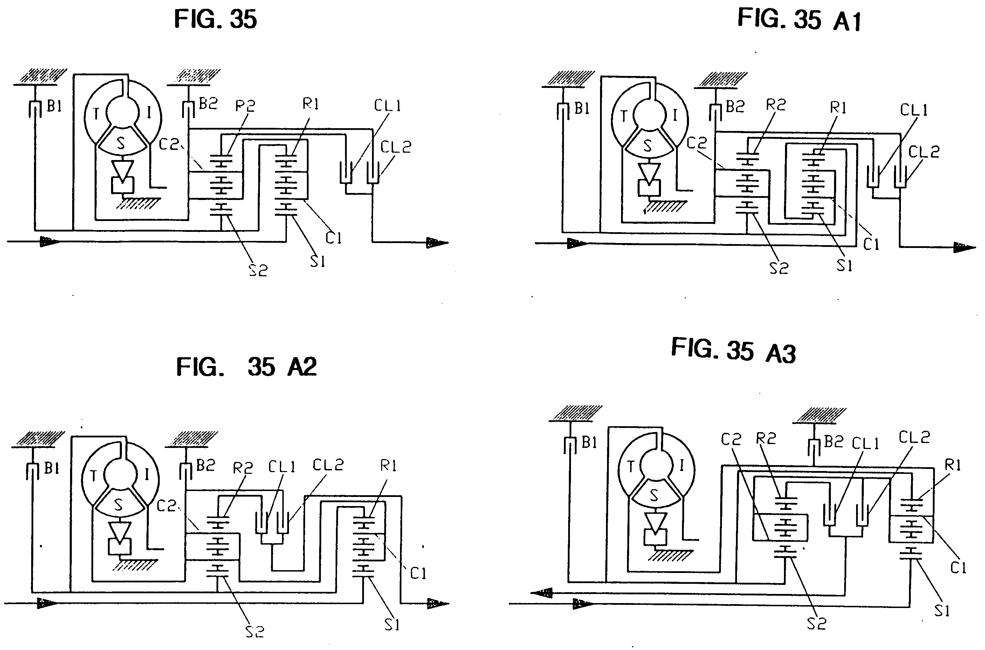

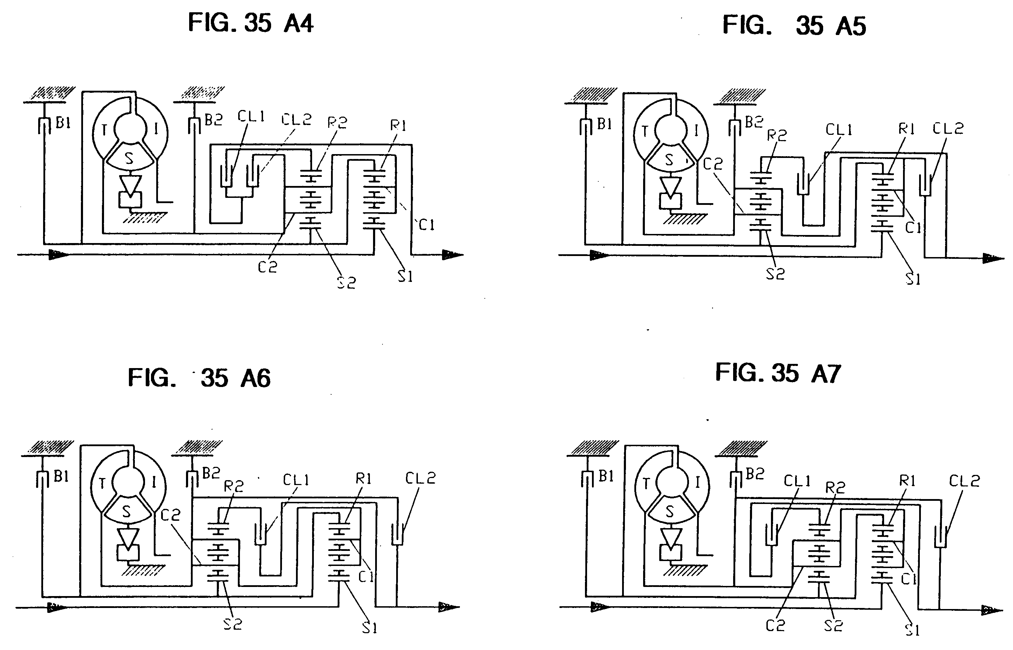

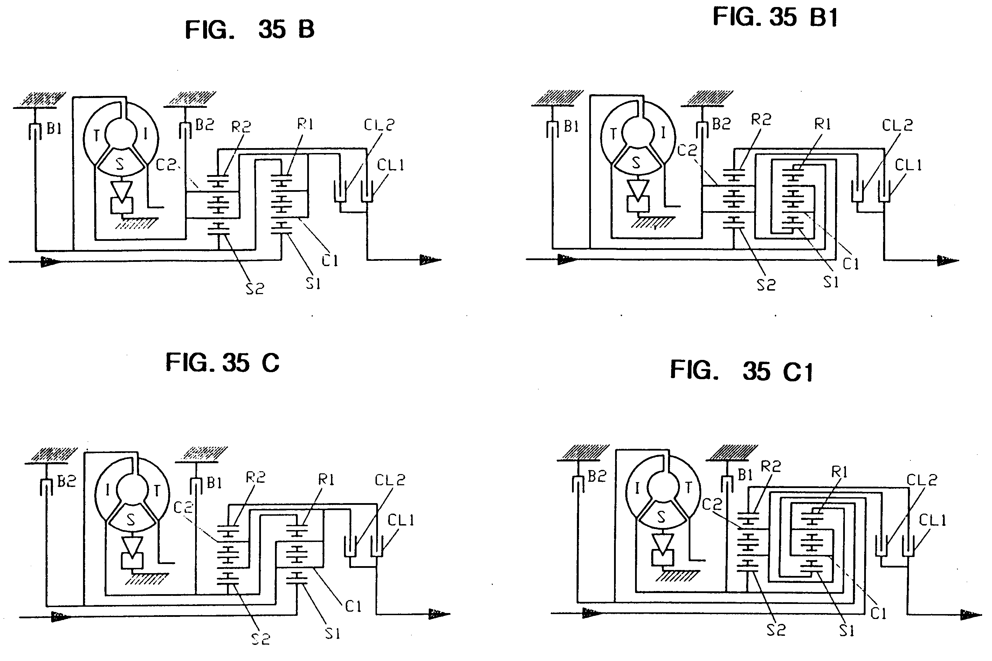

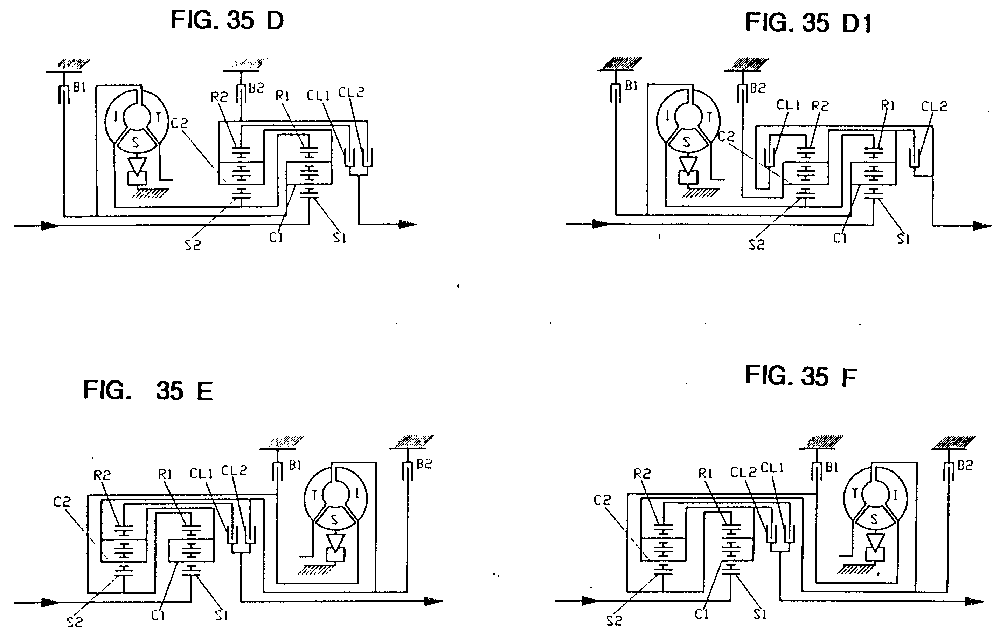

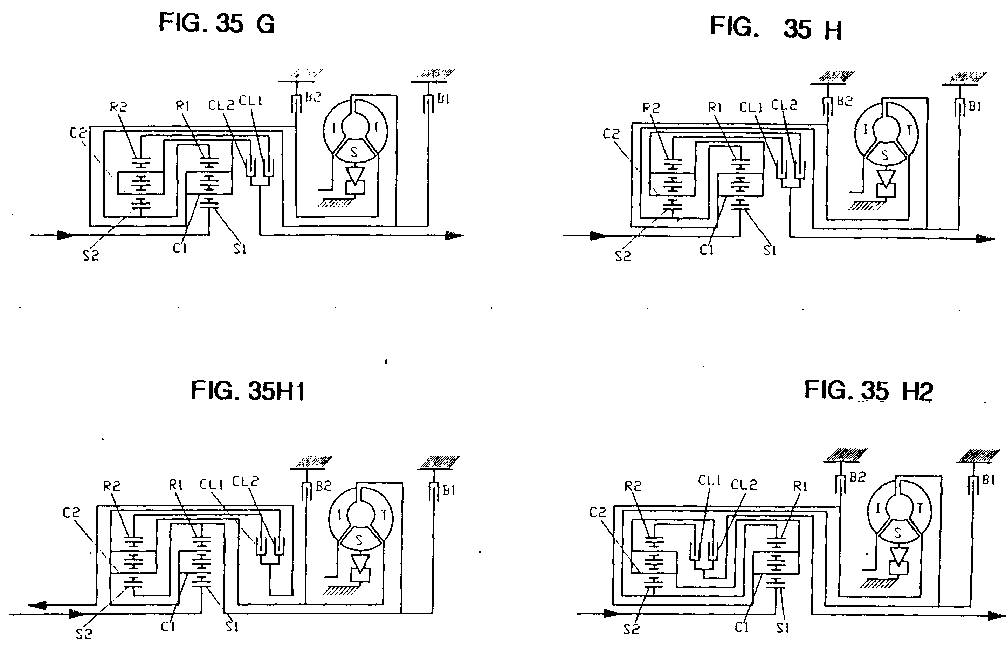

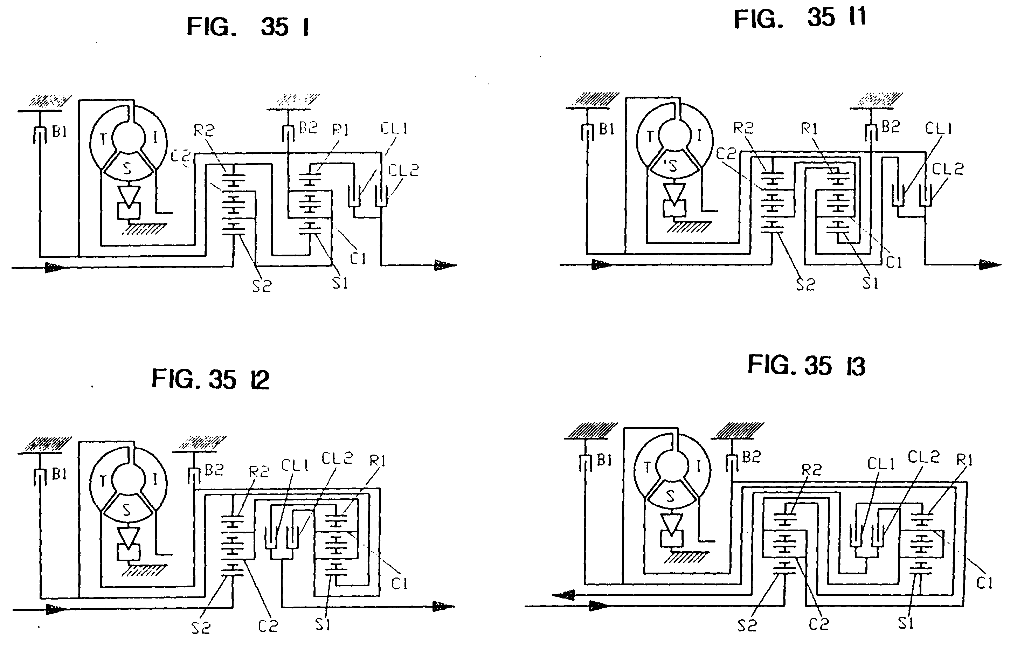

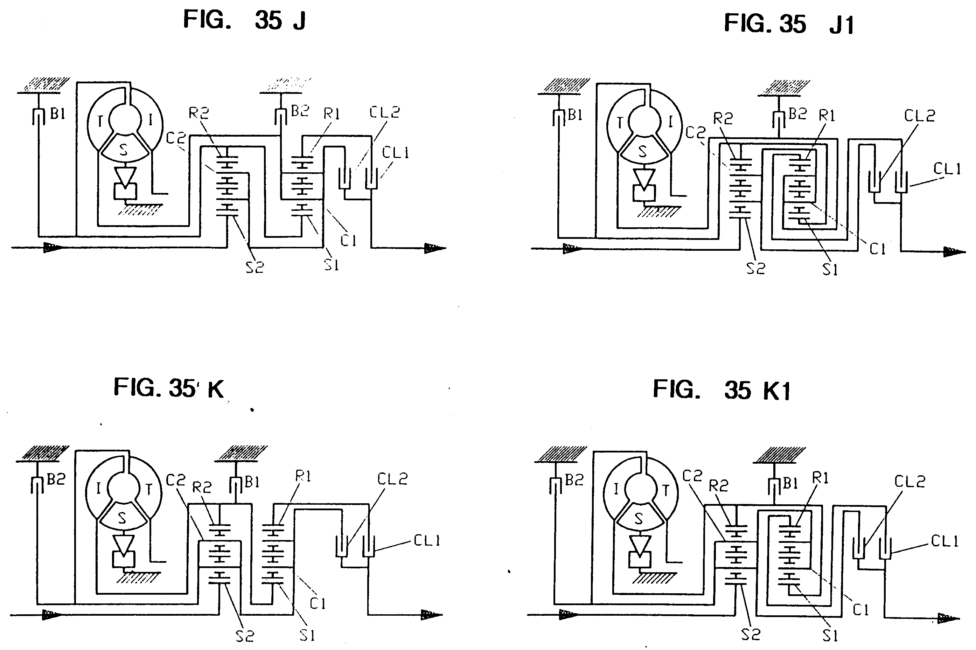

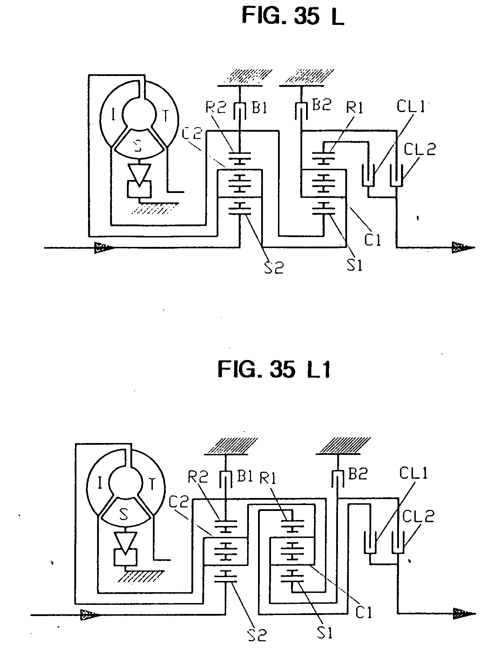

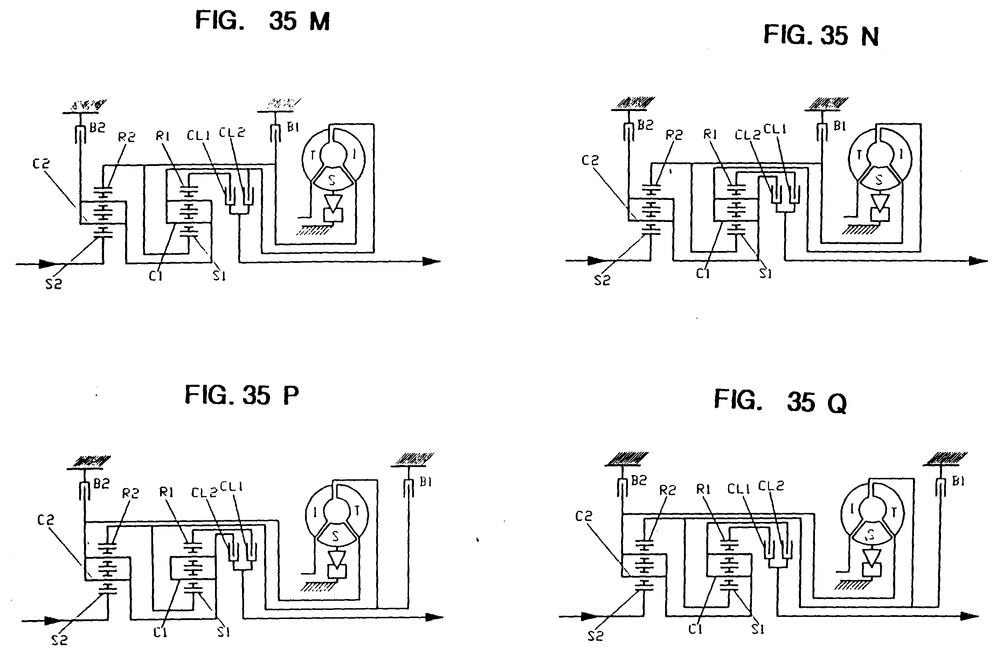

For example, the 16th embodiment (such construction is represented as (A)-(T)(I)-(CL1)(CL2)) is shown in Fig. 35 and the modified example of this construction is shown in Fig. 35A1. Here, the desired purpose can also be achieved with the construction in which fuel ratio mode clutch (CL1) and power mode clutch (CL2) are positioned between two planet gear sets as shown in Fig. 35A2, and also the output shaft can be located at the same side as the input shaft and thus the proceeding direction can be opposite to that of the input shaft as shown in Fig. 35A3. Also, the desired purpose can be achieved with the construction in which (CL1) and (CL2) are positioned in various ways as shown in Fig. 35A4, Fig. 35A5, Fig. 35A6 and Fig. 35A7. Here, the desired purpose can also be achieved with the construction in which the lateral arrangement of the turbine (T) and the impeller (I) is unchanged and the lateral arrangement of (CL1) and (CL2) is reversed, that is, the construction of (A)-(T)(I)-(CL2)(CL1), and the example of this construction is shown in Fig. 35B and the modified example thereof is shown in Fig. 35B1. Again, the desired purpose can be achieved with the construction in which the lateral arrangement of (CL2) and (CL1) is unchanged and the lateral arrangement of (T) and (I) is reversed, that is, the construction of (A)-(I)(T)-(CL2)(CL1), and the example thereof is shown in Fig. 35C and the modified example thereof is also shown in Fig. 35C1. Again, the example of the construction in which the lateral arrangement of (I) and (T) is unchanged and the lateral arrangement of (CL2) and (CL1) is revered, that is, the construction of (A)-(I)(T)-(CL1)(CL2) is shown in Fig. 35D and the modified example thereof is shown in Fig. 35D1.

Next, (T) and (I) can be located at the side of the output shaft and an example of such construction of (A)-(CL1)(CL2)-(T)(I) is shown in Fig. 35E. Here, the example of the construction in which the lateral arrangement of (T) and (I) is unchanged and the lateral arrangement of (CL1) and (CL2) is reversed, that is, the construction of (A)-(CL2)(CL1)-(T)(I) is shown in Fig. 35F. Again, the example of the construction in which the lateral arrangement of (CL2) and (CL1) is unchanged and the lateral arrangement of (T) and (I) are reversed, that is, the construction of (A)-(CL2)(CL1)-(I)(T) is shown in Fig. 35G, and again, the example of the construction in which the lateral arrangement of (I) and (T) is unchanged and the lateral arrangement of (CL2) and (CL1) is reversed, that is, the construction of (A)-(CL1)(CL2)-(I)(T) is showin in Fig. 35H. In addition, the output shaft can be located at the same side as the input shaft and thus the proceeding direction can be opposite to that of the input shaft as showin in Fig. 35H1. Also, (CL1) and (CL2) can be positioned between two planet gear sets as shown in Fig. 35H2.

Furthermore, even if the input element is changed considering the symmetry of the input element, the desired purpose can also be achieved. That is, the example of the construction of (B)-(T)(I)-(CL1)(CL2) in which the input element is changed considering the symmetry in 16th embodiment is shown in Fig. 35I and the modified example thereof is shown in Fig. 35I1. Here, the desired purpose can be achieved even when (CL1) and (CL2) are positioned between two planet gear sets as shown in Fig. 35I2, and in addition, the output shaft can be located at the same side as the input shaft and thus the proceeding direction can be opposite to that of the input shaft as shown in Fig. 35I3. Here, the example of the construction in which the lateral arrangement of (T) and (I) is unchanged and the lateral arrangement of (CL1) and (CL2) is reversed, that is, the construction of (B)-(T)(I)-(CL2)(CL1) is shown in Fig. 35J and the modified example thereof is also shown in Fig. 35J1. Here, the desired purpose can be achieved with the construction in which the lateral arrangement of (CL2) and (CL1) is unchanged and the lateral arrangement of (T) and (I) is reversed, that is, the construction of (B)-(I)(T)-(CL2)(CL1) and an example thereof are shown in Fig. 35K and a modified example thereof is also shown in Fig. 35K1. Again, the example of the construction in which the lateral arrangement of (I) and (T) is unchanged and the lateral arrangement of (CL2) and (CL1) is reversed, that is, the construction of (B)-(I)(T)-(CL1)(CL2) is shown in Fig. 35L and the modified example thereof is shown in Fig. 35L1.

Next, (T) and (I) can be located at the side of the output shaft and the example of such construction of (B)-(CL1)(CL2)-(T)(I) is shown in Fig. 35M. Here, the example of the construction in which the lateral arrangement of (T) and (I) is unchanged and the lateral arrangement of (CL1) and (CL2) is reversed, that is, the construction of (B)-(CL2)(CL1)-(T)(I) is shown in Fig. 35N. Again, the example of the construction in which the lateral arrangement of (CL2) and (CL1) is unchanged and the lateral arrangement of (T) and (I) is reversed, that is, the construction of (B)-(CL2)(CL1)-(I)(T) is shown in Fig. 35P, and again, the example of the construction in which the lateral arrangement of (I) and (T) is unchanged and the lateral arrangement of (CL2) and (CL1) is reversed, that is, the construction of (B)-(CL1)(CL2)-(I)(T) is shown in Fig. 35Q.

As described above, in the present invention, on the basis of the embodiment shown as an example, not only the input element can be changed, but also the connection of the turbine, impeller, fuel ratio mode clutch and power mode clutch can be changed if desired, and of course, the operation varies when the input element, (T)(I) and (CL1)(CL2) are changed according to the characteristics of each embodiment. Although each of such probable examples is not specifically described in the present specification, such probable examples naturally fall within the scope of the present invention in view of the tenor of the present invention.

Although the gear ratio between the sun gear and ring gear is not described in the claims, since the embodiments of the present invention can be fully understood in view of the operation principle of the present invention or with reference to the drawings if required, it is natural that the omission of the description of the gear ratio does not limit the scope of the present invention.

It is obvious that the continuously variable transmission of the present invention is not limited to the present embodiments but can be applied to all apparatuses which can speed-change the driving force and output it to the output shaft in all vehicles and industrial machines based on the tenor of the present invention, and that various modification, alteration and deletion can be made in the scope of the present invention.

That is, it can be seen that, in the present invention, if the low speed brake and fuel ratio mode clutch are removed, a completely stepless speed change can be accomplished which does not need the low speed mode based on the fixed ratio, and if the reverse rotation system is combined thereto, the reverse rotation operation can be effectuated. In addition, since the operation procedure and condition according to the above construction is the same except the operation condition due to the low speed brake and fuel ratio mode clutch, even if the detailed description thereof is omitted, one skilled in the art can easily understand it. Therefore, it is obvious that the embodiments operable with the construction based on the above described tenor fall within the scope of the present invention. Of course, in the construction where the low speed brake is omitted, two clutches or no clutch and a reverse rotation system can be combined to the construction. In addition, in the construction having a low speed brake, the construction can have only one clutch or no clutch and the reverse rotation system can be combined to the construction.

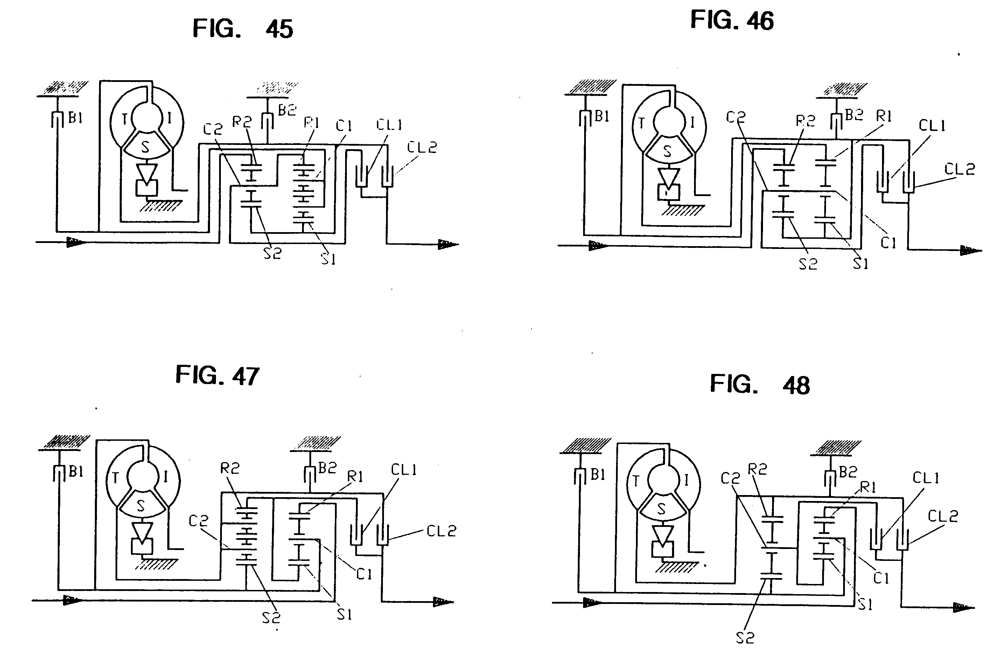

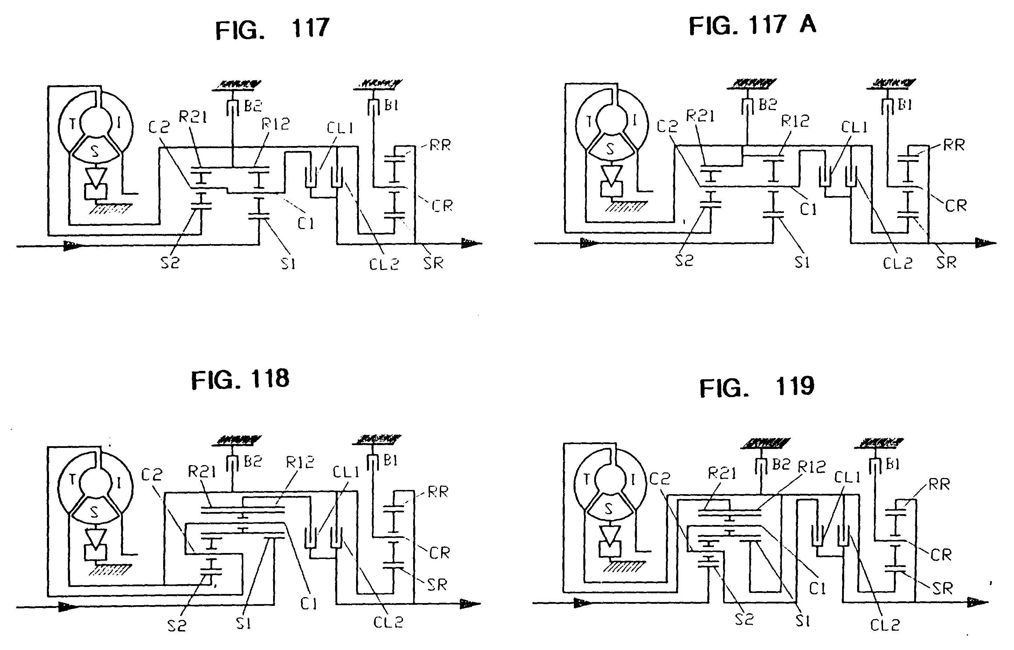

As an example of modification or alteration, the construction of the speed change system can be simplified by integrating planet gears, sun gears, ring gears, or carriers, among two planet gear sets of the speed change system, that is, same elements among the planet gear sets of group 1 and 2. For example, there are cases of integrating planet gears (as shown Fig. 95), of integrating ring gears (from Fig. 23 into Fig. 117 or Fig. 117A), and of integrating sun gears (from Fig. 46 to Fig. 120). Of course, the operational principle thereof is identical, however, a detailed description is given to help understand it.

For convenience of explanation, a case of integrating the planet gears among the same elements of two groups is given as an example and it is referred to as the 76th embodiment 700. Of course, the construction of the speed change control system is the same as the first embodiment, however, reference number 610 is designated for convenience of explanation, and in addition, reference number 710 is designated to the speed change system, and reference number 740 is designated to the reverse rotation brake of the reverse rotation system RI.

Below, the 76th embodiment 700 of the present invention composed of the speed change controlling system 610, the speed change system 710 and a reverse rotation system RI ^{∼} RV connected thereto is described in detail with reference to the accompanying drawings.

### Speed Change Controlling System 610

As shown in Fig. 95, a hollow connecting shaft 614 is coaxially installed on an input shaft 612, and a hollow control shaft 616 is coaxially installed on the connecting shaft 614. The impeller housing 618 is integrally formed with the connecting shaft 614, and an impeller 620 is integrally formed with the impeller housing 618. A turbine 622, facing the impeller 620, is integrated with the control shaft 616, a stator 624 is placed between the impeller 620 and the turbine 622, a hollow fixed shaft 626 is coaxially installed on the control shaft inside of the stator, and a one-way clutch 628 is inserted between the stator 624 and the fixed shaft 626 to prevent a reverse rotation of the stator 624.

### Speed Change System 710

In the speed change system 710 of the 76th embodiment of the present invention, as shown in Fig. 95, an input sun gear 712 is integrally formed with the input shaft 612 into which the power of the engine is inputted. A first planet gear 714 is meshed with the outside of the input sun gear 712, and a second planet gear 716 is integrally formed with the first planet gear 714. The first planet gear 714 and the second planet gear 716 are installed in output carriers 718, 720 so as to rotate freely. A control sun gear 722, which is integrally formed with the connecting shaft 614, is meshed with the second planet gear 716. A forward rotation ring gear 724 is meshed with the outside of the first planet gear 714, and the forward rotation ring gear 724 is integrally connected to the control shaft 616 of the speed change controlling system 610.

On the other hand, the output shaft 726 is coaxially installed with the input shaft 612. A power mode clutch 728 is installed between the output shaft 726 and the forward rotation ring gear 724 so that the output shaft 726 and the forward rotation ring gear 724 can be connected when the power mode clutch 728 is actuated, and a fuel ratio mode clutch 732 is installed between the output shaft 726 and the output carriers 718, 720 so that the output shaft 726 and the output carriers 718, 720 can be connected when the fuel ratio mode clutch 732 is actuated. A low speed brake 736 is installed on the outside of the forward rotation ring gear 724.

### Reverse Rotation System (RI ^{∼} RV)

As shown in Fig. 95, in the reverse rotation system RI, a reverse rotation brake 740 is installed on the connecting shaft 614 integrally formed with the control sun gear 722 of the speed change system 710.

The constructions of the reverse rotation system RII ^{∼} RV are identical with those of the above described embodiments (the 1st to the 75th embodiments), and therefore a description thereof is omitted.

Althouth the operating method for each forward rotation state of the continuously variable transmission of the 76th embodiment is identical to that of the above described embodiments, it is described again below.

### First, Power Mode

This is the case when the power mode clutch 728 connected to the output shaft 726 is actuated. In the condition in which the forward rotation ring gear 724 and the turbine 622 are stopped by the load applied to the output shaft 726 due to the actuation of the power mode clutch 728, the rotational force inputted through the input sun gear 712 is transmitted to the first planet gear 714 and also transmitted the second planet gear 716 integrally formed with the first planet gear 714. The rotation transmitted to the second planet gear 716 decelerate the control sun gear 722 meshed with the inside of second planet gear 716. This decelerated rotation is transmitted to the impeller 620 through the connecting shaft 614 connected to the control sun gear 722. A difference in rotation occurs due to the rotational force applied to the impeller 620 since the turbine 622 is in stationary condition, and the increase in the rotational force, which is a function the conventional torque converter has, is effectuated by the difference in the rotation, so that the rotational force is applied to the turbine.

When the output shaft 726 is rotated, the load is reduced, and the resistance of the impeller 620 and the turbine 622 is decreased to obtain an equilibrium condition, the rotational ratio of the impeller 620 and the turbine 622 shall be 1:1, however, since 100% efficiency can not be obtained due to oil slippage, a lock-up clutch is additionally installed in the conventional torque converter. However, in the present invention, the lock-up function is performed by a concurrent actuation of the power mode clutch 728 and fuel ratio mode clutch 732 of simple construction (the lock-up function means integrally connecting the impeller and turbine).

### Second, Normal Operation Mode

This is the case when the power mode clutch 728 and fuel ratio mode clutch 732 connected to the output shaft 726 are concurrently used. If only the fuel ratio mode clutch 732 is used, the rotation of the turbine 622, opposite to that of the impeller 620, is initially increased, so that constant value can not be obtained in the characteristics of the torque converter and the efficiency is not good, therefore, the power mode clutch 728 is used at the initial starting, and when the rotational ratio of the impeller 620 and the turbine 622 reach a constant ratio, the power mode clutch 728 is released and the fuel ratio mode clutch 732 is actuated.

In the condition where the forward rotation ring gear 724 is stopped due to the actuation of the power mode clutch 728 and also the turbine 622, connected to the control shaft 616, is stopped, the rotational force inputted through the input sun gear 712 decelerates the output carriers 718, 720 through the first planet gear 714, and also decelerate the control sun gear 722 through the second planet gear 716. The decelerated rotation is transmitted to the impeller 620 through the connecting shaft 614. A difference in rotation occurs due to the rotational force applied to the impeller 620 since the turbine 622 is in a stationary condition, and the increase in the rotational force, which is a function the conventional torque converter has, is effectuated by the difference in the rotation, so that the rotational force is applied to the turbine. If the rotational ratio of the impeller 620 and the turbine 622 is decreased upon rotation of the turbine 622 and reaches a constant ratio, the power mode clutch 728 is released and the fuel ratio mode clutch 732 is actuated.

When the difference in rotation occurs again between the impeller 620 and the turbine 622 by the actuation of the fuel ratio mode clutch 732, and the load is decreased upon rotation of the output shaft 726, thus the resistance of the impeller 620 and the turbine 622 is decreased to obtain an equilibrium condition, the rotational ratio of the impeller 620 and the turbine 622 becomes 1:1. The lock-up function is as described in the power mode.

### Third, Low Speed Mode

This is the case when the low speed brake 736 installed outside of the forward rotation ring gear 724 and the fuel ratio mode clutch 732 are concurrently actuated. Since the forward rotation ring gear 724 is stopped by the low speed brake 736, the rotational force transmitted through the input sun gear 712 decelerates the output carriers 718, 720 through the first planet gear 714, and the decelerated rotation drives the output shaft 726 at a constant deceleration ratio through the fuel ratio clutch 732 installed between the output carriers 718, 720 and the output shaft 726.

Although the operation methods and the power transmission process according thereto for each speed change state (neutral, forward, and reverse rotation) of the continuously variable transmission of the 76th embodiment are identical to those of the previous embodiments, they are described again below.

Here, the operation methods for the neutral and the forward rotation states are described by an example of construction to which the reverse rotation system RI is combined.

### I. Neutral State (Fig. 100) : Output shaft 726 stopped

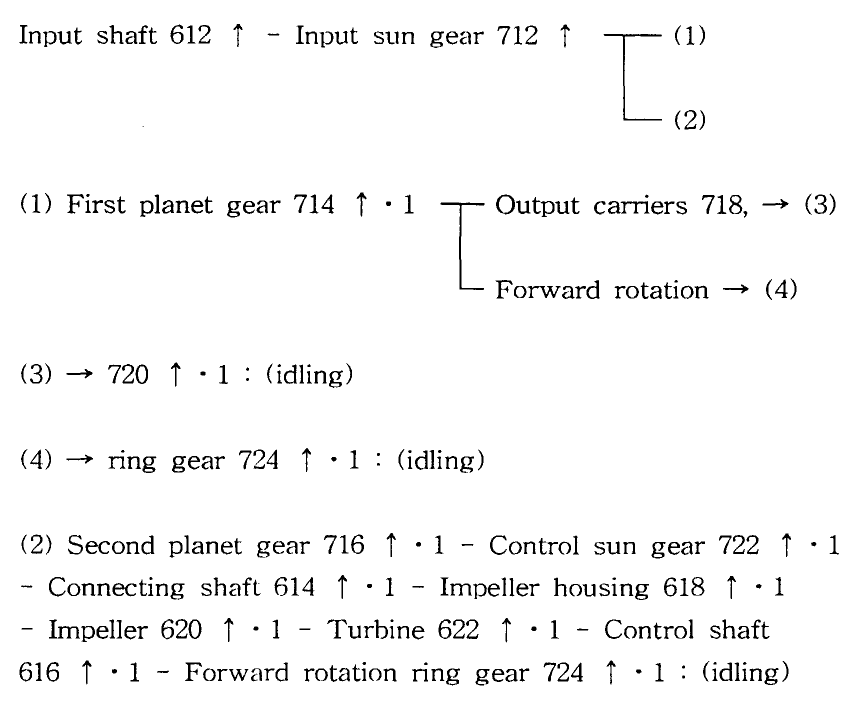

The neutral state is a state in which the power mode clutch 728, fuel ratio mode clutch 732, low speed brake 736 and reverse rotation brake 740 are concurrently released, the power of the engine can not rotate the output shaft 726, and the system is idling as shown in Fig. 100.

That is, it is the state in which the power transmission between the speed change system 710 and the output shaft 726 is disconnected by releasing the power mode clutch 728 and fuel ratio mode clutch 732 connected to the output shaft 726.

For reference, reviewing the state of the speed change system and speed change controlling system, the input shaft 612 rotates upon the input of the power of the engine, the input sun gear 712, integrally formed with the input shaft 612, also rotates in direction A, the same as that of the input shaft 612, and finally the first planet gear 714, meshed with the input sun gear 712, rotates in direction A, the same as that of the input sun gear 712. By the rotation of the first planet gear 714, the second planet gear 716, integrally formed with the first planet gear 714, is eventually rotated in direction A. The output carriers 718, 720 are also rotated in direction A by the rotation of the first planet gear 714 and the second planet gear 716, idle due to the release of the fuel ratio mode clutch 732 installed on the output shaft 726.

The control sun gear 722, meshed with the inside of the second planet gear 716, is rotated in direction A, and also the connecting shaft 614, integrally connected to the control sun gear 722, the impeller housing 618, connected to the connecting shaft 614, and the impeller 620, integral with the impeller housing 618, are rotated in direction A.

The turbine 622 installed to face the impeller 620 is rotated in direction A by the flow of the fluid and the control shaft 616 connected to the turbine 622 and the forward rotation ring gear 724, integrally formed with the control shaft 616, are rotated in direction A, and since no load is applied to the turbine due to the release of the power mode clutch 728, the impeller 620 and turbine 622 rotate at a 1:1 ratio. Therefore, at neutral, the first planet gear 714 and second planet gear 716 eventually are not rotated but all the rotating bodies rotate as an integral body.

### II. Forward Rotation I (Power Mode) State (Fig. 101)

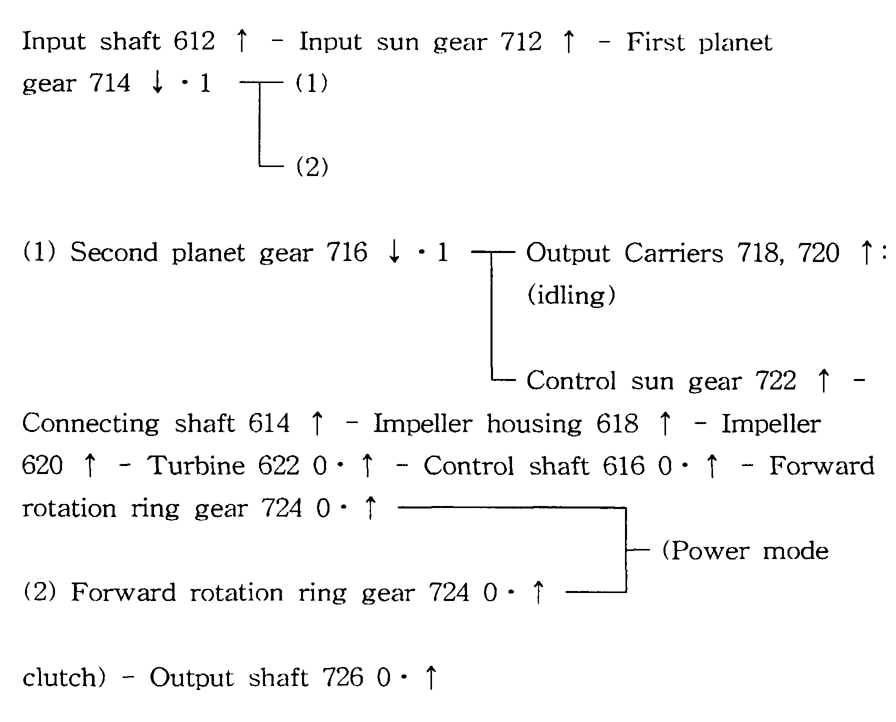

This is the case in which only the power mode clutch 728 is actuated, and the fuel ratio mode clutch 732 and the low speed brake 736 are released.

If the power of the engine is inputted to the input shaft 612, the input sun gear 712, integrally formed with the input shaft 612, is rotated in direction A, the same as that of the input shaft 612, the first planet gear 714, meshed with the input sun gear 712, is rotated in direction B opposite to that of the input sun gear 712 under the condition in which the forward rotation ring gear 724 is stopped by the load of the output shaft 726 due to the actuation of the power mode clutch 728. By the rotation of the first planet gear 714, the second planet gear 716, integrally formed with the first planet gear 714, is rotated in direction B and decreases the rotation of the direction A of the control sun gear 722 meshed with the second planet gear 716. The connecting shaft 614, integrally connected to the control sun gear 722, the impeller housing 618, integrally connected to the connecting shaft 614, and the impeller 620, integral with the impeller housing 618, are decelerated and rotate in direction A.

On the other hand, by the rotation of the first planet gear 714 and the second planet gear 716, the output carriers 718, 720 are rotated in direction A and idle due to the release of the fuel ratio mode clutch 732, installed on the output shaft 726.

Here, reviewing the procedure of speed changing steplessly from a low step to a high step, under the condition in which the forward rotation ring gear 724, control shaft 616 and the turbine 622 are stopped due to the actuation of the power mode clutch 728, the rotational force transmitted to the first planet gear 714 through the input sun gear 712 is increased through the second planet gear 716 and transmitted to the control sun gear 722. The increased rotational force is transmitted via the connecting shaft 614, integrally formed with the control sun gear 722, and the impeller housing 618 integrally connected with the connecting shaft 614 to the impeller 620 integral with the impeller housing 618. At this time, since the turbine 622 is stopped by the load of the output shaft 726 due to the actuation of the power mode clutch 728, a rotational difference occurs between the impeller and the turbine.

In view of the characteristics of the torque converter, the increased rotational force of the impeller 620 is transmitted to the turbine 622, and the rotational force transmitted to the turbine 622 is transmitted via the control shaft 616 and forward rotation ring gear 724 to the output shaft 726, connected to the power mode clutch 728, and if the resistance acting on the output shaft 726 and the rotational force transmitted to the turbine 622 are in equilibrium, then the output shaft 726 is driven. This is the low speed starting state.

If the rotation of the engine is increased, the rotational difference between the impeller 620 and turbine 622 becomes larger and therefore, the rotational force transmitted to the turbine 622 is increased, and if the rotational force transmitted to the turbine 622 is larger than the resistance acting on the turbine 622 due to the load of the output shaft 726, the output shaft 726 is accelerated until the rotational force of the turbine 622 transmitted from the impeller 620 comes into equilibrium with the resistance acting on the turbine 622.

If the output shaft 726 is accelerated, the load of the output shaft 726 is decreased, therefore, the resistance acting on the turbine 622 is also decreased. If the resistance acting on the turbine 622 is decreased, the rotational difference is decreased between the impeller 620 and the turbine 622 until it comes into equilibrium with this resistance. Therefore, the rotation of the turbine 622 is increased in direction A, the same as that of the impeller 620, and also the rotation of the forward rotation ring gear 724, integrally connected to the turbine 622, is increased in direction A. If the rotation of the forward rotation ring gear 724 is increased, the rotation of the output shaft 726 is increased due to the actuation of the power mode clutch 728, and if the load of the output shaft 726 is further reduced due to the increase in rotation of the output shaft 726 and thus the load comes into equilibrium with the driving force of the input shaft 612, the impeller 620 and the turbine 622 are rotated at the ratio of 1:1, and the first planet gear 714 and second planet gear 716 do not rotate about their own axes but all the rotating bodies rotate integrally. This is the high speed state.

Since the rotational ratio between the impeller 620 and the turbine 622 does not become 1:1 due to oil slippage between the impeller 620 and the turbine 622 in this high speed state, the speed change ratio of the input versus output can not obtain 100% efficiency of 1:1 and, therefore, efficiency of 100% can be obtained by integrating the input shaft and output shaft by concurrently actuating the power mode clutch and fuel ratio mode clutch.

In the present embodiment, reviewing the rotational force transmitted to the impeller 620, since the rotational force, increased more than that of the input shaft 612 by the first planet gear 714 and the second planet gear 716, acts on the impeller 620 through the control sun gear 722 and the connecting shaft 614 so as to be transmitted to the turbine 622, the large rotational force is applied to the output shaft 726 at low speed state thereby obtaining excellent acceleration and efficiency.

### III. Forward Rotation II (Normal Operation Mode) State (Fig. 102)

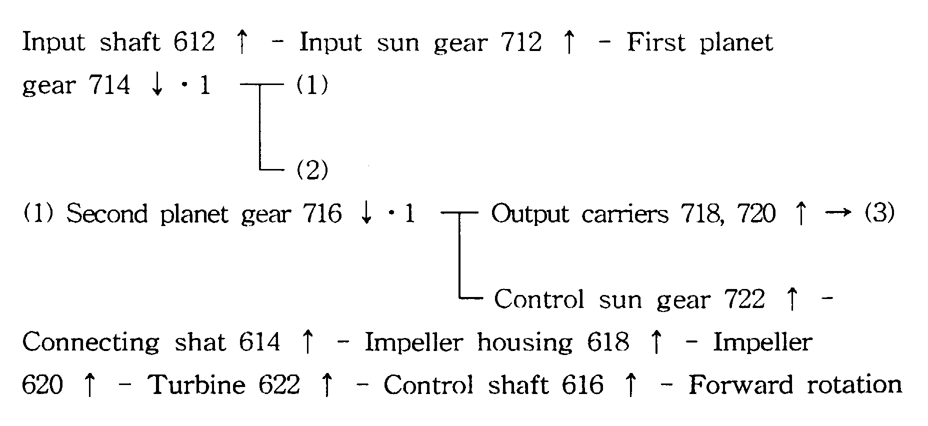

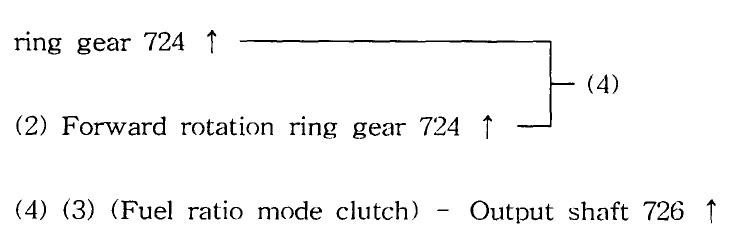

The power mode clutch 728 is used at the initial starting stage, and when the rotational ratio between the impeller 620 and the turbine 622 reaches a predetermined ratio, the power mode clutch 728 is released and the fuel ratio mode clutch 732 is actuated.

Here, the duration until the rotation at the predetermined ratio after the initial starting at the time of stepless speed change from low speed step to higher speed step is a state in which the fuel ratio mode clutch 732 is released and only the power mode clutch 728 is actuated, and this is same as the power mode state of forward rotation I described above, therefore, a specific description thereof is omitted.

That is, if the rotation of the engine is increased, since the rotational difference between the impeller 620 and the turbine 622 becomes large, the rotational force transmitted to the turbine 622 is increased, and if the rotational speed of the output shaft 726 is increased, the power mode clutch 728 is released and the fuel ratio mode clutch 732 is actuated. The output shaft 726 and the output carriers 718, 720 are connected by the actuation of the fuel ratio mode clutch 732, and the rotation of the forward rotation ring gear 724 is transmitted to the first planet gear 714 so as to be transmitted to the output carriers 718, 720 and is decreased upon establishing an equilibrium with the resistance of the output shaft 726.

In this state, if the rotation of the engine is increased, since the rotational difference between the impeller 620 and the turbine 622 becomes large, the rotational force transmitted to the turbine 622 is increased, and where the rotational force transmitted to the turbine 622 is larger than the resistance applied on the turbine 622 by the load of the output shaft 726, the output shaft 726 is accelerated until the rotational force of the turbine 622 transmitted from the impeller 620 establishes equilibrium with the resistance acting on the turbine 622.

If the output shaft 726 is accelerated, since the load of the output shaft 726 is decreased, the resistance acting on the turbine 622 is also decreased. If the resistance acting on the turbine 622 is decreased, the rotational difference between the impeller 620 and the turbine 622 is decreased until it establishes equilibrium with the resistance. Therefore, the rotation of the turbine 622 is increased in direction A, the same as that of the impeller 620, and the rotation of the forward rotation ring gear 724, integrally connected with the turbine 622, is also increased in direction A.

In the case where the load of the output shaft 726 is further reduced so as to establish equilibrium with the driving force of the input shaft 612, the impeller 620 and the turbine 622 rotate at 1:1 ratio, the first planet gear 714 and second planet gear 716 do not rotate about their own axes, and all the rotating bodies rotate integrally. This is the high speed state.

As described above, the characteristics of the present embodiment 76 is that the required speed change ratio is steplessly varied according to the load of the output shaft.

Here, since 100% efficiency with the rotational ratio between the impeller and turbine of 1:1 can not be obtained due to oil slippage in the torque converter between the impeller and turbine, the characteristics of the present invention is that the efficiency decrease due to the oil slippage can be prevented by effectuating a lock-up function by concurrently actuating the power mode clutch and fuel ratio mode clutch.

### IV. Forward Rotation III (Low Speed Mode) State (Fig. 103)

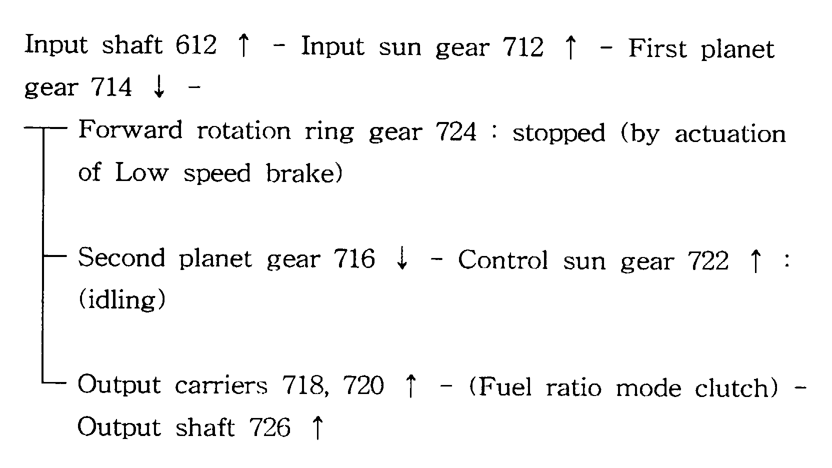

The low speed mode is achieved when the low speed brake 736, installed at the outside of the forward rotation ring gear 724, and the fuel ratio mode clutch 732 are actuated.

If the power of the engine is inputted to the input shaft 612, the input sun gear 712, integrally connected to the input shaft 612, is rotated in direction A, and the first planet gear 714, meshed with the input sun gear 712, is rotated in direction B opposite to that of the input sun gear 712 since the forward rotation ring gear 724, meshed with the outside of the first planet gear 712, is stopped by the actuation of the low speed brake 736, and the first planet gear 714 decelerates and rotates the control carriers 718, 720 in direction A. The rotation transmitted to the output carriers 718, 720 drive the output shaft 726 connected by the actuation of the fuel ratio mode clutch 732 in direction A, therefore, the output is performed in low speed condition by the decelerated rotation.

Since the rotation inputted from the engine is decelerating at a constant ratio due to the forward rotation ring gear 724 being stopped, the output shaft 726 obtains a driving force as large as the decelerated portion and concurrently obtains the engine brake effect.

### V. Reverse Rotation State (Fig. 104 ^{∼} 108)

### 1. Reverse Rotation I State (Fig. 104) : Actuation of Reverse Rotation System RI

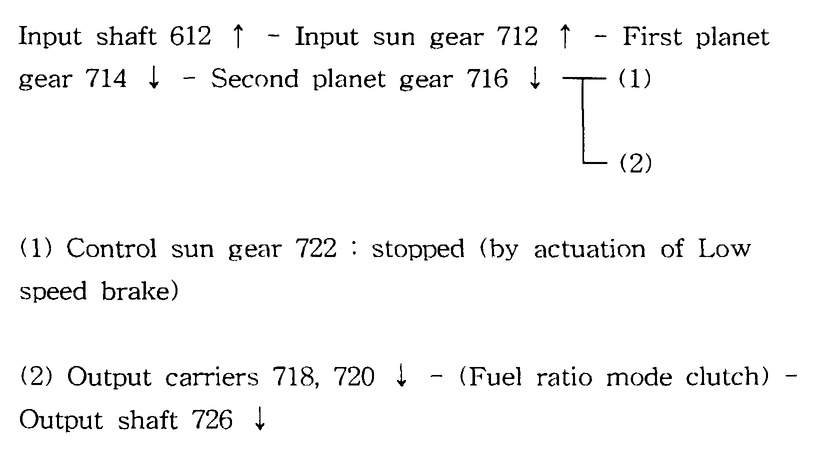

The reverse rotation effectuated by the reverse rotation system RI can be performed in two ways, that is, (1) by actuating the reverse rotation brake 740 and the power mode clutch 728, and (2) by actuating the reverse rotation brake 740 and the fuel ratio mode clutch 732. Here, only the second way is described.

In the reverse rotation I state, as shown in Fig. 104, the reverse rotation brake 740 connected to the connecting shaft 614 is actuated.

If the power of the engine is inputted to the input shaft 612, the input sun gear 712 integrally connected to the input shaft 612 is rotated in direction A, the same as that of the input shaft 612. The first planet gear 714, meshed with the input sun gear 712, rotates in direction B opposite to that of the input sun gear 712. The second planet gear 716, integrally formed with the first planet gear 714, also rotates in direction B, and since the control sun gear 722, meshed with the inside of the second planet gear, is stopped by the actuation of the reverse rotation brake 740, installed on the connecting shaft 614 integral with the control sun gear 722, the output carriers 718, 720 are rotated in direction B. The output shaft 160 is rotated in direction B by the actuation of the fuel ratio mode clutch 732 installed between the output carriers 718, 720 and the output shaft 726.

The reverse operation in the reverse rotation I state in the present embodiment can be performed at a fixed ratio, thus it is different from the reverse operation in the reverse rotation II, III, IV and V state which is performed steplessly.

### 2. Reverse Rotation II State (Fig. 105) : Actuation of Reverse Rotation System RII

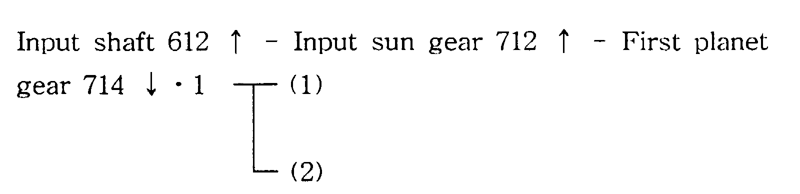

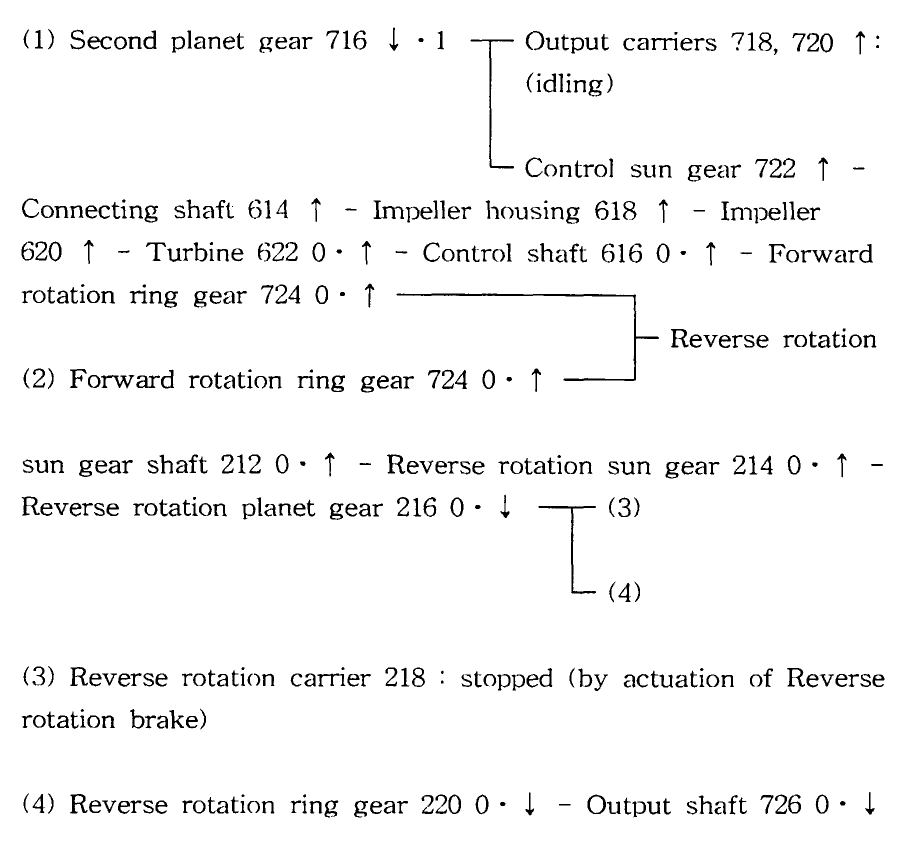

In reverse rotation II state, the power mode clutch 728, fuel ratio mode clutch 732 and low speed brake 736 are released, and the reverse rotation brake 222 installed on the reverse rotation carriers 218 is actuated.

If the power of the engine is inputted to the input shaft 612, the input sun gear 712, integrally formed with the input shaft 612, is rotated in direction A, the same as that of the input shaft 612, and the first planet gear 714, meshed with the input sun gear 712, is rotated in direction B opposite to direction A. Since the forward rotation ring gear 724, meshed with the outside of the first planet gear 714, the reverse rotation sun gear shaft 212, integrally connected with the forward rotation ring gear 724, and the reverse rotation sun gear 214, integral with the reverse rotation sun gear shaft 212, are in a momentary stationary condition together with the output shaft 726 by actuation of the reverse rotation brake 222, the rotational force transmitted through the first planet gear 714 can not rotate the forward rotation ring gear 724 but decelerate and rotate the control sun gear 722 in direction A through the second planet gear 716. Also, the connecting shaft 614, integrally connected with the control sun gear 722, the impeller housing 618, integrally formed with the connecting shaft 614, and the impeller 620, integral with the impeller housing 618, are decelerated and rotated in direction A.

On the other hand, since the forward rotation ring gear 724, meshed with the first planet gear 714, is in a momentary stationary condition, the output carriers 718, 720 are rotated in direction A by the first planet gear 714 and idle due to the release of the fuel ratio mode clutch 732.

Here, reviewing the procedure of stepless speed changing, the reverse rotation carrier 218, the reverse rotation ring gear 220, integrally connected to the output shaft 726, and the reverse rotation sun gear 214 are in a stationary condition due to the actuation of the reverse rotation brake 222, installed at the outside of the reverse rotation carriers 218, and in addition, the reverse rotation sun gear shaft 212, integral with the reverse rotation sun gear 214, the forward rotation ring gear 724, integrally connected with the reverse rotation sun gear shaft 212, and the control shaft 616 and turbine 622 are also in a momentary stationary condition. In this state, a part of the rotational force transmitted to the first planet gear 714 through the input sun gear 712 is transmitted to the control sun gear 722 through the second planet gear 716, and also is transmitted to the impeller 620 through the connecting shaft 614, integrally formed with the control sun gear 722 and the impeller housing 38. At this time, since the turbine 622 is stopped, a rotational difference occurs between the impeller 620 and turbine 622.

In view of characteristics of the torque converter, the larger the rotational difference between the impeller 620 and turbine 622 is, the larger the rotational force becomes, and the increased rotational force of the impeller 620 is transmitted to the turbine 622, and therefore, the rotational force transmitted to the turbine 622 is transmitted to the reverse rotation sun gear shaft 212 and reverse rotation sun gear 214 through the control shaft 616 and forward rotation ring gear 724, and if the resistance acting on the reverse rotation sun gear 214 by the load of the output shaft 726 establishes equilibrium with the rotational force transmitted to the turbine 622, the reverse rotation sun gear 214 is driven. The rotational force is transmitted to the reverse rotation planet gear 216, meshed with the reverse rotation sun gear 214, upon rotation of the reverse rotation sun gear 214, and since the reverse rotation carrier 218 is stopped by actuation of the reverse rotation brake 222, the reverse rotation planet gear 216 rotates in direction B which is opposite to direction A and rotates the reverse rotation ring gear 220, meshed with the outside of the reverse rotation planet gear 216, in direction B. This is the reverse rotation starting state.

If the rotation of the engine is increased, the rotational difference between the impeller 620 and the turbine 622 becomes large, and therefore the rotational force transmitted to the turbine 622 is increased, and where the rotational force transmitted to the turbine 622 is larger than the resistance acting on the turbine 622 through the reverse rotation sun gear 214 due to the load of the output shaft 726, the reverse rotation sun gear 214 is accelerated until the rotational force of the turbine 622 transmitted from the impeller 620 establishes equilibrium with the resistance acting on the turbine 622, and the rotation of the reverse rotation ring gear 220, integral with the output shaft 726, is increased in direction B through the reverse rotation planet gear 216.

If the rotation of the output shaft 726 is increased, since the load of the output shaft 726 is decreased, the resistance acting on the turbine 622 through the reverse rotation sun gear 214 is also decreased. If the resistance acting on the turbine 622 is decreased, the rotational difference between the impeller 620 and the turbine 622 is decreased until the rotation establishes equilibrium with the resistance. Therefore, the rotation of the turbine 622 is increased in direction A, the same as that of the impeller 620, and also, the rotation of the forward rotation ring gear 724, integrally connected with the turbine 622, is increased in direction A. If the rotation of the forward rotation ring gear 724 is increased, also the rotation of the reverse rotation sun gear shaft 212, integrally connected to the forward rotation ring gear 724, and the reverse rotation sun gear 214 is increased, and the rotation of the reverse rotation ring gear 220 and the output shaft 726 is also increased through the reverse rotation planet gear 216.

As described above, the operational characteristics of the reverse rotation II state according to the present reverse rotation system RII (the same as in the other reverse rotation systems) is that the stepless reverse driving can be achieved according to the load of the output shaft 726 even at the time of reverse rotation.

Reviewing the rotational force transmitted to the output shaft 726 in the present reverse rotation system RII, the rotational force increased more than that of the input shaft 612 by the first planet gear 714 and the second planet gear 716, is transmitted to the control sun gear 722, which acts on the impeller 620 through the connecting shaft 614, and the rotational force is further increased by the impeller 620 which acts on the turbine 622, also is transmitted to the reverse rotation sun gear 214 through the control shaft 616, integrally connected to the turbine 622, and through the forward rotation ring gear 724 and the reverse rotation sun gear shaft 212, and drives the reverse rotation ring gear 220 integral with the output shaft 726 through the reverse rotation planet gear 216, and therefore, the large rotational force drives the output shaft 726 at the time of reverse rotation, so that the acceleration and efficiency are improved and smooth and quiet running can be achieved even during reverse operation.

### 3. Reverse Rotation III state (Fig. 106) : Actuation of Reverse Rotation System RIII

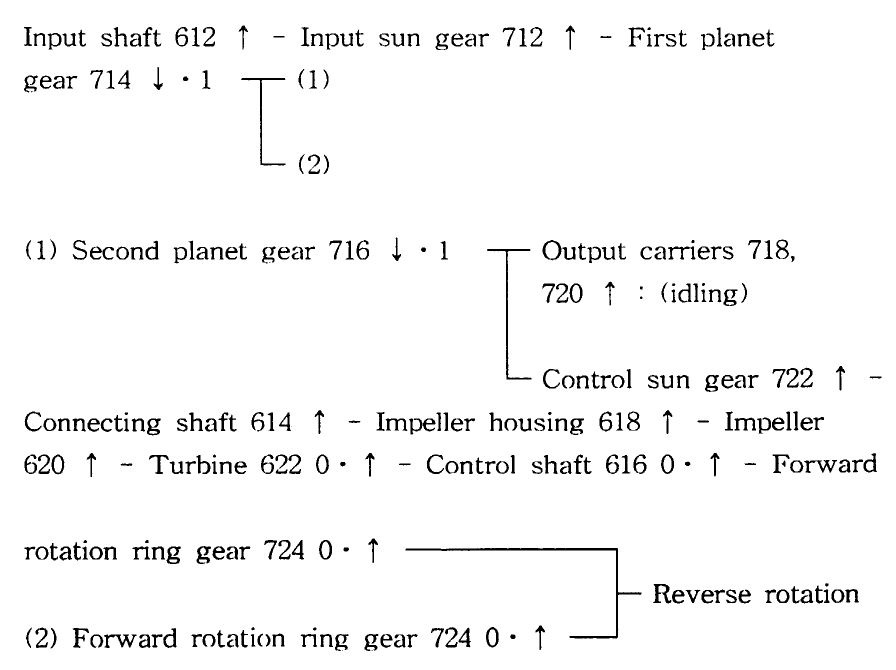

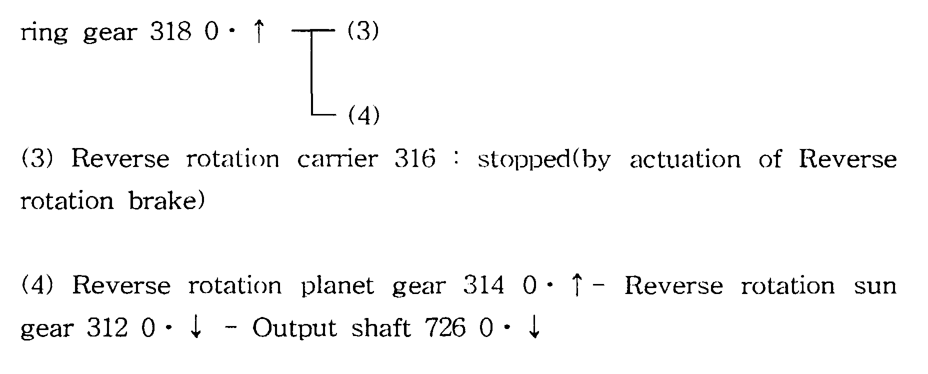

In the reverse rotation III state, the power mode clutch 728, fuel ratio mode clutch 732 and low speed brake 736 are released, and the reverse rotation brake 320 installed on the reverse rotation carrier 316 is actuated.

Since the rotational direction and the power transmission procedure in the present reverse rotation III state at the speed change system 710 and speed change controlling system 610 is same as in the reverse rotation II state based on the above described reverse rotation system RII, a description thereof is omitted, and here, only the procedure of transmitting the power to the output shaft 726 through the reverse rotation system RIII is described.

As shown in Fig. 106, the reverse rotation ring gear 318 integrally connected to the forward rotation ring gear 724 is rotated in direction A, the same as that of the forward rotation ring gear 724, by the rotation of the forward rotation ring gear 724 of the speed change system 710. Since the reverse rotation carrier 316 is stopped by the actuation of the reverse rotation brake 320, the reverse rotation planet gear 314, meshed with the inside of the reverse rotation ring gear 318, is rotated in direction A, the same as that of the reverse rotation ring gear 318, and rotates the reverse rotation sun gear 312, meshed with the inside of the reverse rotation planet gear 314, in direction B opposite to direction A. Also, the output shaft 726, integrally connected to the reverse rotation sun gear 312, is rotated in direction B by the rotation of the reverse rotation sun gear 312.

### 4. Reverse Rotation IV State (Fig. 107) : Actuation of Reverse Rotation System RIV

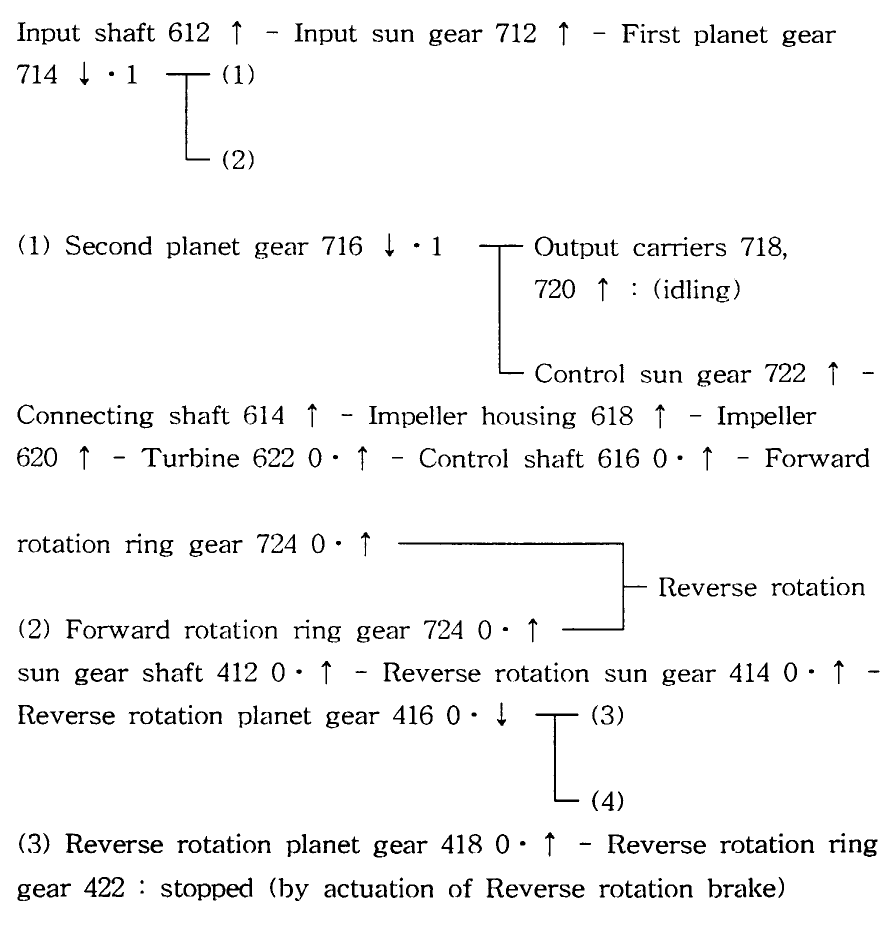

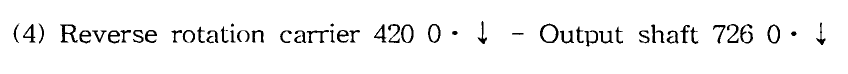

In the reverse rotation IV state, the power mode clutch 728, fuel ratio mode clutch 732 and low speed brake 736 are released and the reverse rotation brake 424, installed on the reverse rotation ring gear 422, is actuated.

Since the rotational direction and the power transmission procedure in the present reverse rotation IV state at the speed change system 710 and the speed change controlling system 610 are the same as in the reverse rotation II state, based on the operation of the above described reverse rotation system RII, a description thereof is omitted, and here, only the procedure of transmitting the power to the output shaft 726 through the reverse rotation system RIV is described.

As shown in Fig. 107, the reverse rotation sun gear shaft 412, integrally connected to the forward rotation ring gear 724, is rotated in direction A, the same as that of the forward rotation ring gear 724, by the rotation of the forward rotation ring gear 724 of the speed change system 710, and also the reverse rotation sun gear 414, integrally connected to the reverse rotation sun gear shaft 412, is rotated in direction A. The rotation of the reverse rotation sun gear 414 rotates the reverse rotation planet gear 416, meshed with the reverse rotation sun gear 414, in the opposite direction B, and the reverse rotation planet gear 416 rotates another reverse rotation planet gear 418 adjacent to and meshed with the reverse rotation planet gear 416 in direction A. Although the reverse rotation planet gear 418 intends to rotate the reverse rotation ring gear 422, meshed with the outside of the reverse rotation planet gear 418, since the reverse rotation ring gear 422 is stopped due to the actuation of the reverse rotation brake 424, the reverse rotation planet gear 418 rotates the reverse rotation carrier 420 in direction B. Also, the output shaft 726 integrally connected to the reverse rotation carrier 420 rotates in direction B.

### 5. Reverse Rotation V State (Fig. 108) : Actuation of Reverse Rotation System RV

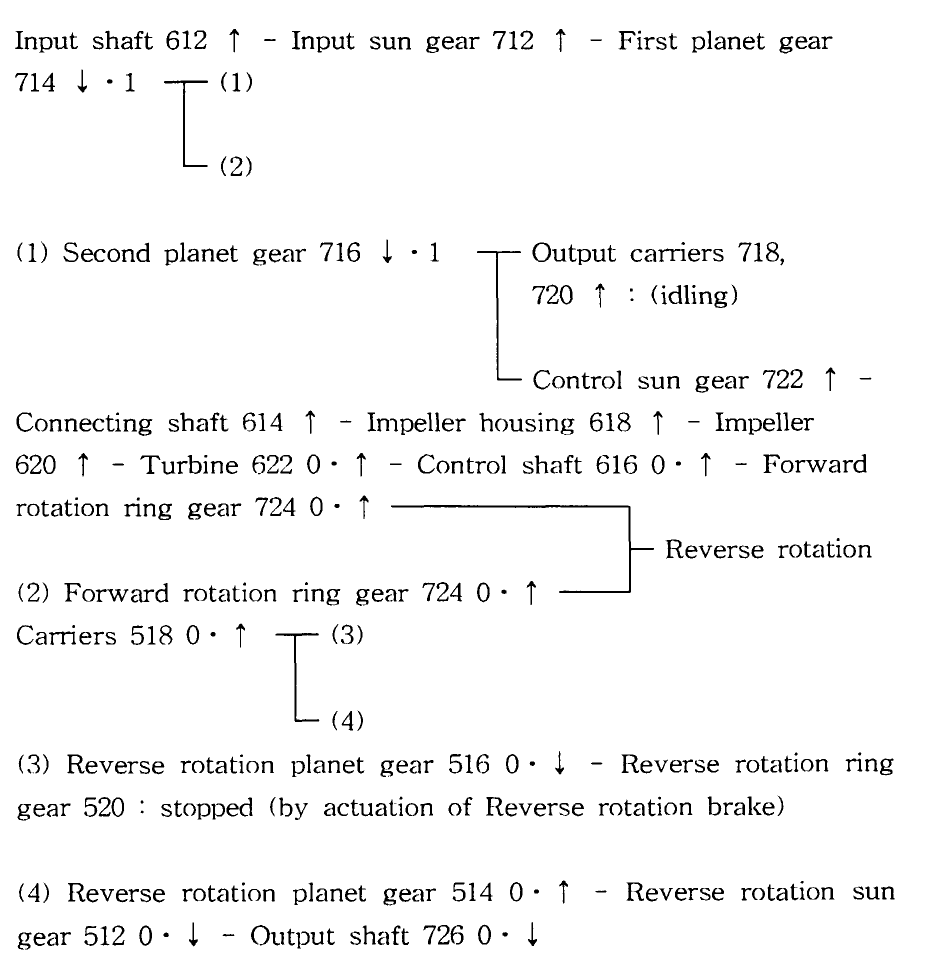

In the reverse rotation V state, the power mode clutch 728, fuel ratio mode clutch 732 and low speed brake 736 are released, and the reverse rotation brake 522 installed on the reverse rotation ring gear 520 is actuated.

Since the rotational direction and the procedure of power transmission in the present reverse rotation V state at the speed change system 710 and speed change controlling system 610 are the same as in the reverse rotation II state based on the operation of the above described reverse rotation system RII, a description thereof is omitted, and here, only the procedure of transmitting the power to the output shaft 726 through the reverse rotation system RV is described.

As shown in Fig. 108, the reverse rotation carrier 518 integrally connected to the forward rotation ring gear 724 is rotated in direction A, the same as that of the forward rotation ring gear 724, by the rotation of the forward rotation ring gear 724 of the speed change system 710. The rotation is transmitted to the reverse rotation planet gears 514, 516 as the reverse rotation carrier 518 rotates, and since the reverse rotation ring gear 520, meshed with the outside of the reverse rotation planet gear 516, is stopped by the actuation of the reverse rotation brake 522, the reverse rotation planet gear 516 is rotated in the opposite direction B and rotates the reverse rotation planet gear 514, meshed in adjacent therewith, in direction A. The reverse rotation sun gear 512, meshed with the inside of the reverse rotation planet gear 514, rotates in the opposite direction B and rotates the output shaft 726 integrally connected thereto in the same direction B.

From now on, the 77th embodiment through the 95th embodiment of the present invention are described. In the 77th embodiment through the 95th embodiment of the present invention, although there is a difference in the construction of the speed change system, the principle of the operation method or the speed change procedure is similar to that of the 76th embodiment, and therefore, a detailed description thereof is omitted.

Therefore, in consideration of the similarity of the construction, method of operation and the speed change procedure as described above, the construction of each embodiment is shown in a schematic diagram for simplification for convenience of the explanation.

That is, the schematic drawings of the 77th embodiment through the 95th embodiment are shown in Fig. 109 through Fig. 127A, and for the convenience of the explanation, the construction to which the reverse rotation system RII is combined in each embodiment is shown.

The utilization of the power mode clutch CL2 and fuel ratio mode clutch CL1 on the side of the output shaft in the 77th embodiment through the 95th embodiment is the same as in the 76th embodiment, and the construction in which the low speed brake B2 is installed on the power line connected to the turbine T and connected to the power mode clutch CL2 for transmission of power to the output shaft, the combination of the reverse rotation system RI in which the reverse rotation brake B1 is installed on the power line connected to the impeller I, and the combination of the reverse rotation systems RII to RV installed between the speed change system and the output shaft are same as in the 76th embodiment. Since the method of operation and the speed change procedure are the same as those of the 76th embodiment, each embodiment is shown in a table 2 together with a concurrent presentation of the corresponding figure.

**Table 2**

| Embodiment | Corresponding figure | Planet gear type | | | Input | Connection with impeller I | Connection with turbine T and power mode clutch CL2 | Connection with fuel ratio mode clutch CL1 |
|---|---|---|---|---|---|---|---|---|
| | | Integrated type | Separated type | | | | | |
| | | | C1 side | C2 side | | | | |
| 76 | Fig. 95 | P12 (P21) | - | - | S1 | S2 | R1 | C12(C21) |
| 77 | Fig. 109 | P12 (P21) | - | - | S1 | S2 | R2 | C12(C21) |
| 78 | Fig. 110 | P12 (P21) | - | - | S1 | C12 (C21) | R2 | R1 |
| 79 | Fig. 111 | P12 (P21) | - | - | S2 | C12 (C21) | R2 | R1 |
| 80 | Fig. 112 | P12 (P21) | - | - | R1 | C12 (C21) | S1 | S2 |
| 81 | Fig. 113 | P12 (P21) | - | - | R2 | C12 (C21) | S1 | S2 |
| 82 | Fig. 114 | P12 (P21) | - | - | R2 | R1 | S1 | C12(C21) |
| 83 | Fig. 115 | P12 (P21) | - | - | R2 | R1 | S2 | C12(C21) |
| 84 | Fig. 116 | - | D | D | S1 | S2 | C1 + C2 | R12(R21) |
| 85 | Fig. 117 | - | S | S | S1 | S2 | R12 (R21) | C1 + C2 |
| 86 | Fig. 118 | - | S | D | S1 | C1 + C2 | S2 | R12 (R21) |
| 87 | Fig. 119 | - | S | D | S2 | R12 (R21) | S1 | C1 + C2 |
| 88 | Fig. 120 | - | S | S | R2 | R1 | S12 (S21) | C1 + C2 |
| 89 | Fig. 121 | - | S | D | R1 | C1 + C2 | S12 (S21) | R2 |
| 90 | Fig. 122 | - | S | D | S12 (S21) | R2 | R1 | C1 + C2 |
| 91 | Fig. 123 | - | D | D | S12 (S21) | R2 | C1 + C2 | R1 |
| 92 | Fig. 124 | - | S | S | S12 (S21) | C1 + C2 | R2 | R1 |
| 93 | Fig. 125 | - | D | D | C1 + C2 | R1 | S12 (S21) | R2 |
| 94 | Fig. 126 | - | D | D | C1 + C2 | R12 (R21) | S1 | S2 |
| 95 | Fig. 127 | - | S | S | R12 (R21) | C1 + C2 | S1 | S2 |

For reference, the symbol presentation of the main elements used in the table 2 and figures is described below.
- P12, P21 :: integrated type planet gear
- S12, S21 :: integrated type sun gear
- C12, C21 :: integrated type carrier supporting the integrated type planet gear
- R12, R21 :: integrated type ring gear

Here, two digits for same element mean an integrated type, that is, 12 means the right portion, and 21 means the left portion. Particularly, C12(or C21) means the first portion(or second portion) of the integrated type carrier supporting the integrated type planet gear. As described in the previous embodiments, the carrier supporting the separated type single (S) planet gear is abbreviated as a single type carrier, and the carrier supporting the separated type double (D) planet gear is abbreviated as a double type carrier.

In the same way as the 76th embodiment, the position of the turbine T and the impeller I can be reversed in their lateral arrangement if required, and also, the position of the fuel ratio mode clutch CL1 and the power mode clutch CL2 can be reversed in their lateral arrangement.

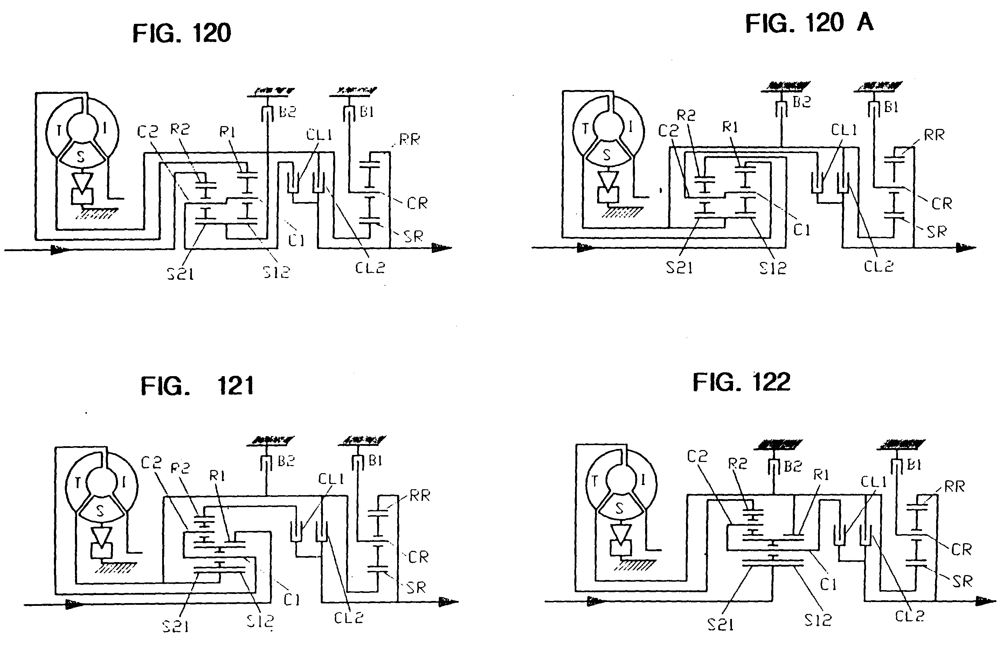

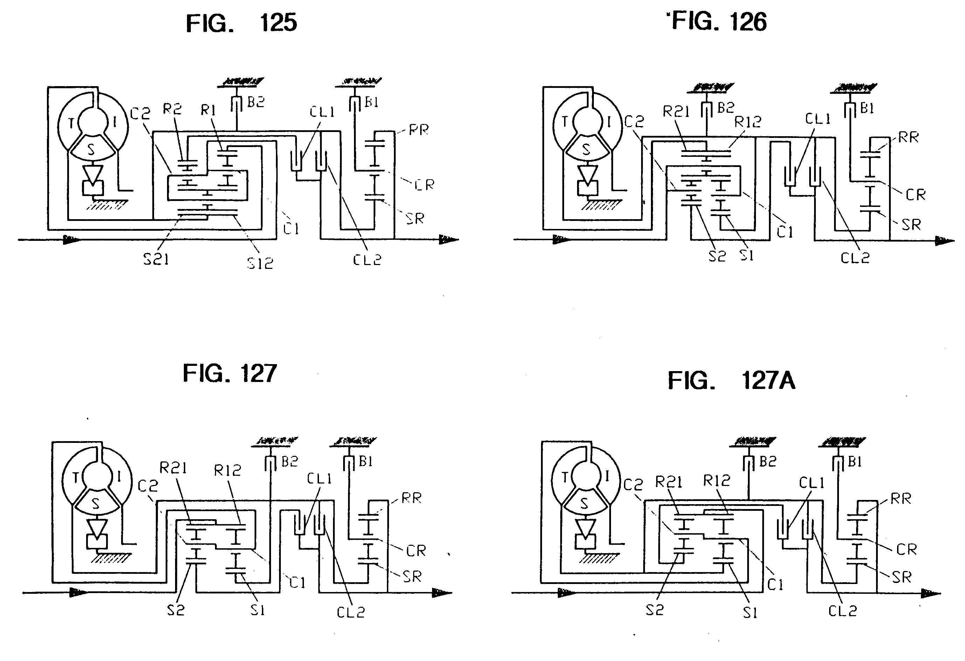

In the 76th embodiment through the 95th embodiment, for example, the 88th embodiment and the 95th embodiment are shown in Fig. 120 and Fig. 127 respectively, and each above embodiment can be modified as shown in Fig. 120A and Fig. 127A respectively.

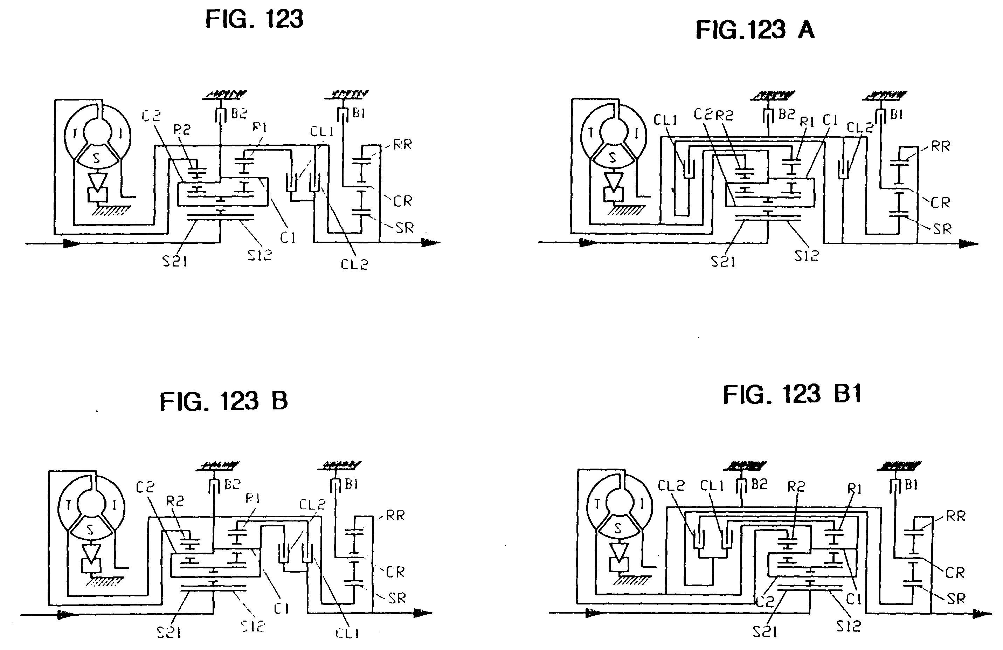

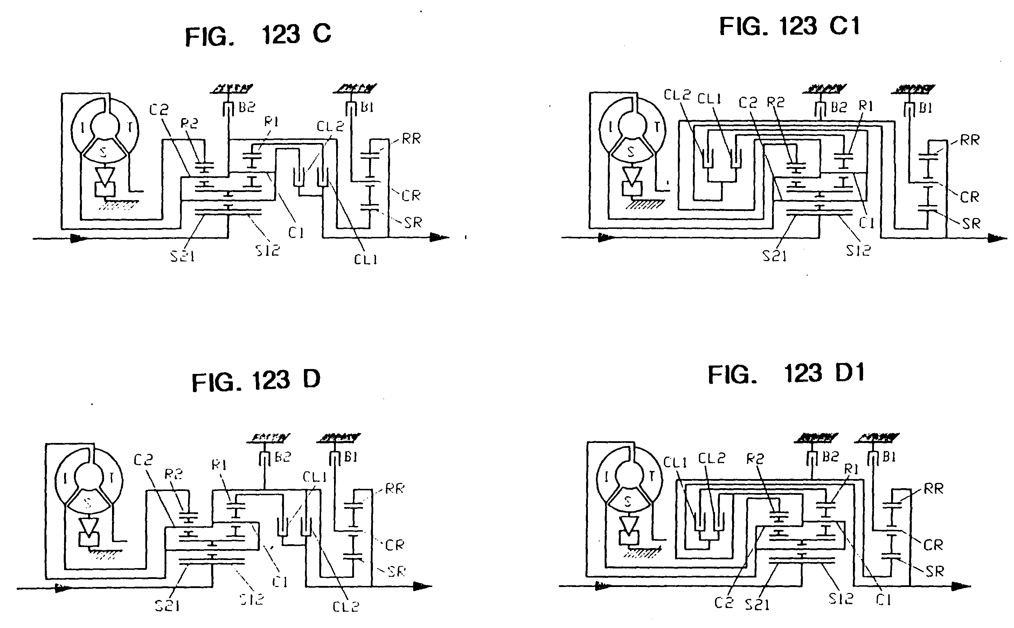

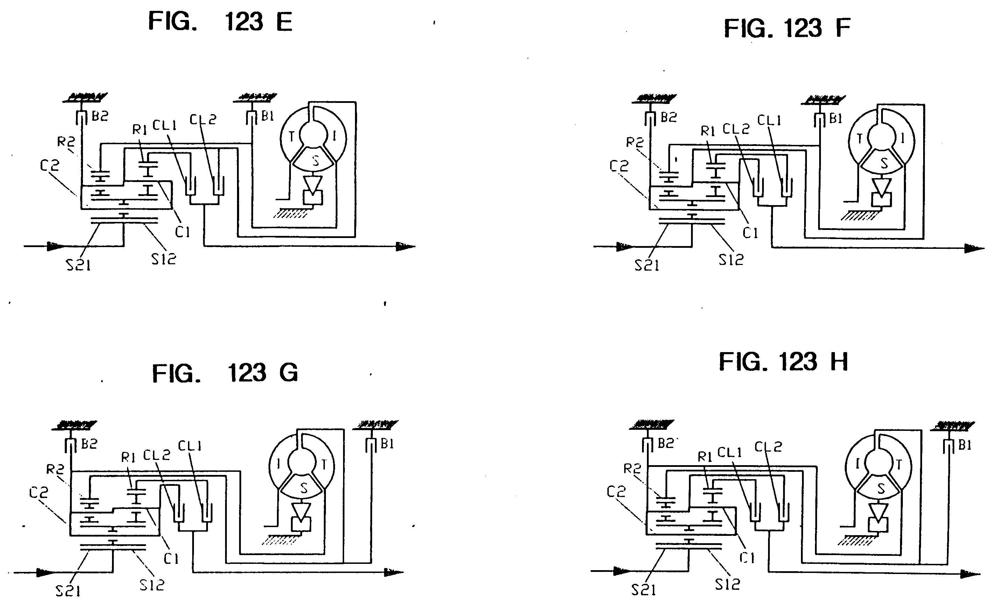

Also, the 91th embodiment (such construction is represented as (T)(I)-(CL1)(CL2)) is shown in Fig. 123 and the desired purpose can be achieved when (CL1) and (CL2) are positioned as shown in Fig. 123A. Here, the construction in which the lateral arrangement of (T) and (I) is unchanged and the lateral arrangement of (CL1) and (CL2) is reversed, that is, the construction of (T)(I)-(CL2)(CL1) is shown in Fig. 123B and also (CL2) and (CL1) can be positioned as shown in Fig. 123B1. Again, the construction in which the lateral arrangement of (CL2) and (CL1) is unchanged and the lateral arrangement of (T) and (I) is reversed, that is, the construction of (I)(T)-(CL2)(CL1) is shown in Fig. 123C and also (CL2) and (CL1) can be positioned as shown in Fig. 123C1. Here, the construction in which the lateral arrangement of (I) and (T) is unchanged and the lateral arrangement of (CL2) and (CL1) is reversed, that is, the construction of (I)(T)-(CL1)(CL2) is shown in Fig. 123D and also (CL1) and (CL2) can be positioned as shown in Fig. 123D1.

Next, (T) and (I) can be located at the side of the output shaft and such construction of (CL1)(CL2)-(T)(I) is shown in Fig. 123E. In this case, RI type reverse rotation system B1 for a fixed ratio reverse rotation is combined. Here, the construction in which the lateral arrangement of (T) and (I) is unchanged and the lateral arrangement of (CL1) and (CL2) is reversed, that is, the construction of (CL2)(CL1)-(T)(I) is shown in Fig. 123F. Again, the construction in which the lateral arrangement of (CL2) and (CL1) is unchanged and the lateral arrangement of (T) and (I) is reversed, that is, the construction of (CL2)(CL1)-(I)(T) is shown in Fig. 123G. Here, the construction in which the lateral arrangement of (I) and (T) is unchanged and the lateral arrangement of (CL2) and (CL1) is reversed, that is, the construction of (CL1)(CL2)-(I)(T) is shown in Fig. 123H.

In 76th embodiment through the 95th embodiment, although the gear ratio between the integrated type first and second planet gear, and the gear ratio between the sun gear and the ring gear are not described, the embodiments of the invention can be fully understood in view of the operation principle of the present invention or with reference to the drawings if required, and thus it is obvious that various modification, alteration, deletion and addition can be made in the scope of the present invention.

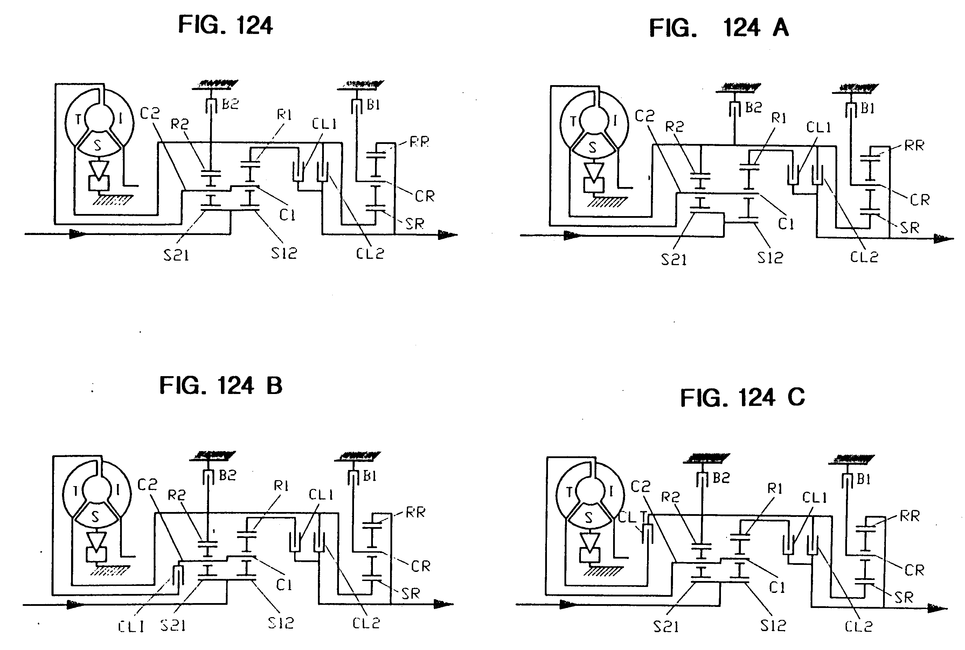

For example, the same function is achieved even when the first portion (R12) of the integrated type ring gear in the 85th embodiment in Fig. 117 is enlarged, that is, is modified as shown in Fig. 117A, and similarly, the first portion (S12) of the integrated type sun gear in the 92th embodiment in Fig. 124 can be modified as shown in Fig. 124A.

In addition, a clutch CLI can be installed between the speed change system and the connecting shaft connected to the impeller (see Fig. 124B), or a clutch CLT can be installed between the speed change system and the control shaft connected to the turbine (see Fig. 124C). In the above case, since the power between the speed change controlling system and the speed change system is disconnected, the power can be transmitted to the output shaft at a low speed fixed ratio free from intervention of the speed change controlling system when the actuation of the low speed brake B2, and thus the more assured engine brake effect can be obtained.

As described above, the continuously variable transmission of the present invention can speed change the rotation inputted to the input shaft into the normal operation mode to attain smooth and quiet driving, the power mode enabling operation in a mountaineous area or at the time of running up an inclined road or when a rapid starting is required, and the low speed mode which enables the running at a low speed fixed ratio to provide an engine braking effect and transmit the rotation to the output shaft with all the gears engaged, and also, can effectuate reverse driving in a simple way.

## Claims

1. A continuously variable transmission including a speed change controlling system which has an impeller, a turbine, and a stator and controls a rotational ratio in response to a load status of an output shaft, and a speed change system which receives a power generated by an engine, changes the rotational speed and transmits it to said output shaft, comprising:
an input shaft and said output shaft;
two planet gear sets which includes a first and a second sun gear, a first and a second ring gear, a first and a second carrier which supports an integrated or a separated type planet gear meshed with said sun gear and said ring gear, respectively;
a fuel ratio mode clutch and a power mode clutch for selectively connecting the power to said output shaft; and
a low speed brake mounted on a power line between said turbine and said power mode clutch,
whereby each element selected from said two planet gear sets is operatively connected to said impeller, turbine, power mode clutch and fuel mode clutch, respectively, and the power inputted through an input element selected from said two planet gear sets is changed into the speed of required mode and transmitted to said output shaft.

2. The transmission of claim 1 wherein said first sun gear is the input element,
said second sun gear is operatively connected to said impeller,
said double type first carrier and said double type second carrier are operatively connected to said turbine and said power mode clutch, and
said first ring gear and said second ring gear are operatively connected to said fuel ratio mode clutch.

3. The transmission of claim 1 wherein said first sun gear is the input element,
said second sun gear is operatively connected to said impeller,
said first ring gear and said double type second carrier are operatively connected to said turbine and said power mode clutch, and
said single type first carrier and said second ring gear are operatively connected to said fuel ratio mode clutch.

4. The transmission of claim 1 wherein said first sun gear is the input element,
said second sun gear is operatively connected to said impeller,
said first ring gear and said second ring gear are operatively connected to said turbine and said power mode clutch, and
said single type first carrier and said single type second carrier are operatively connected to said fuel ratio mode clutch.

5. The transmission of claim 1 wherein said first sun gear is the input element,
said double type second carrier is operatively connected to said impeller,
said first ring gear and said second sun gear are operatively connected to said turbine and said power mode clutch, and
said single type first carrier and said second ring gear are operatively connected to said fuel ratio mode clutch.

6. The transmission of claim 1 wherein said first sun gear is the input element,
said second ring gear is operatively connected to said impeller,
said first ring gear and said second sun gear are operatively connected to said turbine and said power mode clutch, and
said single type first carrier and said single type second carrier are operatively connected to said fuel ratio mode clutch.

7. The transmission of claim 1 wherein said first sun gear is the input element,
said single type first carrier and said second sun gear are operatively connected to said impeller,
said double type second carrier is operatively connected to said turbine and said power mode clutch, and
said first ring gear and said second ring gear are operatively connected to said fuel ratio mode clutch.

8. The transmission of claim 1 wherein said first sun gear is the input element,
said single type first carrier and said second sun gear are operatively connected to said impeller,
said second ring gear is operatively connected to said turbine and said power mode clutch, and
said first ring gear and said single type second carrier are operatively connected to said fuel ratio mode clutch.

9. The transmission of claim 1 wherein said first sun gear is the input element,
said single type first carrier and said second sun gear are operatively connected to said impeller,
said first ring gear and said double type second carrier are operatively connected to said turbine and said power mode clutch, and
said second ring gear is operatively connected to said fuel ratio mode clutch.

10. The transmission of claim 1 wherein said second sun gear is the input element,
said first sun gear and said single type second carrier are operatively connected to said impeller,
said first ring gear and said second ring gear are operatively connected to said turbine and said power mode clutch, and
said single type first carrier is operatively connected to said fuel ratio mode clutch.

11. The transmission of claim 1 wherein said first sun gear is the input element,
said single type first carrier and said double type second carrier are operatively connected to said impeller,
said second sun gear is operatively connected to said turbine and said power mode clutch, and
said first ring gear and said second ring gear are operatively connected to said fuel ratio mode clutch.

12. The transmission of claim 1 wherein said second sun gear is the input element,
said double type first carrier and said single type second carrier are operatively connected to said impeller,
said first sun gear and said second ring gear are operatively connected to said turbine and said power mode clutch, and
said first ring gear is operatively connected to said fuel ratio mode clutch.

13. The transmission of claim 1 wherein said first sun gear is the input element,
said single type first carrier and said second ring gear are operatively connected to said impeller,
said second sun gear is operatively connected to said turbine and said power mode clutch, and
said first ring gear and said single type second carrier are operatively connected to said fuel ratio mode clutch.

14. The transmission of claim 1 wherein said second sun gear is the input element,
said first ring gear and said single type second carrier are operatively connected to said impeller,
said first sun gear and said second ring gear are operatively connected to said turbine and said power mode clutch, and
said single type first carrier is operatively connected to said fuel ratio mode clutch.

15. The transmission of claim 1 wherein said first sun gear is the input element,
said first ring gear and said second sun gear are operatively connected to said impeller,
said double type second carrier is operatively connected to said turbine and said power mode clutch, and
said double type first carrier and said second ring gear are operatively connected to said fuel ratio mode clutch.

16. The transmission of claim 1 wherein said first sun gear is the input element,
said first ring gear and said second sun gear are operatively connected to said impeller,
said second ring gear is operatively connected to said turbine and said power mode clutch, and
said double type first carrier and said single type second carrier are operatively connected to said fuel ratio mode clutch.

17. The transmission of claim 1 wherein said first sun gear is the input element,
said first ring gear and said second sun gear are operatively connected to said impeller,
said double type first carrier and said double type second carrier are operatively connected to said turbine and said power mode clutch, and
said second ring gear is operatively connected to said fuel ratio mode clutch.

18. The transmission of claim 1 wherein said first sun gear is the input element,
said first ring gear and said double type second carrier are operatively connected to said impeller,
said second sun gear is operatively connected to said turbine and said power mode clutch, and
said double type first carrier and said second ring gear are operatively connected to said fuel ratio mode clutch.

19. The transmission of claim 1 wherein said second sun gear is the input element,
said first ring gear and said second ring gear are operatively connected to said impeller,
said first sun gear is operatively connected to said turbine and said power mode clutch, and
said single type first carrier and said double type second carrier are operatively connected to said fuel ratio mode clutch.

20. The transmission of claim 1 wherein said double type first carrier is the input element,
said second sun gear is operatively connected to said impeller,
said first sun gear and said double type second carrier are operatively connected to said turbine and said power mode clutch, and
said first ring gear and said second ring gear are operatively connected to said fuel ratio mode clutch.

21. The transmission of claim 1 wherein said double type first carrier is the input element,
said first ring gear and said second sun gear are operatively connected to said impeller,
said double type second carrier is operatively connected to said turbine and said power mode clutch, and
said first sun gear and said second ring gear are operatively connected to said fuel ratio mode clutch.

22. The transmission of claim 1 wherein said double type second carrier is the input element,
said first sun gear and said second ring gear are operatively connected to said impeller,
said first ring gear is operatively connected to said turbine and said power mode clutch, and
said single type first carrier and said second sun gear are operatively connected to said fuel ratio mode clutch.

23. The transmission of claim 1 wherein said double type second carrier is the input element,
said first sun gear and said second ring gear are operatively connected to said impeller,
said double type first carrier and said second sun gear are operatively connected to said turbine and said power mode clutch, and
said first ring gear is operatively connected to said fuel ratio mode clutch.

24. The transmission of claim 1 wherein said double type second carrier is the input element,
said double type first carrier and said second ring gear are operatively connected to said impeller,
said first sun gear is operatively connected to said turbine and said power mode clutch, and
said first ring gear and said second sun gear are operatively connected to said fuel ratio mode clutch.

25. The transmission of claim 1 wherein said double type second carrier is the input element,
said first ring gear and said second ring gear are operatively connected to said impeller,
said first sun gear is operatively connected to said turbine and said power mode clutch, and
said single type first carrier and said second sun gear are operatively connected to said fuel ratio mode clutch.

26. The transmission of claim 1 wherein said first ring gear is the input element,
said second sun gear is operatively connected to said impeller,
said first sun gear and said double type second carrier are operatively connected to said turbine and said power mode clutch, and
said single type first carrier and said second ring gear are operatively connected to said fuel ratio mode clutch.

27. The transmission of claim 1 wherein said second ring gear is the input element,
said double type first carrier is operatively connected to said impeller,
said first sun gear and said second sun gear are operatively connected to said turbine and said power mode clutch, and
said first ring gear and said single type second carrier are operatively connected to said fuel ratio mode clutch.

28. The transmission of claim 1 wherein said second ring gear is the input element,
said first ring gear is operatively connected to said impeller,
said first sun gear and said second sun gear are operatively connected to said turbine and said power mode clutch, and
said single type first carrier and said single type second carrier are operatively connected to said fuel ratio mode clutch.

29. The transmission of claim 1 wherein said first ring gear is the input element,
said single type first carrier and said second sun gear are operatively connected to said impeller,
said double type second carrier is operatively connected to said turbine and said power mode clutch, and
said first sun gear and said second ring gear are operatively connected to said fuel ratio mode clutch.

30. The transmission of claim 1 wherein said first ring gear is the input element,
said single type first carrier and said second sun gear are operatively connected to said impeller,
said second ring gear is operatively connected to said turbine and said power mode clutch, and
said first sun gear and said single type second carrier are operatively connected to said fuel ratio mode clutch.

31. The transmission of claim 1 wherein said first ring gear is the input element,
said single type first carrier and said second sun gear are operatively connected to said impeller,
said first sun gear and said double type second carrier are operatively connected to said turbine and said power mode clutch, and
said second ring gear is operatively connected to said fuel ratio mode clutch.

32. The transmission of claim 1 wherein said second ring gear is the input element,
said first sun gear and said single type second carrier are operatively connected to said impeller,
said first ring gear and said second sun gear are operatively connected to said turbine and said power mode clutch, and
said single type first carrier is operatively connected to said fuel ratio mode clutch.

33. The transmission of claim 1 wherein said second ring gear is the input element,
said double type first carrier and said single type second carrier are operatively connected to said impeller,
said first sun gear is operatively connected to said turbine and said power mode clutch, and
said first ring gear and said second sun gear are operatively connected to said fuel ratio mode clutch.

34. The transmission of claim 1 wherein said first ring gear is the input element,
said single type first carrier and said double type second carrier are operatively connected to said impeller,
said first sun gear and said second sun gear are operatively connected to said turbine and said power mode clutch, and
said second ring gear is operatively connected to said fuel ratio mode clutch.

35. The transmission of claim 1 wherein said second ring gear is the input element,
said first ring gear and said single type second carrier are operatively connected to said impeller,
said first sun gear is operatively connected to said turbine and said power mode clutch, and
said single type first carrier and said second sun gear are operatively connected to said fuel ratio mode clutch.

36. The transmission of claim 1 wherein said first ring gear is the input element,
said single type first carrier and said second ring gear are operatively connected to said impeller,
said first sun gear and said second sun gear are operatively connected to said turbine and said power mode clutch, and
said single type second carrier is operatively connected to said fuel ratio mode clutch.

37. The transmission of claim 1 wherein said first sun gear and said second sun gear are the input elements,
said single type second carrier is operatively connected to said impeller,
said first ring gear is operatively connected to said turbine and said power mode clutch, and
said single type first carrier and said second ring gear are operatively connected to said fuel ratio mode clutch.

38. The transmission of claim 1 wherein said first sun gear and said second sun gear are the input elements,
said single type second carrier is operatively connected to said impeller,
said double type first carrier and said second ring gear are operatively connected to said turbine and said power mode clutch, and
said first ring gear is operatively connected to said fuel ratio mode clutch.

39. The transmission of claim 1 wherein said first sun gear and said second sun gear are the input elements,
said single type second carrier is operatively connected to said impeller,
said first ring gear and said second ring gear are operatively connected to said turbine and said power mode clutch, and
said single type first carrier is operatively connected to said fuel ratio mode clutch.

40. The transmission of claim 1 wherein said first sun gear and said second sun gear are the input elements,
said second ring gear is operatively connected to said impeller,
said first ring gear is operatively connected to said turbine and said power mode clutch, and
said single type first carrier and said double type second carrier are operatively connected to said fuel ratio mode clutch.

41. The transmission of claim 1 wherein said first sun gear and said second sun gear are the input elements,
said second ring gear is operatively connected to said impeller,
said double type first carrier and said double type second carrier are operatively connected to said turbine and said power mode clutch, and
said first ring gear is operatively connected to said fuel ratio mode clutch.

42. The transmission of claim 1 wherein said first sun gear and said second sun gear are the input elements,
said second ring gear is operatively connected to said impeller,
said first ring gear and said double type second carrier are operatively connected to said turbine and said power mode clutch, and
said single type first carrier is operatively connected to said fuel ratio mode clutch.

43. The transmission of claim 1 wherein said first sun gear and said second sun gear are the input elements,
said single type first carrier and said single type second carrier are operatively connected to said impeller,
said second ring gear is operatively connected to said turbine and said power mode clutch, and
said first ring gear is operatively connected to said fuel ratio mode clutch.

44. The transmission of claim 1 wherein said first sun gear and said second sun gear are the input elements,
said first ring gear and said single type second carrier are operatively connected to said impeller,
said second ring gear is operatively connected to said turbine and said power mode clutch, and
said double type first carrier is operatively connected to said fuel ratio mode clutch.

45. The transmission of claim 1 wherein said double type first carrier and said second sun gear are the input elements,
said single type second carrier is operatively connected to said impeller,
said first sun gear and said second ring gear are operatively connected to said turbine and said power mode clutch, and
said first ring gear is operatively connected to said fuel ratio mode clutch.

46. The transmission of claim 1 wherein said double type first carrier and said second sun gear are the input elements,
said second ring gear is operatively connected to said impeller,
said first sun gear and said double type second carrier are operatively connected to said turbine and said power mode clutch, and
said first ring gear is operatively connected to said fuel ratio mode clutch.

47. The transmission of claim 1 wherein said first sun gear and said double type second carrier are the input elements,
said second ring gear is operatively connected to said impeller,
said double type first carrier is operatively connected to said turbine and said power mode clutch, and
said first ring gear and said second sun gear are operatively connected to said fuel ratio mode clutch.

48. The transmission of claim 1 wherein said first sun gear and said double type second carrier are the input elements,
said second ring gear is operatively connected to said impeller,
said first ring gear is operatively connected to said turbine and said power mode clutch, and
said single type first carrier and said second sun gear are operatively connected to said fuel ratio mode clutch.

49. The transmission of claim 1 wherein said first sun gear and said double type second carrier are the input elements,
said second ring gear is operatively connected to said impeller,
said double type first carrier and said second sun gear are operatively connected to said turbine and said power mode clutch, and
said first ring gear is operatively connected to said fuel ratio mode clutch.

50. The transmission of claim 1 wherein said first sun gear and said double type second carrier are the input elements,
said second ring gear is operatively connected to said impeller,
said first ring gear and said second sun gear are operatively connected to said turbine and said power mode clutch, and
said single type first carrier is operatively connected to said fuel ratio mode clutch.

51. The transmission of claim 1 wherein said double type first carrier and said second sun gear are the input elements,
said first ring gear and said single type second carrier are operatively connected to said impeller,
said second ring gear is operatively connected to said turbine and said power mode clutch, and
said first sun gear is operatively connected to said fuel ratio mode clutch.

52. The transmission of claim 1 wherein said first sun gear and said double type second carrier are the input elements,
said first ring gear and said second ring gear are operatively connected to said impeller,
said double type first carrier is operatively connected to said turbine and said power mode clutch, and
said second sun gear is operatively connected to said fuel ratio mode clutch.

53. The transmission of claim 1 wherein said first ring gear and said second sun gear are the input elements,
said single type second carrier is operatively connected to said impeller,
said first sun gear is operatively connected to said turbine and said power mode clutch, and
said single type first carrier and said second ring gear are operatively connected to said fuel ratio mode clutch.

54. The transmission of claim 1 wherein said first sun gear and said second ring gear are the input elements,
said single type second carrier is operatively connected to said impeller,
said first ring gear is operatively connected to said turbine and said power mode clutch, and
said single type first carrier and said second sun gear are operatively connected to said fuel ratio mode clutch.

55. The transmission of claim 1 wherein said first sun gear and said second ring gear are the input elements,
said single type second carrier is operatively connected to said impeller,
said double type first carrier and said second sun gear are operatively connected to said turbine and said power mode clutch, and
said first ring gear is operatively connected to said fuel ratio mode clutch.

56. The transmission of claim 1 wherein said first sun gear and said second ring gear are the input elements,
said single type second carrier is operatively connected to said impeller,
said first ring gear and said second sun gear are operatively connected to said turbine and said power mode clutch, and
said single type first carrier is operatively connected to said fuel ratio mode clutch.

57. The transmission of claim 1 wherein said first ring gear and said second sun gear are the input elements,
said second ring gear is operatively connected to said impeller,
said first sun gear is operatively connected to said turbine and said power mode clutch, and
said single type first carrier and said double type second carrier are operatively connected to said fuel ratio mode clutch.

58. The transmission of claim 1 wherein said first ring gear and said second sun gear are the input elements,
said second ring gear is operatively connected to said impeller,
said first sun gear and said double type second carrier are operatively connected to said turbine and said power mode clutch, and
said single type first carrier is operatively connected to said fuel ratio mode clutch.

59. The transmission of claim 1 wherein said first sun gear and said second ring gear are the input elements,
said single type first carrier and said single type second carrier are operatively connected to said impeller,
said second sun gear is operatively connected to said turbine and said power mode clutch, and
said first ring gear is operatively connected to said fuel ratio mode clutch.

60. The transmission of claim 1 wherein said first sun gear and said second ring gear are the input elements,
said first ring gear and said single type second carrier are operatively connected to said impeller,
said second sun gear is operatively connected to said turbine and said power mode clutch, and
said double type first carrier is operatively connected to said fuel ratio mode clutch.

61. The transmission of claim 1 wherein said double type first carrier and said double type second carrier are the input elements,
said second ring gear is operatively connected to said impeller,
said first sun gear is operatively connected to said turbine and said power mode clutch, and
said first ring gear and said second sun gear are operatively connected to said fuel ratio mode clutch.

62. The transmission of claim 1 wherein said double type first carrier and said double type second carrier are the input elements,
said second ring gear is operatively connected to said impeller,
said first sun gear and said second sun gear are operatively connected to said turbine and said power mode clutch, and
said first ring gear is operatively connected to said fuel ratio mode clutch.

63. The transmission of claim 1 wherein said double type first carrier and said double type second carrier are the input elements,
said first ring gear and said second ring gear are operatively connected to said impeller,
said first sun gear is operatively connected to said turbine and said power mode clutch, and
said second sun gear is operatively connected to said fuel ratio mode clutch.

64. The transmission of claim 1 wherein said first ring gear and said double type second carrier are the input elements,
said single type first carrier is operatively connected to said impeller,
said first sun gear and said second sun gear are operatively connected to said turbine and said power mode clutch, and
said second ring gear is operatively connected to said fuel ratio mode clutch.

65. The transmission of claim 1 wherein said first ring gear and said double type second carrier are the input elements,
said second ring gear is operatively connected to said impeller,
said first sun gear is operatively connected to said turbine and said power mode clutch, and
said single type first carrier and said second sun gear are operatively connected to said fuel ratio mode clutch.

66. The transmission of claim 1 wherein said double type first carrier and said second ring gear are the input elements,
said first ring gear is operatively connected to said impeller,
said first sun gear and said second sun gear are operatively connected to said turbine and said power mode clutch, and
said single type second carrier is operatively connected to said fuel ratio mode clutch.

67. The transmission of claim 1 wherein said double type first carrier and said second ring gear are the input elements,
said first ring gear and said single type second carrier are operatively connected to said impeller,
said second sun gear is operatively connected to said turbine and said power mode clutch, and
said first sun gear is operatively connected to said fuel ratio mode clutch.

68. The transmission of claim 1 wherein said first ring gear and said second ring gear are the input elements,
said single type first carrier is operatively connected to said impeller,
said second sun gear is connected to said turbine and said power mode clutch, and
said first sun gear and said single type second carrier are operatively connected to said fuel ratio mode clutch.

69. The transmission of claim 1 wherein said first ring gear and said second ring gear are the input elements,
said single type first carrier is operatively connected to said impeller,
said first sun gear and said second sun gear are operatively connected to said turbine and said power mode clutch, and
said single type second carrier is operatively connected to said fuel ratio mode clutch.

70. The transmission of claim 1 wherein said first ring gear and said second ring gear are the input elements,
said single type first carrier and said single type second carrier are operatively connected to said impeller,
said first sun gear is operatively connected to said turbine and said power mode clutch, and
said second sun gear is operatively connected to said fuel ratio mode clutch.

71. The transmission of claim 1 wherein said first sun gear is the input element,
said second sun gear is operatively connected to said impeller,
said double type first carrier and said second ring gear are operatively connected to said turbine and said power mode clutch, and
said first ring gear and said single type second carrier are operatively connected to said fuel ratio mode clutch.

72. The transmission of claim 1 wherein said first sun gear is the input element,
said double type second carrier is operatively connected to said impeller,
said double type first carrier and said second sun gear are operatively connected to said turbine and said power mode clutch, and
said first ring gear and said second ring gear are operatively connected to said fuel ratio mode clutch.

73. The transmission of claim 1 wherein said first sun gear is the input element,
said second ring gear is operatively connected to said impeller,
said double type first carrier and said second sun gear is operatively connected to said turbine and said power mode clutch, and
said first ring gear and said single type second carrier are operatively connected to said fuel ratio mode clutch.

74. The transmission of claim 1 wherein said second sun gear is the input element,
said first sun gear and said second ring gear are operatively connected to said impeller,
said first ring gear and said double type second carrier are operatively connected to said turbine and said power mode clutch, and
said single type first carrier is operatively connected to said fuel ratio mode clutch.

75. The transmission of claim 1 wherein said second sun gear is the input element,
said double type first carrier and said second ring gear are operatively connected to said impeller,
said first sun gear and said double type second carrier are operatively connected to said turbine and said power mode clutch, and
said first ring gear is operatively connected to said fuel ratio mode clutch.

76. The transmission of claim 1 wherein said second sun gear is the input element,
said first ring gear and said second ring gear are operatively connected to said impeller,
said first sun gear and said double type second carrier are operatively connected to said turbine and said power mode clutch, and
said single type first carrier is operatively connected to said fuel ratio mode clutch.

77. The transmission of claim 1 wherein said first and said second planet gears are integrated,
said first sun gear is the input element,
said second sun gear is operatively connected to said impeller,
said first ring gear is operatively connected to said turbine and said power mode clutch, and
said integrated type carrier is operatively connected to said fuel ratio mode clutch.

78. The transmission of claim 1 wherein said first and said second planet gears are integrated,
said first sun gear is the input element,
said second sun gear is operatively connected to said impeller,
said second ring gear is operatively connected to said turbine and said power mode clutch, and
said integrated type carrier is operatively connected to said fuel ratio mode clutch.

79. The transmission of claim 1 wherein said first and said second planet gears are integrated,
said first sun gear is the input element,
said integrated type carrier is operatively connected to said impeller,
said second ring gear is operatively connected to said turbine and said power mode clutch, and
said first ring gear is operatively connected to said fuel ratio mode clutch.

80. The transmission of claim 1 wherein said first and said second planet gears are integrated,
said second sun gear is the input element,
said integrated type carrier is operatively connected to said impeller,
said second ring gear is operatively connected to said turbine and said power mode clutch, and
said first ring gear is operatively connected to said fuel ratio mode clutch.

81. The transmission of claim 1 wherein said first and said second planet gears are integrated,
said first ring gear is the input element,
said integrated type carrier is operatively connected to said impeller,
said first sun gear is operatively connected to said turbine and said power mode clutch, and
said second sun gear is operatively connected to said fuel ratio mode clutch.

82. The transmission of claim 1 wherein said first and said second planet gears are integrated,
said second ring gear is the input element,
said integrated type carrier is operatively connected to said impeller,
said first sun gear is operatively connected to said turbine and said power mode clutch, and
said second sun gear is operatively connected to said fuel ratio mode clutch.

83. The transmission of claim 1 wherein said first and said second planet gears are integrated,
said second ring gear is the input element,
said first ring gear is operatively connected to said impeller,
said first sun gear is operatively connected to said turbine and said power mode clutch, and
said integrated type carrier is operatively connected to said fuel ratio mode clutch.

84. The transmission of claim 1 wherein said first and said second planet gears are integrated,
said second ring gear is the input element,
said first ring gear is operatively connected to said impeller,
said second sun gear is operatively connected to said turbine and said power mode clutch, and
said integrated type carrier is operatively connected to said fuel ratio mode clutch.

85. The transmission of claim 1 wherein said first sun gear is the input element,
said second sun gear is operatively connected to said impeller,
said double type first carrier and said double type second carrier are operatively connected to said turbine and said power mode clutch, and
said integrated ring gear is operatively connected to said fuel ratio mode clutch.

86. The transmission of claim 1 wherein said first sun gear is the input element,
said second sun gear is operatively connected to said impeller,
said integrated ring gear is operatively connected to said turbine and said power mode clutch, and
said single type first carrier and said single type second carrier are operatively connected to said fuel ratio mode clutch.

87. The transmission of claim 1 wherein said first sun gear is the input element,
said single type first carrier and said double type second carrier are operatively connected to said impeller,
said second sun gear is operatively connected to said turbine and said power mode clutch, and
said integrated type ring gear is operatively connected to said fuel ratio mode clutch.

88. The transmission of claim 1 wherein said second sun gear is the input element,
said integrated type ring gear is operatively connected to said impeller,
said first sun gear is operatively connected to said turbine and said power mode clutch, and
said single type first carrier and said double type second carrier are operatively connected to said fuel ratio mode clutch.

89. The transmission of claim 1 wherein said second ring gear is the input element,
said first ring gear is operatively connected to said impeller,
said integrated sun gear is operatively connected to said turbine and said power mode clutch, and
said single type first carrier and said single type second carrier are operatively connected to said fuel ratio mode clutch.

90. The transmission of claim 1 wherein said first ring gear is the input element,
said single type first carrier and said double type second carrier are operatively connected to said impeller,
said integrated sun gear is operatively connected to said turbine and said power mode clutch, and
said second ring gear is operatively connected to said fuel ratio mode clutch.

91. The transmission of claim 1 wherein said integrated type sun gear is the input element,
said second ring gear is operatively connected to said impeller,
said first ring gear is operatively connected to said turbine and said power mode clutch, and
said single type first carrier and said double type second carrier are operatively connected to said fuel ratio mode clutch.

92. The transmission of claim 1 wherein said integrated type sun gear is the input element,
said second ring gear is operatively connected to said impeller,
said double type first carrier and said double type second carrier are operatively connected to said turbine and said power mode clutch, and
said first ring gear is operatively connected to said fuel ratio mode clutch.

93. The transmission of claim 1 wherein said integrated type sun gear is the input element,
said single type first carrier and said single type second carrier are operatively connected to said impeller,
said second ring gear is operatively connected to said turbine and said power mode clutch, and
said first ring gear is operatively connected to said fuel ratio mode clutch.

94. The transmission of claim 1 wherein said double type first carrier and said double type second carrier are the input elements,
said first ring gear is operatively connected to said impeller,
said integrated sun gear is operatively connected to said turbine and said power mode clutch, and
said second ring gear is operatively connected to said fuel ratio mode clutch.

95. The transmission of claim 1 wherein said double type first carrier and said double type second carrier are the input elements,
said integrated ring gear is operatively connected to said impeller,
said first sun gear is operatively connected to said turbine and said power mode clutch, and
said second sun gear is operatively connected to said fuel ratio mode clutch.

96. The transmission of claim 1 wherein said integrated type ring gear is the input element,
said single type first carrier and said single type second carrier are operatively connected to said impeller,
said first sun gear is operatively connected to said turbine and said power mode clutch, and
said second sun gear is operatively connected to said fuel ratio mode clutch.

97. The transmission according to any one of claims 1 to 96, wherein the lateral arrangement of said turbine and said impeller is reversed.

98. The transmission according to any one of claims 1 to 96, wherein the lateral arrangement of said fuel ratio mode clutch and power mode clutch is reversed.

99. The transmission according to any one of claims 1 to 96, wherein the connection construction between said input element, turbine, impeller, fuel ratio mode clutch and power mode clutch is modified according to the symmetry of input.

100. The transmission according to any one of claims 1 to 96 further comprising a reverse rotation brake mounted on a power line connected to said impeller.

101. The transmission according to any one of claims 1 to 96 further comprising a single pinion type planet gear set which includes a reverse rotation sun gear, a reverse rotation carrier supporting a single pinion gear, and a reverse rotation ring gear, wherein said reverse rotation sun gear is operatively connected to said turbine, said reverse rotation ring gear is integrally connected to said output shaft, and said reverse rotation brake is mounted on said single type reverse rotation carrier.

102. The transmission according to any one of claims 1 to 96 further comprising a single pinion type planet gear set which includes a reverse rotation sun gear, a reverse rotation carrier supporting a single pinion gear, and a reverse rotation ring gear, wherein said reverse rotation ring gear is operatively connected to said turbine, said reverse rotation sun gear is integrally connected to said output shaft, and said reverse rotation brake is mounted on said single type reverse rotation carrier.

103. The transmission according to any one of claims 1 to 96 further comprising a double pinion type planet gear set which includes a reverse rotation sun gear, a reverse rotation carrier supporting double pinion gears, and a reverse rotation ring gear, wherein said reverse rotation sun gear is operatively connected to said turbine, said double type reverse rotation carrier is integrally connected to said output shaft, and said reverse rotation brake is mounted on said reverse rotation ring gear.

104. The transmission according to any one of claims 1 to 96 further comprising a double pinion type planet gear set which includes a reverse rotation sun gear, a reverse rotation carrier supporting double pinion gears, and a reverse rotation ring gear, wherein said double type reverse rotation carrier is operatively connected to said turbine, said reverse rotation sun gear is integrally connected to said output shaft, and said reverse rotation brake is mounted on said reverse rotation ring gear.

105. A continuously variable transmission including a speed change controlling system which has an impeller, a turbine, and a stator and controls a rotational ratio in response to a load status of an output shaft, and a speed change system which receives a power generated by an engine, changes the rotational speed and transmits it to said output shaft, comprising:
an input shaft and said output shaft;
two planet gear sets which includes a first and a second sun gear, a first and a second ring gear, a first and a second carrier which supports an integrated or a separated type planet gear meshed with said sun gear and said ring gear, respectively;
a clutch for selectively connecting the power to said output shaft; and
a low speed brake to provide a low speed rotation of said output shaft,
whereby each component element selected from said two planet gear sets is operatively connected to said impeller, turbine and said clutch, respectively, and the power inputted through an input element selected from said two planet gear sets is changed into the required speed and transmitted to said output shaft.

106. A continuously variable transmission including a speed change controlling system which has an impeller, a turbine, and a stator and controls a rotational ratio in response to a load status of an output shaft, and a speed change system which receives a power generated by an engine, changes the rotational speed and transmits it to said output shaft, comprising:
an input shaft and said output shaft;
two planet gear sets which includes a first and a second sun gear, a first and a second ring gear, a first and a second carrier which supports an integrated or a separated type planet gear meshed with said sun gear and said ring gear, respectively; and
a low speed brake to provide a low speed rotation of said output shaft,
whereby each component element selected from said two planet gear sets is operatively connected to said impeller and said turbine, respectively, and the power inputted through an input element selected from said two planet gear sets is changed into the required speed and transmitted to said output shaft.

107. A continuously variable transmission including a speed change controlling system which has an impeller, a turbine, and a stator and controls a rotational ratio in response to a load status of an output shaft, and a speed change system which receives a power generated by an engine, changes the rotational speed and transmits it to said output shaft, comprising:
an input shaft and said output shaft;
two planet gear sets which includes a first and a second sun gear, a first and a second ring gear, a first and a second carrier which supports an integrated or a separated type planet gear meshed with said sun gear and said ring gear, respectively; and
a fuel ratio mode clutch and a power mode clutch for selectively connecting the power to said output shaft; and
whereby each component element selected from said two planet gear sets is operatively connected to said impeller, turbine, power mode clutch and fuel mode clutch, respectively, and the power inputted through an input element selected from said two planet gear sets is changed into the required speed and transmitted to said output shaft.

108. A continuously variable transmission including a speed change controlling system which has an impeller, a turbine, and a stator and controls a rotational ratio in response to a load status of an output shaft, and a speed change system which receives a power generated by an engine, changes the rotational speed and transmits it to said output shaft, comprising:
an input shaft and said output shaft;
two planet gear sets which includes a first and a second sun gear, a first and a second ring gear, a first and a second carrier which supports an integrated or a separated type planet gear meshed with said sun gear and said ring gear, respectively; and
a clutch for selectively connecting the power to said output shaft, whereby each component element selected from said two planet gear sets is operatively connected to said impeller, turbine and said clutch, respectively, and the power inputted through an input element selected from said two planet gear sets is changed into the required speed and transmitted to said output shaft.

109. A continuously variable transmission including a speed change controlling system which has an impeller, a turbine, and a stator and controls a rotational ratio in response to a load status of an output shaft, and a speed change system which receives a power generated by an engine, changes the rotational speed and transmits it to said output shaft, comprising:
an input shaft and said output shaft; and
two planet gear sets which includes a first and a second sun gear, a first and a second ring gear, a first and a second carrier which supports an integrated or a separated type planet gear meshed with said sun gear and said ring gear, respectively,
whereby each component element selected from said two planet gear sets is operatively connected to said impeller and turbine, respectively, and the power inputted through an input element selected from said two planet gear sets is changed into the required speed and transmitted to said output shaft.

110. The transmission according to claim 105 and 108, wherein the connection construction between said input element, turbine, impeller and said clutch is modified according to the symmetry of input.

111. The transmission according to claim 106 or 109, wherein the connection construction between said input element, turbine and impeller is modified according to the symmetry of input.

112. The transmission according to claim 107, wherein the lateral arrangement of said fuel ratio mode clutch and power mode clutch is reversed.

113. The transmission according to claim 107 wherein the connection construction between said input element, turbine, impeller, fuel ratio mode clutch and power mode clutch is modified according to the symmetry of input.

114. The transmission according to any of claims 105 to 109, wherein the lateral arrangement of said turbine and said impeller is reversed.

115. The transmission according to any one of claims 105 to 114 further comprising a reverse rotation brake mounted on a power line connected to said impeller.

116. The transmission according to any one of claims 105 to 115 further comprising a single pinion type planet gear set which includes a reverse rotation sun gear, a reverse rotation carrier supporting a single pinion gear, and a reverse rotation ring gear, wherein said reverse rotation sun gear is operatively connected to said turbine, said reverse rotation ring gear is integrally connected to said output shaft, and said reverse rotation brake is mounted on said single type reverse rotation carrier.

117. The transmission according to any one of claims 105 to 116 further comprising a single pinion type planet gear set which includes a reverse rotation sun gear, a reverse rotation carrier supporting a single pinion gear, and a reverse rotation ring gear, wherein said reverse rotation ring gear is operatively connected to said turbine, said reverse rotation sun gear is integrally connected to said output shaft, and said reverse rotation brake is mounted on said single type reverse rotation carrier.

118. The transmission according to any one of claims 105 to 117 further comprising a double pinion type planet gear set which includes a reverse rotation sun gear, a reverse rotation carrier supporting double pinion gears, and a reverse rotation ring gear, wherein said reverse rotation sun gear is operatively connected to said turbine, said double type reverse rotation carrier is integrally connected to said output shaft, and said reverse rotation brake is mounted on said reverse rotation ring gear.

119. The transmission according to any one of claims 105 to 118 further comprising a double pinion type planet gear set which includes a reverse rotation sun gear, a reverse rotation carrier supporting double pinion gears, and a reverse rotation ring gear, wherein said double type reverse rotation carrier is operatively connected to said turbine, said reverse rotation sun gear is integrally connected to said output shaft, and said reverse rotation brake is mounted on said reverse rotation ring gear.

120. The transmission according to any one of claims 1 to 96 further comprising a clutch mounted between said speed change system and said connecting shaft connected to said impeller.

121. The transmission according to any one of claims 1 to 96 further comprising a clutch mounted between said speed change system and said control shaft connected to said turbine.
